# EUROPÄISCHE PATENTSCHRIFT

(11) **EP 3 400 271 B1**
(45) Veröffentlichungstag und Bekanntmachung des Hinweises auf die Patenterteilung: **22.07.2020**
(21) Anmeldenummer: 16809289.8
(22) Anmeldetag: 12.12.2016
(51) Int. Cl.: C09K 19/30, C09K 19/34, C09K 19/32

(54) **FLÜSSIGKRISTALLINE MISCHUNGEN**
LIQUID-CRYSTALLINE MIXTURES
MÉLANGES CRISTALLINS LIQUIDES

(30) Priorität: 06.01.2016 EP 16150279; 22.04.2016 EP 16166708
(43) Veröffentlichungstag der Anmeldung: 14.11.2018
(73) Patentinhaber: Merck Patent GmbH, 64293 Darmstadt (DE)
(72) Erfinder: JUNGE, Michael, 64319 Pfungstadt (DE); PATWAL, Ursula, 64354 Reinheim (DE); KIRSCH, Peer, 64342 Seeheim-Jugenheim (DE)
(86) Internationale Anmeldenummer: PCT/EP2016/002091
(87) Internationale Veröffentlichungsnummer: WO 2017/118464

(56) Entgegenhaltungen:
- WO-A1-2011/154077
- WO-A1-2015/055274
- WO-A1-2015/090506
- WO-A1-2015/154848

## Beschreibung

Die vorliegende Erfindung betrifft eine Mischung enthaltend eine oder mehrere Verbindungen gewählt aus Verbindungen gemäß den unten gezeigten Formeln (1) oder (2), und die Verwendung dieser Mischung in einer Vorrichtung zur Regulierung des Lichtdurchtritts durch ein Flächenelement.

Unter dem Begriff Licht wird im Rahmen der vorliegenden Erfindung insbesondere elektromagnetische Strahlung im UV-A-, VIS-, sowie NIR-Bereich verstanden, d.h. gemäß üblicher Definitionen Licht einer Wellenlänge von 320 nm bis 2000 nm.

Bevorzugt wird unter dem Licht, dessen Durchtritt von der erfindungsgemäßen Vorrichtung reguliert wird, Sonnenlicht verstanden. Sonnenlicht geht bevorzugt direkt von der Sonne aus. Es kann jedoch auch über Spiegelung, Brechung, oder über Absorption und anschließende Emission durch beliebige Materialien indirekt von der Sonne ausgehen.

Die erfindungsgemäßen Vorrichtungen werden entsprechend bevorzugt dafür verwendet, den Durchtritt von Sonnenlicht durch ein Flächenelement zu regulieren, insbesondere den Durchtritt von Sonnenlicht durch ein Flächenelement in ein weitgehend abgeschlossenes Raumelement hinein zu regulieren. Derartige Vorrichtungen sind sind auch unter dem Überbegriff schaltbare Fenster (switchable windows, smart windows) bekannt. Diese sind im Überblick beispielsweise in B. Jelle et al., Solar Energy Materials & Solar Cells 2012, S. 1 - 28, beschrieben. Von dem Begriff schaltbares Fenster sind dabei auch schaltbare lichtdurchlässige Dächer, zum Beispiel Dachfenster oder Autodächer, umfasst.

Eine Variante dieser schaltbaren Fenster verwendet flüssigkristalline Materialien, welche Farbstoffe enthalten. Beispiele für derartige Vorrichtungen sind unter anderem in WO 2009/141295 beschrieben.

WO 2015/090506 A1 beschreibt flüssigkristalline Medien mit negativer dielektrischer Anisotropie zur Verwendung in Vorrichtungen zur Regulierung des Lichtdurchtritts. WO 2011/154077 A1 beschreibt ein flüssigkristallbasiertes Schaltelement, welches thermisch schaltbar ist.

Es besteht weiterhin Bedarf an neuen Materialien, insbesondere für die oben genannte Verwendung. Erwünschte technische Eigenschaften sind dabei eine breite flüssigkristalline Phase des Materials, insbesondere ein hoher Klärpunkt von 100°C und höher, und ein kleiner Wert für die Brechungsindex-Anisotropie Δn, insbesondere ein Wert von Δn von weniger als 0.065. Niedrige Werte für Δn sind insbesondere bei Anwendungen erwünscht, bei denen die Dicke der Schicht enthaltend das flüssigkristalline Material hoch ist.

Weitere erwünschte technische Eigenschaften sind gute Löslichkeit von Farbstoffen im flüssigkristallinen Material, gute Lösungsstabilität von Farbstoffen im flüssigkristallinen Material, insbesondere zeitlich lang andauernde gute und vollständige Löslichkeit im flüssigkristallinen Material, eine hohe Lichtstabilität des flüssigkristallinen Materials, insbesondere des flüssigkristallinen Materials enthaltend Farbstoffe, ein hoher Ordnungsgrad für dichroitische Farbstoffe, und eine geringe Dispersion der Brechungsindices und des Werts für Δn.

Überraschend wurde gefunden, dass eine Mischung, wie unten beschrieben, wenigstens eine, bevorzugt mehrere der oben genannten wünschenswerten Eigenschaften aufweist.

Gegenstand der vorliegenden Erfindung ist somit eine Mischung gemäß Anspruch 1, enthaltend eine oder mehrere Verbindungen, die einer Formel (1) oder einer Formel (2) entsprechen 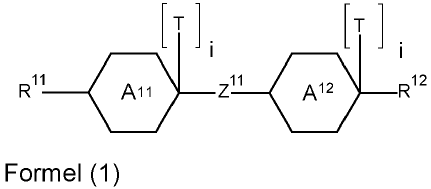 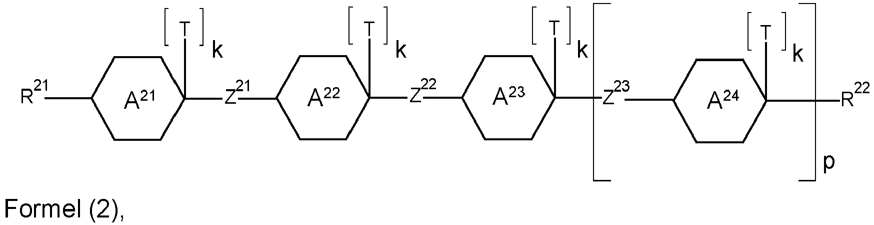 wobei für die auftretenden Variablen gilt:
A¹¹, A¹², A²¹, A²², A²³, A²⁴ sind gewählt aus 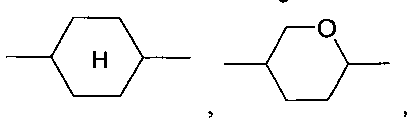 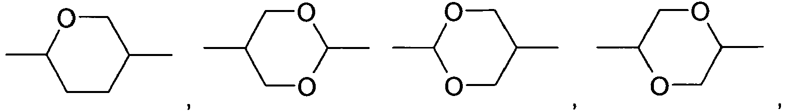 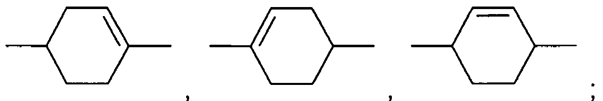
- Z¹¹, Z²¹, Z²², Z²³: sind gewählt aus Einfachbindung, -(C=O)-O-, -O-(C=O)-, -CF₂-O-, -O-CF₂-, -O-CH₂-, -CH₂-O-, und -CH₂-CH₂-;
- R¹¹, R¹², R²¹, R²²: sind bei jedem Auftreten gleich oder verschieden gewählt aus H, F, Cl, CN, NCS, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, und Alkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können;
- T: ist gewählt aus -CN, F, -N₃, -NCS, NO₂, -C≡C-R³, Alkylgruppen mit 1 bis 10 C-Atomen, und Alkoxygruppen mit 1 bis 10 C-Atomen, wobei in den Alkyl- und Alkoxygruppen eine oder mehrere H-Atome durch F, Cl oder CN ersetzt sein können;
- R³: ist gewählt aus H, CN, Alkylgruppen mit 1 bis 10 C-Atomen, wobei in den Alkylgruppen eine oder mehrere C-Atome durch F, Cl oder CN ersetzt sein können, und -C≡C-R⁴;
- R⁴: ist gewählt aus H, CN, und Alkylgruppen mit 1 bis 10 C-Atomen, wobei in den Alkylgruppen eine oder mehrere C-Atome durch F, Cl oder CN ersetzt sein können;
- i: ist bei jedem Auftreten gleich oder verschieden 0 oder 1, wobei die Summe der Indices i in einer Formel mindestens gleich 1 ist;
- k: ist bei jedem Auftreten gleich oder verschieden 0 oder 1, wobei die Summe der Indices k in einer Formel mindestens gleich 1 ist;
- p: ist gleich 0 oder 1;
und eine oder mehrere Verbindungen gemäß Formel (3) 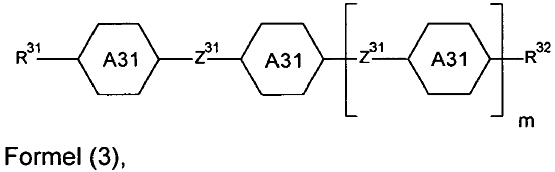 wobei für die auftretenden Variablen gilt:
- A31: ist bei jedem Auftreten gleich oder verschieden gewählt aus 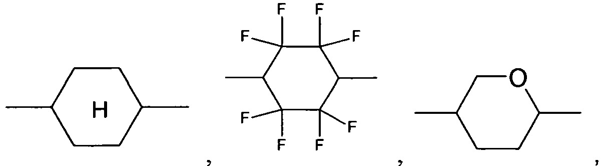 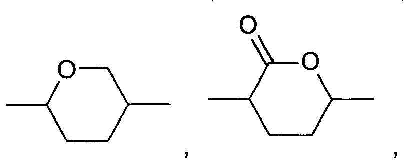 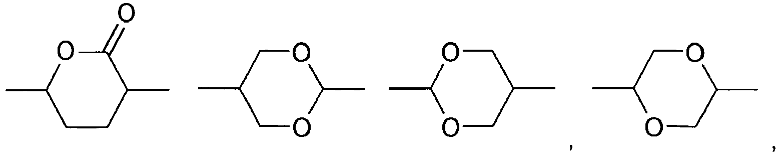 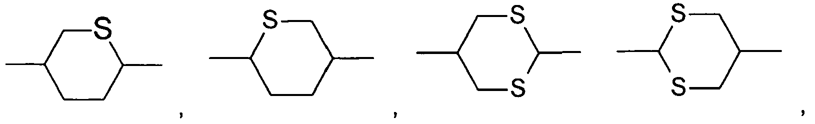 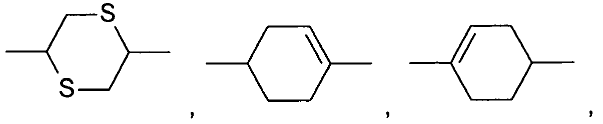 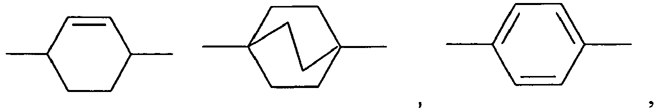 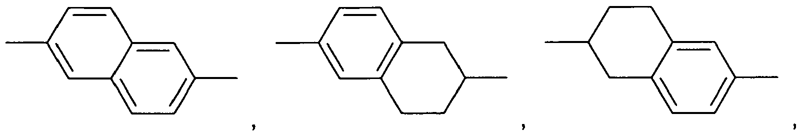 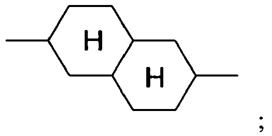
- R³¹: und R³² sind bei jedem Auftreten gleich oder verschieden gewählt aus H, F, Cl, CN, NCS, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, und Alkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können;
- Z³¹: ist bei jedem Auftreten gleich oder verschieden gewählt aus einer Einfachbindung, -(C=O)-O-, -O-(C=O)-, -CF₂-O-, -O-CF₂-, -O-CH₂-, -CH₂-O-, und -CH₂-CH₂-;
- m: ist gleich 0, 1, 2 oder 3;
wobei die Summe der Anteile der Verbindungen gemäß Formel (1), der Verbindungen gemäß Formel (2) und der Verbindungen gemäß Formel (3) in der Mischung mindestens 58% beträgt,
und wobei eine oder beide der folgenden Bedingungen a) und b) erfüllt sind:
a) die Mischung enthält eine oder mehrere Verbindungen V, die vier oder mehr Ringe enthalten,
b) die Mischung enthält einen Anteil von mindestens 25 % an Verbindungen gemäß Formel (2).

Bei der Angabe von Anteilen von Verbindungen in Mischungen in % wird in der vorliegenden Erfindung unter Prozent Gewichtsprozent verstanden.

Ringe 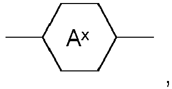 beispielsweise 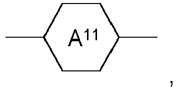 werden in der vorliegenden Erfindung zur Verbesserung der Lesbarkeit im Fließtext als "A^{x}", beispielsweise "A¹¹", abgekürzt.

Unter der Bezeichnung 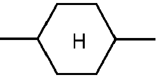 wird in der vorliegenden Erfindung 1,4-Cyclohexylen verstanden.

In der vorliegenden Erfindung werden unter Alkylgruppen, Alkoxygruppen, Thioalkoxygruppen, Alkenylgruppen, und Alkenyloxy-gruppen, bevorzugt die folgenden Gruppen verstanden: Methyl, Ethyl, n-Propyl, i-Propyl, Cyclopropyl, n-Butyl, i-Butyl, s-Butyl, t-Butyl, Cyclobutyl, 2-Methylbutyl, n-Pentyl, s-Pentyl, Cyclopentyl, neo-Pentyl, n-Hexyl, Cyclohexyl, neo-Hexyl, n-Heptyl, Cycloheptyl, n-Octyl, Cyclooctyl, 2-Ethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Methoxy, Trifluormethoxy, Ethoxy, n-Propoxy, i-Propoxy, n-Butoxy, i-Butoxy, s-Butoxy, t-Butoxy, n-Pentoxy, s-Pentoxy, 2-Methylbutoxy, n-Hexoxy, Cyclohexyloxy, n-Heptoxy, Cycloheptyloxy, n-Octyloxy, Cyclooctyloxy, 2-Ethylhexyloxy, Pentafluorethoxy, 2,2,2-Trifluorethoxy, Methylthio, Ethylthio, n-Propylthio, i-Propylthio, n-Butylthio, i-Butylthio, s-Butylthio, t-Butylthio, n-Pentylthio, s-Pentylthio, n-Hexylthio, Cyclohexylthio, n-Heptylthio, Cycloheptylthio, n-Octylthio, Cyclooctylthio, 2-Ethylhexylthio, Trifluormethylthio, Pentafluorethylthio, 2,2,2-Trifluorethylthio.

Die Mischung ist bevorzugt ein flüssigkristallines Material. Darunter wird vorliegend verstanden, dass sie in mindestens einem Temperaturbereich flüssigkristalline Eigenschaften, insbesondere nematisch flüssigkristalline Eigenschaften, aufweist.

Die erfindungsgemäße Mischung zeichnet sich durch eine breite nematisch flüssigkristalline Phase aus. Bevorzugt hat sie eine nematisch flüssigkristalline Phase von -40°C 105°C, besonders bevorzugt bis 110°C. Erfindungsgemäß hat die Mischung einen Klärpunkt von mindestens 105°C, und bevorzugt einen Klärpunkt von mindestens 110°C.

Weiterhin weisen die erfindungsgemäßen Mischungen einen niedrigen Wert für die Anisotropie des Brechungsindex Δn auf. Erfindungsgemäß liegt dieser unter 0,065, bevorzugt unter 0,06, besonders bevorzugt unter 0,055, und am stärksten bevorzugt unter 0,05.

Erfindungsgemäß hat die Mischung einen Klärpunkt von mindestens 105°C und einen Wert für Δn von unter 0,065. Bevorzugt hat sie einen Klärpunkt von mindestens 105°C und einen Wert von Δn von unter 0,06. Besonders bevorzugt hat sie einen Klärpunkt von mindestens 110°C und einen Wert von Δn von unter 0,055.

Weiterhin weisen die Mischungen eine hohe Lagerstabilität bei niedrigen Temperaturen auf. Unter Lagerstabilität wird dabei insbesondere die Eigenschaft verstanden, sich nicht zu zersetzen und nicht auszukristallisieren. Bevorzugt sind für die erfindungsgemäßen Mischungen Lagerstabilitäten von mehreren Wochen, bevorzugt mehreren Monaten, bei Temperaturen von weniger als -30°C, bevorzugt bei Temperaturen von weniger als -40°C.

Bevorzugt enthält die Mischung sowohl eine oder mehrere Verbindungen der Formel (1) als auch eine oder mehrere Verbindungen der Formel (2). Der Anteil der Verbindungen der Formel (1) und (2) zusammen in der Mischung beträgt bevorzugt 45% bis 70%, besonders bevorzugt 55% bis 70%, ganz besonders bevorzugt 60% bis 70%.

Es ist weiterhin bevorzugt, dass Verbindungen der Formel (1) in der Mischung in einem Anteil von mindestens 25%, besonders bevorzugt mindestens 30% vorhanden sind.

Es ist weiterhin bevorzugt, dass Verbindungen der Formel (2) in der Mischung in einem Anteil von mindestens 25%, besonders bevorzugt mindestens 30% vorhanden sind.

Für die Verbindungen der Formel (1) und (2) gelten die folgenden Bevorzugungen:
A¹¹, A¹², A²¹, A²², A²³, A²⁴ sind bevorzugt gewählt aus 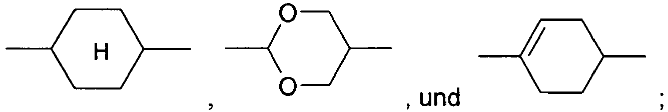 und besonders 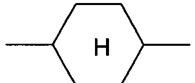 bevorzugt gleich.

Z¹¹, Z²¹, Z²², Z²³ sind bevorzugt gewählt aus Einfachbindung, -O-CH₂-, und -CH₂-CH₂-; besonders bevorzugt sind sie Einfachbindung.

Weiterhin bevorzugt ist p gleich 0.

Verbindungen der Formel (1) entsprechen bevorzugt der Formel (1-1) 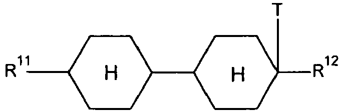 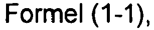 wobei die auftretenden Gruppen definiert sind wie für Formel (1).

Verbindungen der Formel (2) entsprechen bevorzugt der Formel (2-1), der Formel (2-2), der Formel (2-3) oder der Formel (2-4) 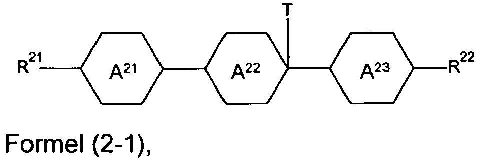 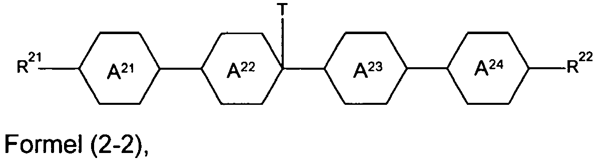 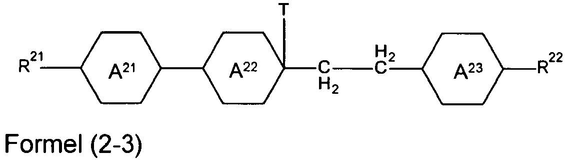 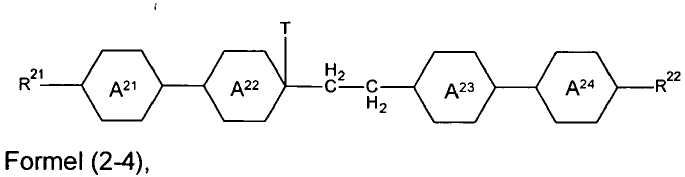 wobei die auftretenden Gruppen definiert sind wie für Formel (2).

Bevorzugt sind in Formel (2-1) und (2-2) und (2-4) A²¹, A²² und A²³, und gegebenfalls A²⁴ gleich

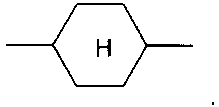

Bevorzugt sind in Formel (2-3) A²¹ und A²² gleich 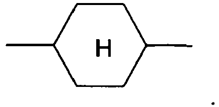 Bevorzugt ist in Formel (2-3) A²³, gleich 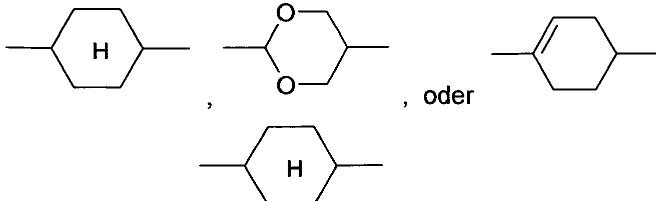 bevorzugt gleich. , besonders

Eine besonders bevorzugte Ausführungsform der Formel (2) entspricht der Formel (2-1-1) 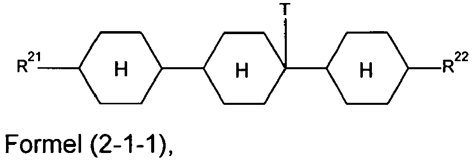 wobei die auftretenden Gruppen definiert sind wie für Formel (2).

Die Bedingung für die erfindungsgemäße Mischung, dass sie einen Anteil von mindestens 25 % an Verbindungen gemäß Formel (2) aufweist, gilt bevorzugt derart, dass sie einen Anteil von mindestens 25% an Verbindungen gemäß Formel (2-1-1) aufweist.

Bevorzugt ist T gewählt aus CN, F, CF₃ und OCF₃, besonders bevorzugt ist T gleich CN.

Weiterhin sind R¹¹, R¹², R²¹ und R²² bevorzugt bei jedem Auftreten gleich oder verschieden gewählt aus Alkyl- und Alkoxygruppen mit 1 bis 10 C-Atomen und Alkenylgruppen mit 2 bis 10 C-Atomen, besonders bevorzugt aus Alkylgruppen mit 1 bis 10 C-Atomen.

Besonders bevorzugte Verbindungen der Formeln (1) und (2) sind im Folgenden aufgeführt:

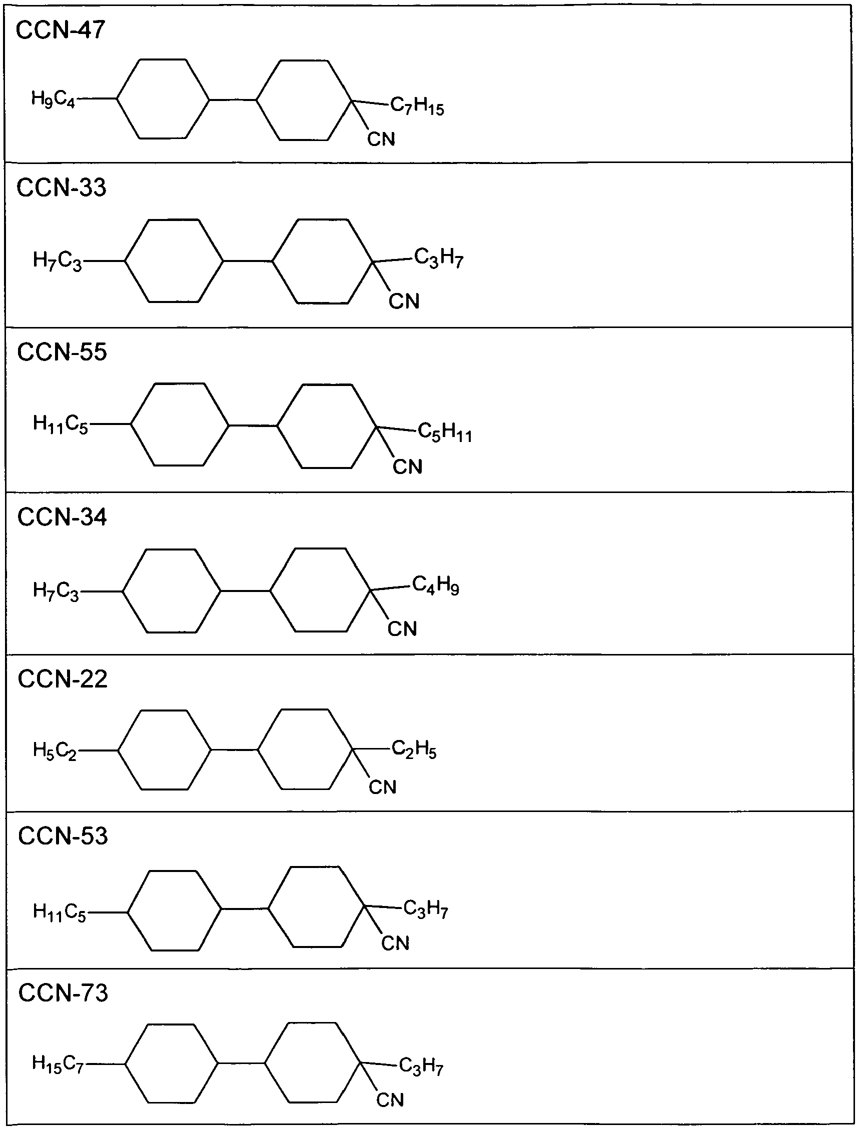

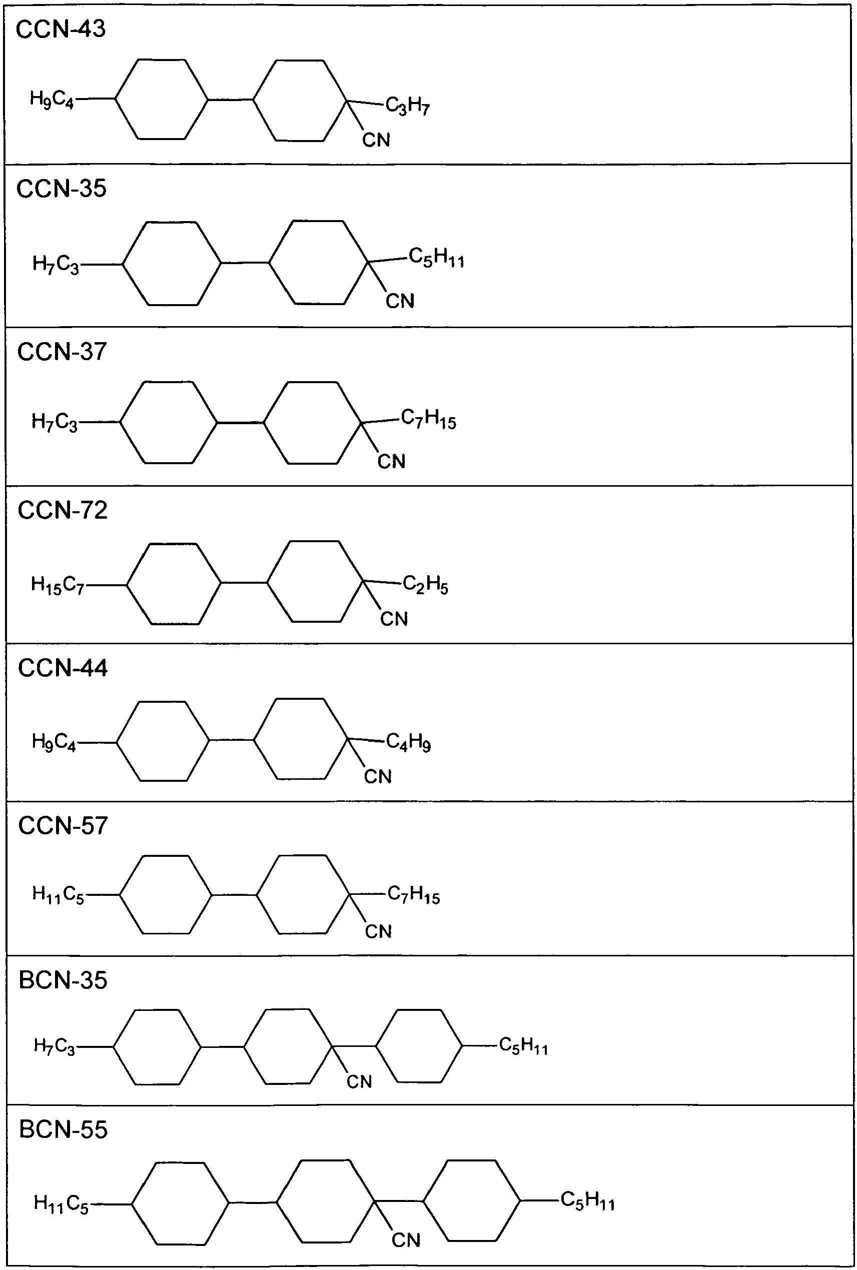

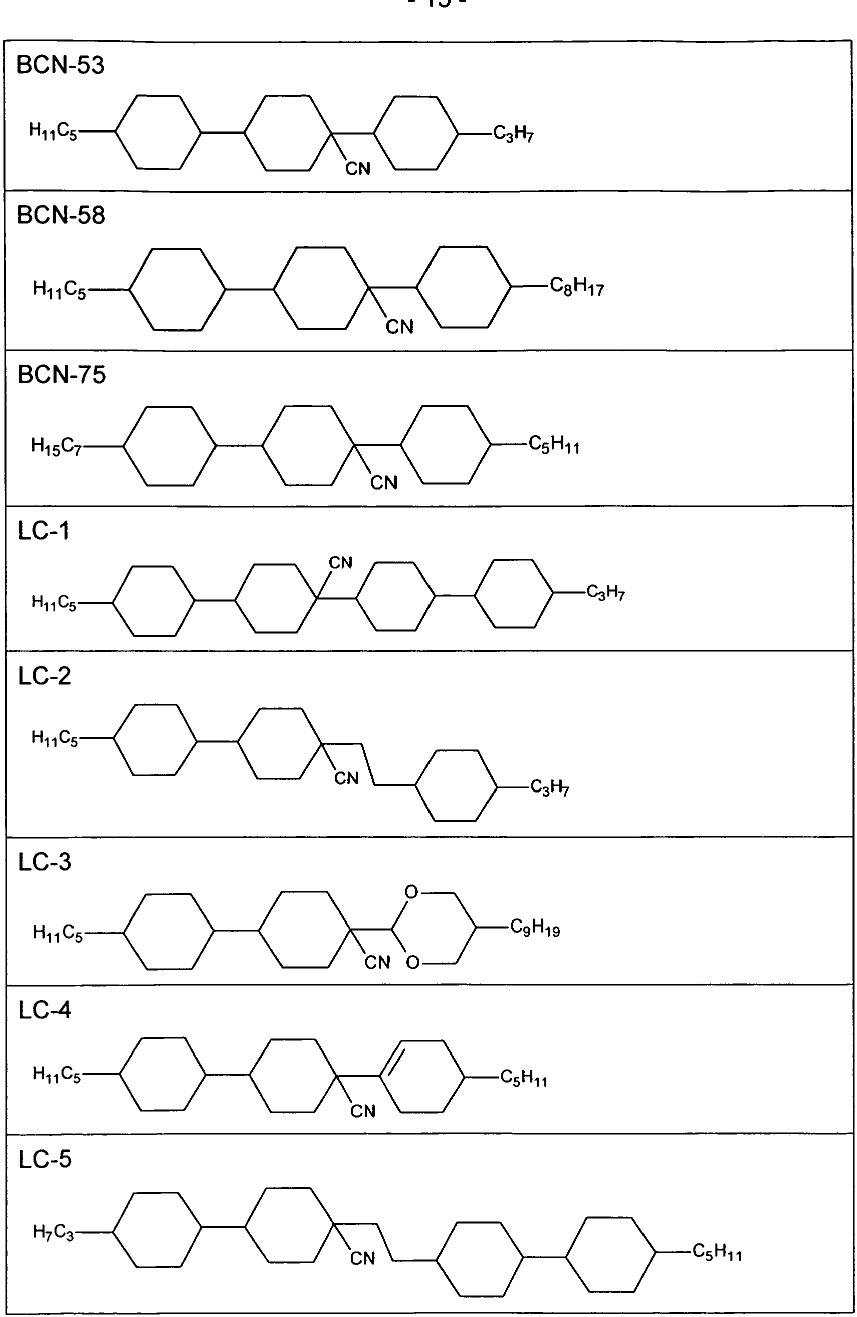

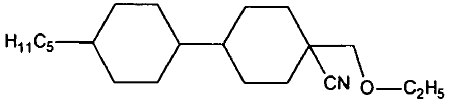

Weiterhin ist es bevorzugt, dass die Mischung eine oder mehrere Verbindungen V enthält, die vier oder mehr Ringe enthalten. Die Verbindung V entspricht bevorzugt der Formel (V) 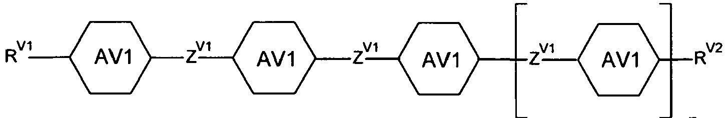 Formel (V),
wobei für die auftretenden Variablen gilt:
R^{V1} und R^{V2} sind bei jedem Auftreten gleich oder verschieden gewählt aus H, F, Cl, CN, NCS, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, und Alkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können;
A^{V1} ist bei jedem Auftreten gleich oder verschieden gewählt aus 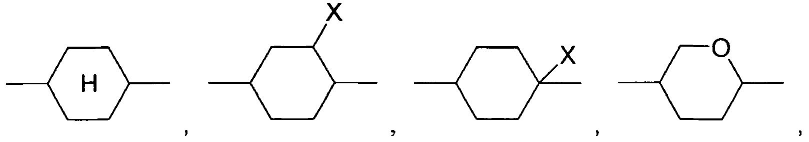 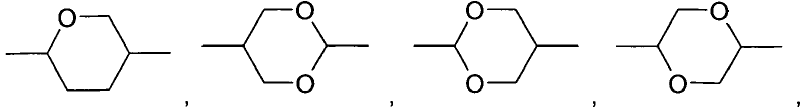 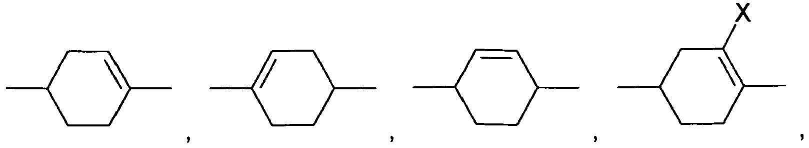 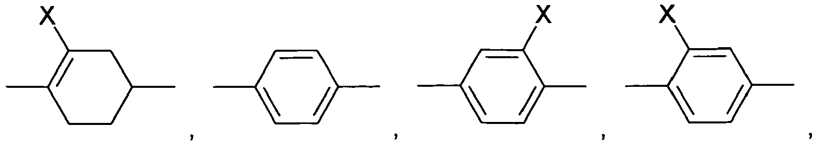 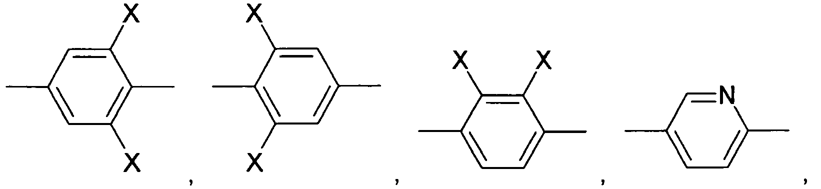 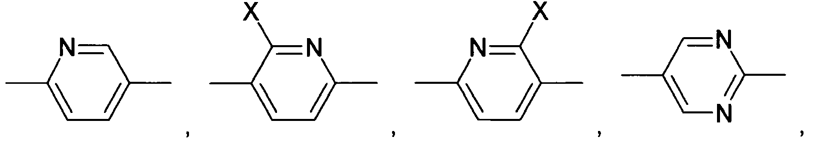 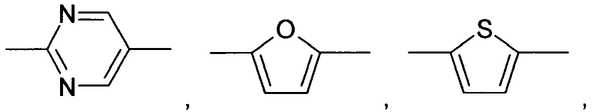 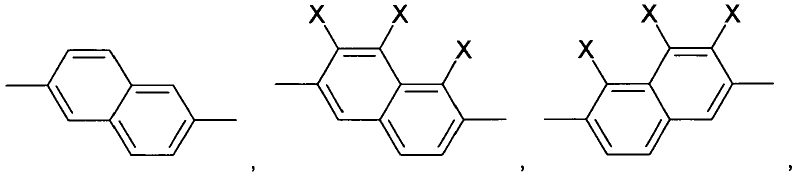 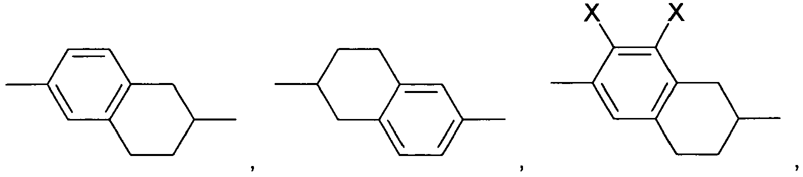 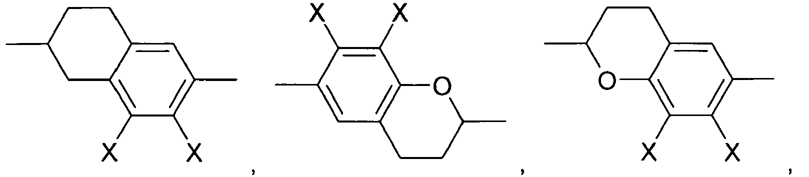 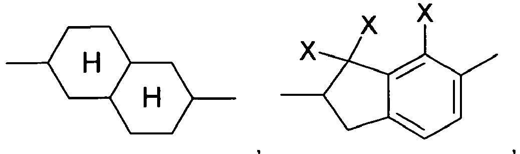 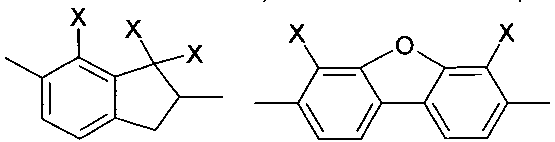 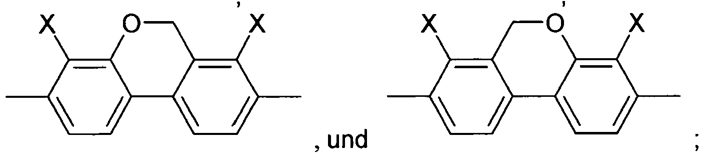
   - X: ist bei jedem Auftreten gleich oder verschieden gewählt aus F, Cl, CN, Alkylgruppen mit 1 bis 10 C-Atomen, Alkoxygruppen mit 1 bis 10 C-Atomen und Thioalkoxygruppen mit 1 bis 10 C-Atomen, wobei ein oder mehrere Wasserstoffatome in den Alkyl-, Alkoxy- und Thioalkoxygruppen durch F oder Cl ersetzt sein können, und wobei eine oder mehrere CH₂-Gruppen in den Alkyl-, Alkoxy- und Thioalkoxygruppen durch O oder S ersetzt sein können;
   - Z^{V1}: ist bei jedem Auftreten gleich oder verschieden gewählt aus einer Einfachbindung, -(C=O)-O-, -O-(C=O)-, -CF₂-O-, -O-CF₂-, -O-CH₂-, -CH₂-O-, und -CH₂-CH₂-;
   - n: ist gleich 1, 2 oder 3.

Die Verbindung V ist bevorzugt in einem Anteil von 0 bis 15% in der Mischung vorhanden, besonders bevorzugt in einem Anteil von 1 bis 10%, ganz besonders bevorzugt in einem Anteil von 2 bis 8%.

Bevorzugt ist in der Verbindung der Formel (V) n gleich 1.

Weiterhin ist Z^{V1} bevorzugt gewählt aus einer Einfachbindung, -(C=O)-O- und -CH₂-O-.

Weiterhin ist A^{V1} bevorzugt bei jedem Auftreten gleich oder verschieden gewählt aus 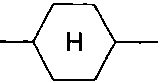 und

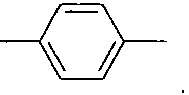

Weiterhin bevorzugt sind R^{V1} und R^{V2} Alkylgruppen mit 1 bis 10 C-Atomen.

Eine bevorzugte Ausführungsform der Formel (V) ist die Formel (V-1) 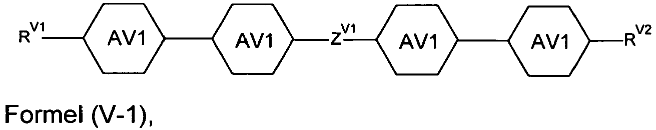 wobei Z^{V1} gewählt ist aus -(C=O)-O- und -CH₂-O-, und wobei die sonstigen auftretenden Variablen definiert sind wie für Formel (V).

Bevorzugte Ausführungsformen von Verbindungen der Formel (V) sind im Folgenden aufgeführt:

| |
|---|
| 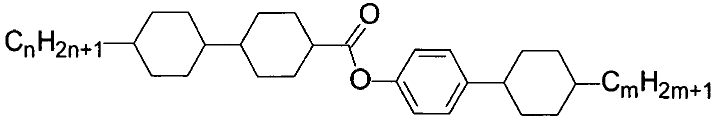 |
| CCZPC-3-5 für n=3 und m=5 |
| CCZPC-3-4 für n=3 und m=4 |
| CCZPC-3-3 für n=3 und m=3 |
| |
| 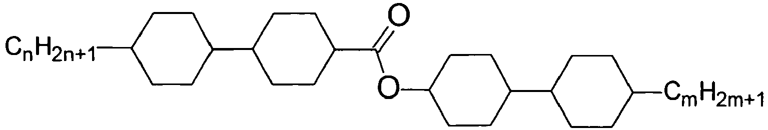 |
| CCZCC-3-2 für n=3 und m=2 |
| CCZCC-2-3 für n=2 und m=3 |
| CCZCC-4-2 für n=4 und m=2 |
| CCZCC-4-3 für n=4 und m=3 |
| |
| 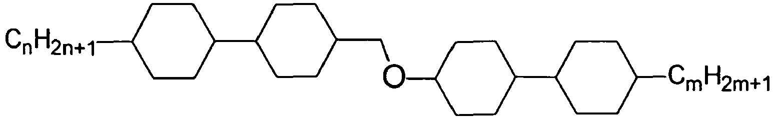 |
| CCOCC-3-2 für n=3 und m=2 |
| CCOCC-2-3 für n=2 und m=3 |
| CCOCC-4-2 für n=4 und m=2 |
| |
| 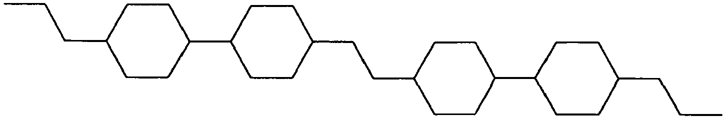 |
| CCECC-3-3 |

Verbindungen der Formel (3) sind in der Mischung bevorzugt in einem Anteil von 15 bis 55% vorhanden, besonders bevorzugt in einem Anteil von 18 bis 50%, ganz besonders bevorzugt in einem Anteil von 25 bis 40%.

Bevorzugt gilt für die Summe der Anteile der Verbindungen der Formel (1), der Formel (2) und der Formel (3), dass diese mehr als 60% beträgt, besonders bevorzugt mehr als 70%, ganz besonders bevorzugt mehr als 80%. Am stärksten bevorzugt beträgt die Summe der Anteile der Verbindungen der Formel (1), der Formel (2) und der Formel (3) mehr als 95%.

Bevorzugt ist in Formel (3) A³¹ bei jedem Auftreten gleich oder verschieden gewählt aus 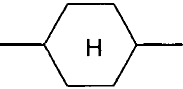 und

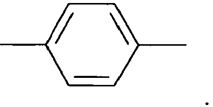

Weiterhin ist Z³¹ bevorzugt bei jedem Auftreten gleich oder verschieden gewählt aus einer Einfachbindung und -(C=O)-O-.

Weiterhin sind R³¹ und R³² bei jedem Auftreten gleich oder verschieden gewählt aus H, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, und Alkenyloxygruppen mit 2 bis 10 C-Atomen. Besonders bevorzugt sind R³¹ und R³² Alkylgruppen mit 1 bis 10 C-Atomen.

Weiterhin bevorzugt ist m gleich 0 oder 1 oder 2.

Bevorzugte Ausführungsformen für Verbindungen der Formel (3) sind neben den oben für Verbindung (V) gezeigten die Folgenden:

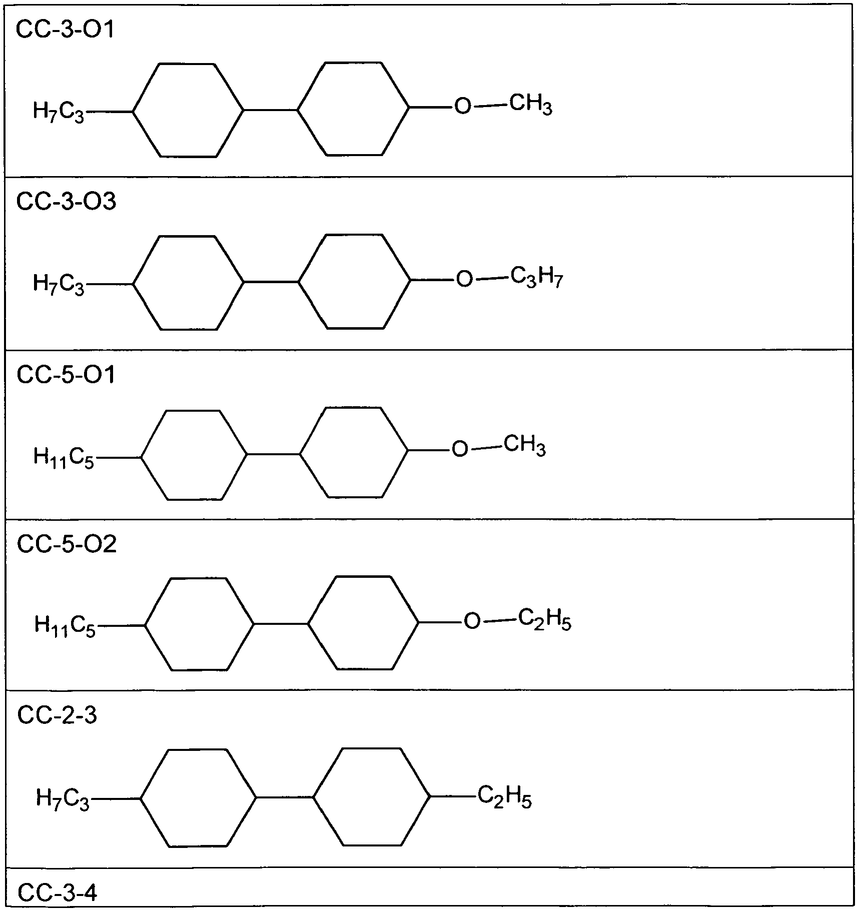

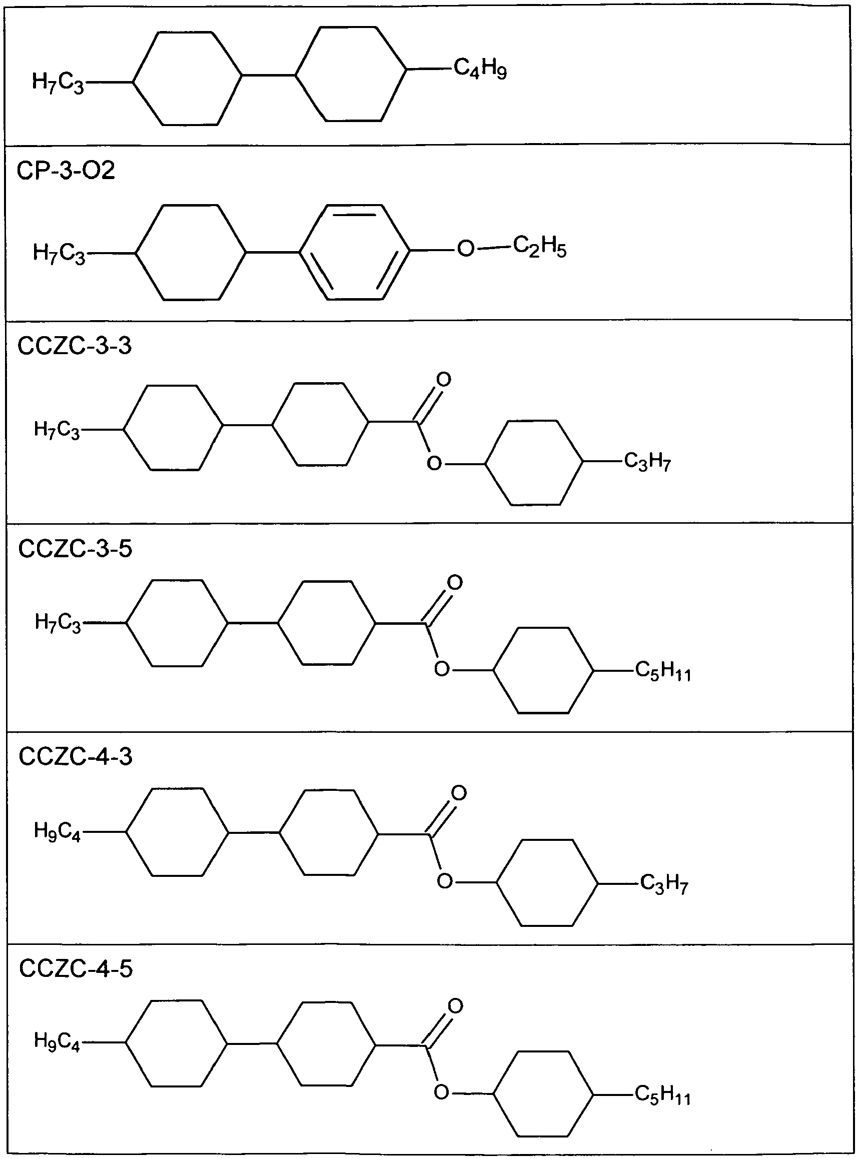

Bevorzugte Ausführungsformen der Formel (3) entsprechen den Formeln (3-A), (3-B) und (3-C), 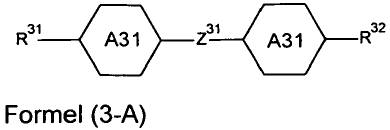 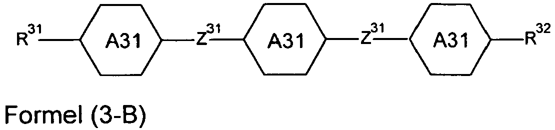 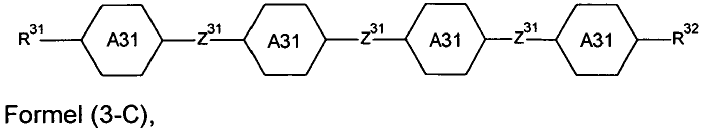 wobei die auftretenden Variablen definiert sind wie für Formel (3). Es gelten für die Formeln (3-A), (3-B) und (3-C) entsprechend die für Formel (3) genannten bevorzugten Ausführungsformen.

Die Mischung enthält bevorzugt in einem Anteil von 10 bis 40%, besonders bevorzugt in einem Anteil von 12 bis 30%, ganz besonders bevorzugt in einem Anteil von 15 bis 25% Verbindungen der Formel (3-A).

Die Mischung enthält bevorzugt in einem Anteil von 0 bis 20%, besonders bevorzugt in einem Anteil von 2 bis 15%, ganz besonders bevorzugt in einem Anteil von 3 bis 12% Verbindungen der Formel (3-B).

Die Mischung enthält bevorzugt in einem Anteil von 0 bis 15%, besonders bevorzugt in einem Anteil von 1 bis 10%, ganz besonders bevorzugt in einem Anteil von 2 bis 8% Verbindungen der Formel (3-C).

Bevorzugt sind in der Mischung eine oder mehrere Verbindungen der Formel (3-1) enthalten 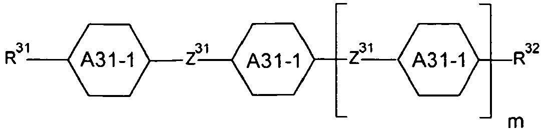 Formel (3-1),
wobei die auftretenden Variablen definiert sind wie für Formel (3), und wobei gilt:
- A³¹⁻¹: sind bei jedem Auftreten gleich oder verschieden gewählt aus

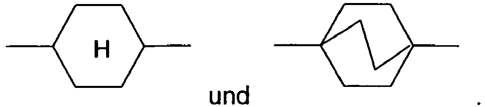

Für Formel (3-1) gelten die oben angegebenen bevorzugten Ausführungsformen für Formel (3) entsprechend.
- A³¹⁻¹: ist bevorzugt

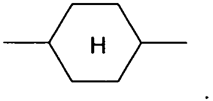

Bevorzugt enthält die Mischung Verbindungen der Formel (3-1) in einem Anteil von 5 bis 50%, besonders bevorzugt in einem Anteil von 10 bis 40%, ganz besonders bevorzugt in einem Anteil von 20 bis 30%.

Weiterhin bevorzugt ist die Mischung dadurch gekennzeichnet, dass sie weniger als 60 %, bevorzugt weniger als 50 %, besonders bevorzugt weniger als 40 % an Verbindungen an Verbindungen enthält, welche einen oder mehrere Benzolringe enthalten.

Weiterhin bevorzugt ist die Mischung dadurch gekennzeichnet, dass sie weniger als 20 %, bevorzugt weniger als 10 %, besonders bevorzugt im Wesentlichen keine Verbindungen enthält, welche zwei oder mehr Benzolringe enthalten.

Die Mischung wird bevorzugt in Kombination mit einem oder mehreren Farbstoffen verwendet. Entsprechend ist eine Mischung, welche zusätzlich zu den oben angegebenen Komponenten einen oder mehrere Farbstoffe enthält, bevorzugt. Die Farbstoffe sind bevorzugt organische Verbindungen, besonders bevorzugt organische Verbindungen enthaltend mindestens eine kondensierte Aryl- oder Heteroarylgruppe.

Bevorzugt enthält die Mischung mindestens zwei, besonders bevorzugt mindestens drei und ganz besonders bevorzugt drei oder vier verschiedene Farbstoffe. Bevorzugt decken die mindestens zwei Farbstoffe jeweils verschiedene Bereiche des Lichtspektrums ab.

Wenn zwei oder mehr Farbstoffe in der Mischung vorliegen, ergänzen sich die Absorptionsspektren dieser Farbstoffe bevorzugt derart, dass im Wesentlichen das gesamte sichtbare Spektrum des Lichts absorbiert wird. Dadurch entsteht für das menschliche Auge der Eindruck von schwarzer Farbe. Bevorzugt wird dies dadurch erreicht, dass drei oder mehr verschiedene Farbstoffe verwendet werden, von denen mindestens einer blaues Licht absorbiert, mindestens einer grünes bis gelbes Licht absorbiert, und mindestens einer rotes Licht absorbiert. Lichtfarbe ist dabei entsprechend B. Bahadur, Liquid Crystals - Applications and Uses, Vol. 3, 1992, World Scientific Publishing, Abschnitt 11.2.1, definiert.

Der Gesamtanteil der Farbstoffe in der Mischung beträgt bevorzugt 0.01 bis 20%, besonders bevorzugt 0.1 bis 15% und ganz besonders bevorzugt 0.2 bis 12%. Der Anteil jedes einzelnen der einen oder mehreren Farbstoffe beträgt bevorzugt 0.01 bis 15%, bevorzugt 0.05 bis 12% und ganz besonders bevorzugt 0.1 bis 10%.

Der in der Mischung enthaltene Farbstoff ist bevorzugt in der Mischung gelöst. Der Farbstoff wird bevorzugt in seiner Ausrichtung durch die Ausrichtung der Moleküle der Mischung im flüssigkristallinen Zustand beeinflusst.

Bevorzugt ist der Farbstoff ein dichroitischer Farbstoff, besonders bevorzugt ein positiv dichroitischer Farbstoff. Unter positiv dichroitisch wird verstanden, dass der Farbstoff einen positiven Anisotropiegrad R aufweist. Besonders bevorzugt ist der Anisotropiegrad R größer als 0.4, ganz besonders bevorzugt größer als 0.5 und am stärksten bevorzugt größer als 0.6. Der Anisotropiegrad R wird dabei bestimmt wie in den Ausführungsbeispielen des Anmeldetextes WO2015/154848 angegeben.

Es kann in einer alternativen Ausführungsform auch bevorzugt sein, dass der Farbstoff ein negativ dichroitischer Farbstoff ist. Unter negativ dichroitisch wird verstanden, dass der Farbstoff einen negativen Anisotropiegrad R aufweist.

Bevorzugt sind die in der Mischung vorhandenen Farbstoffe entweder alle positiv dichroitisch, oder alle negativ dichroitisch.

Weiterhin bevorzugt absorbiert der Farbstoff gemäß der vorliegenden Anmeldung vorwiegend Licht im UV-VIS-NIR-Bereich, d. h. in einem Wellenlängenbereich von 320 bis 1500 nm. Besonders bevorzugt absorbiert der Farbstoff vorwiegend Licht im VIS -Bereich, d. h. in einem Wellenlängenbereich von 380 bis 780 nm. Besonders bevorzugt hat der Farbstoff ein oder mehrere Absorptionsmaxima im wie oben definierten UV-VIS-NIR-Bereich, bevorzugt im VIS-Bereich, d.h. von 380 nm bis 780 nm Wellenlänge. Für Anwendungen in schaltbaren Fenstern kann es ebenfalls bevorzugt sein, wenn der Farbstoff ein oder mehrere Absorptionsmaxima im NIR-Bereich hat, insbesondere zwischen 780 nm und 1500 nm.

Weiterhin bevorzugt ist der Farbstoff gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der Tabelle aufgeführten expliziten Verbindungen.

Bevorzugt ist der Farbstoff gewählt aus Azoverbindungen, Anthrachinonen, Methinverbindungen, Azomethinverbindungen, Merocyaninverbindungen, Naphthochinonen, Tetrazinen; Rylenen, insbesondere Perylenen und Terylenen; Benzothiadiazolen; Pyrromethenen und Diketopyrrolopyrrolen. Besonders bevorzugt sind darunter Azoverbindungen, Anthrachinone, Benzothiadiazole, insbesondere wie in WO 2014/187529 offenbart, Diketopyrrolopyrrole, insbesondere wie in WO 2015/090497 offenbart, und Rylene, insbesondere wie in WO 2014/090373 offenbart.

Die folgenden Verbindungen sind Beispiele für die genannten Farbstoffe:

| |
|---|
| 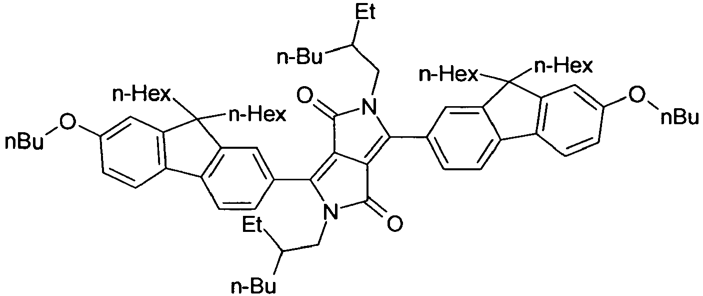 |
| 1 |
| 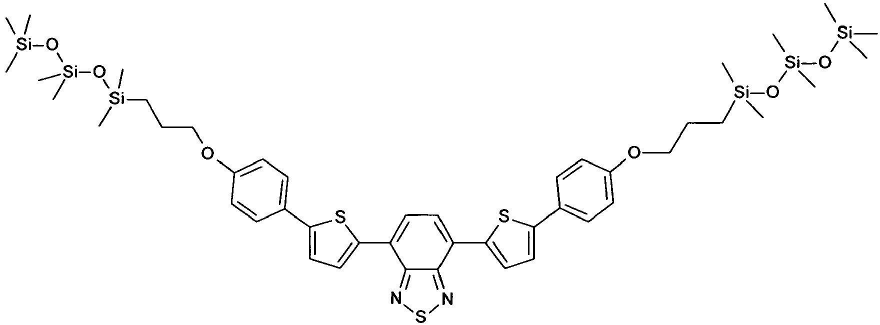 |
| 2 |
| 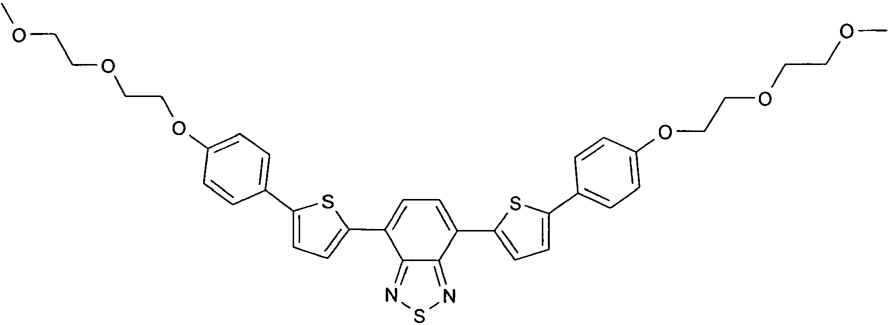 |
| 3 |
| 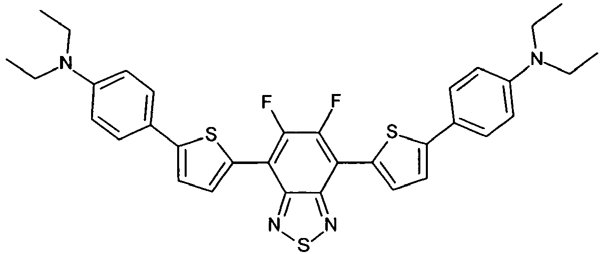 |
| 4 |
| 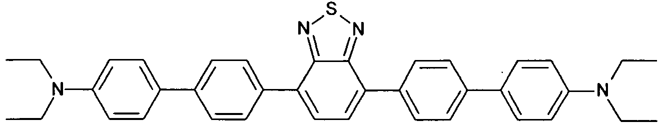 |
| 5 |
| 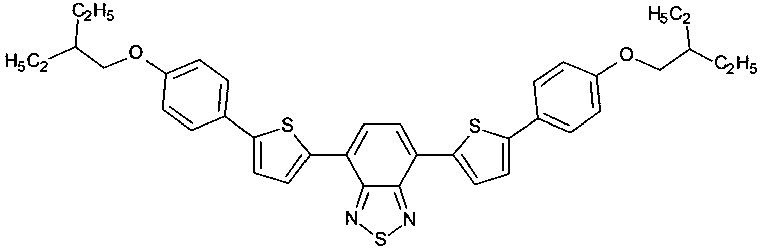 |
| 6 |
| 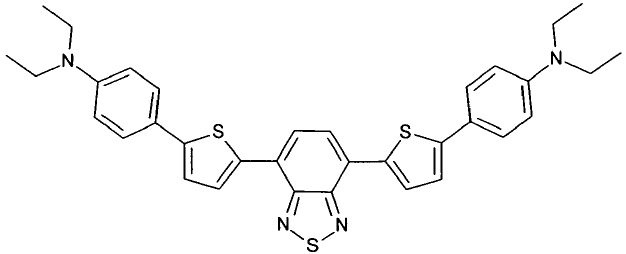 |
| 7 |
| 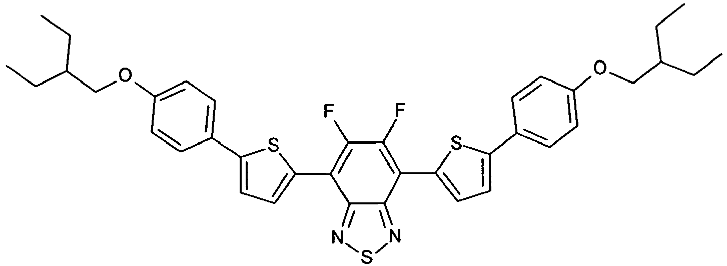 |
| 8 |
| 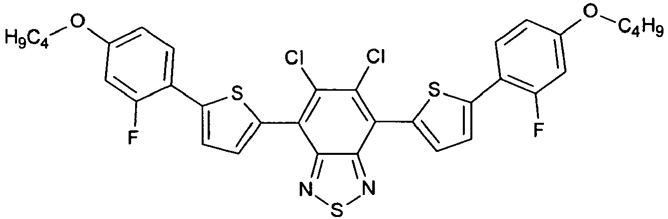 |
| 9 |
| 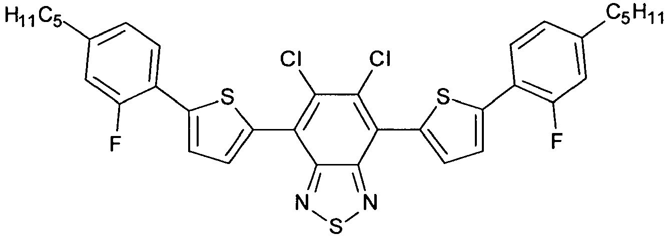 |
| 10 |
| 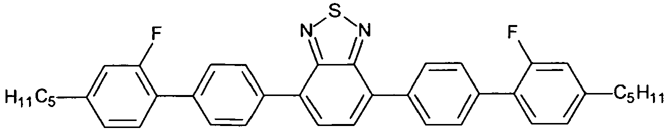 |
| 11 |
| 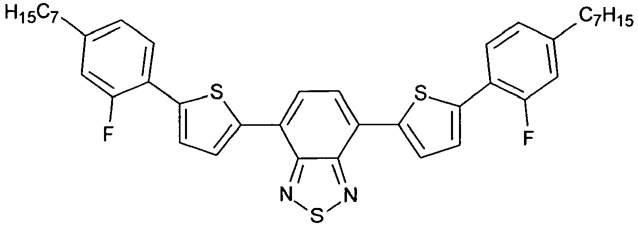 |
| 12 |
| 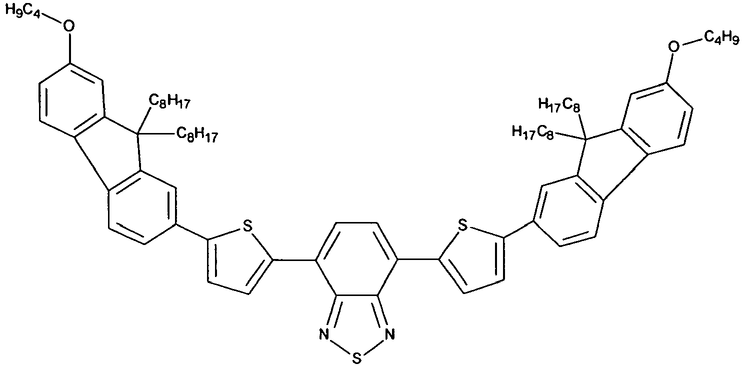 |
| 13 |
| 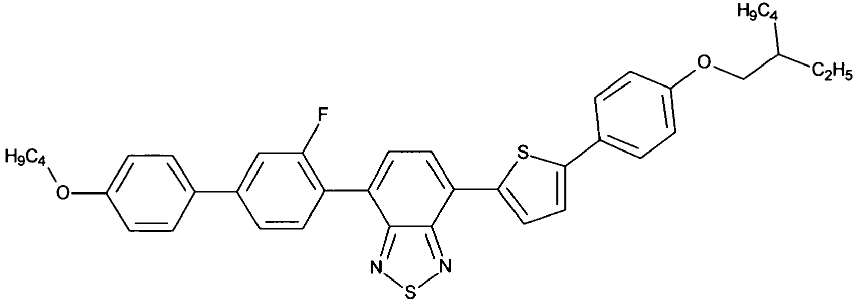 |
| 14 |
| 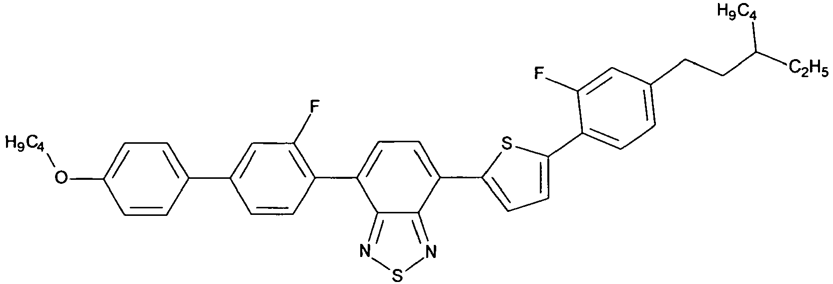 |
| 15 |
| 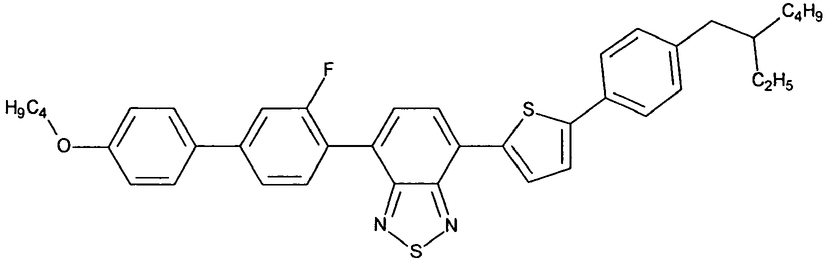 |
| 16 |
| 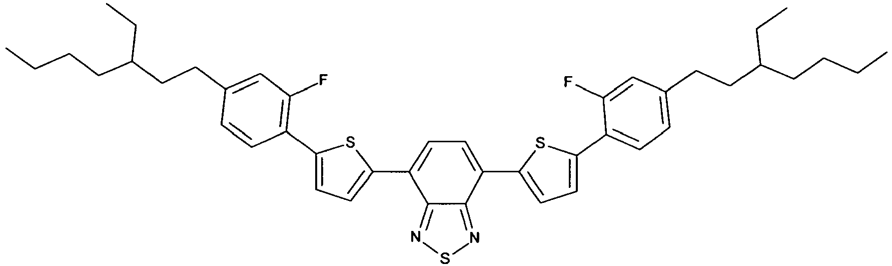 |
| 17 |
| 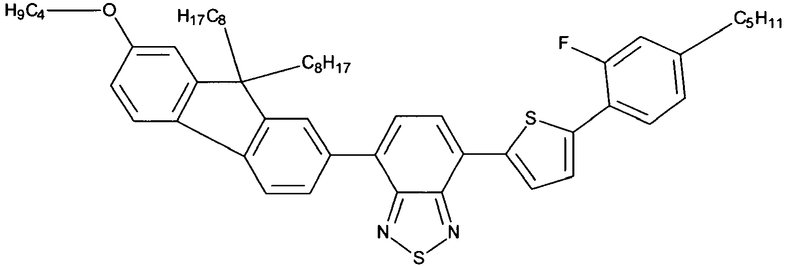 |
| 18 |
| 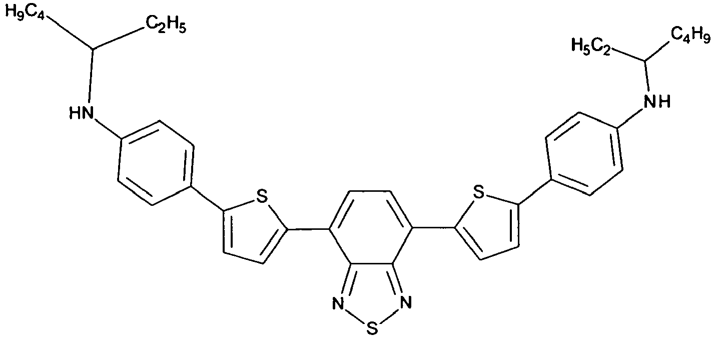 |
| 19 |
| 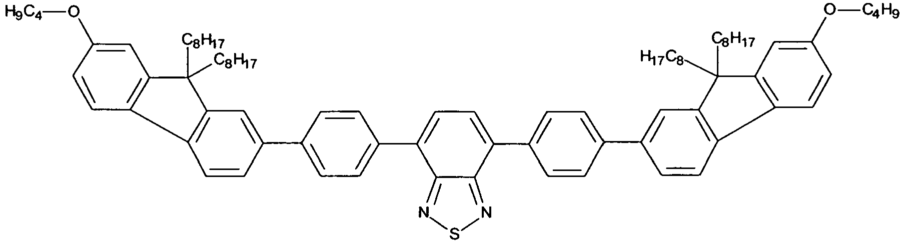 |
| 20 |
| 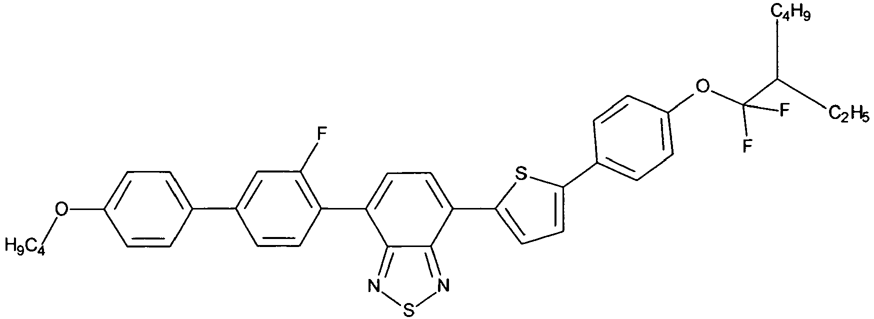 |
| 21 |
| 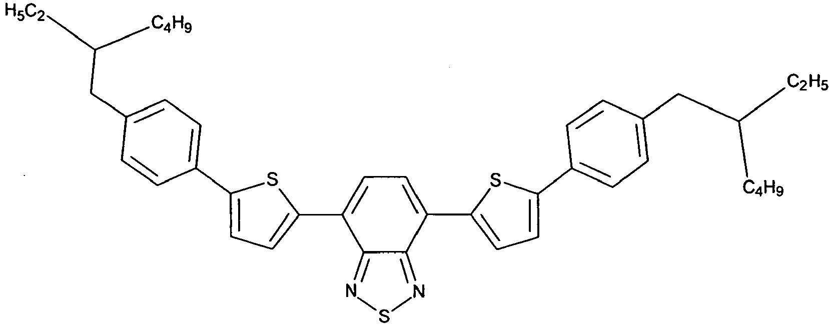 |
| 22 |
| 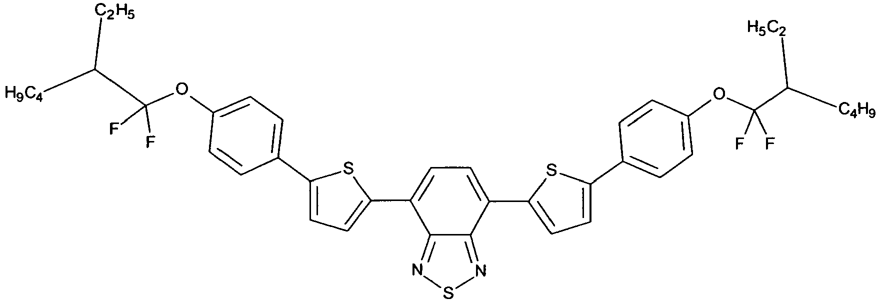 |
| 23 |
| 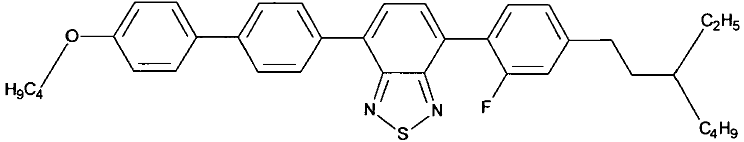 |
| 24 |
| 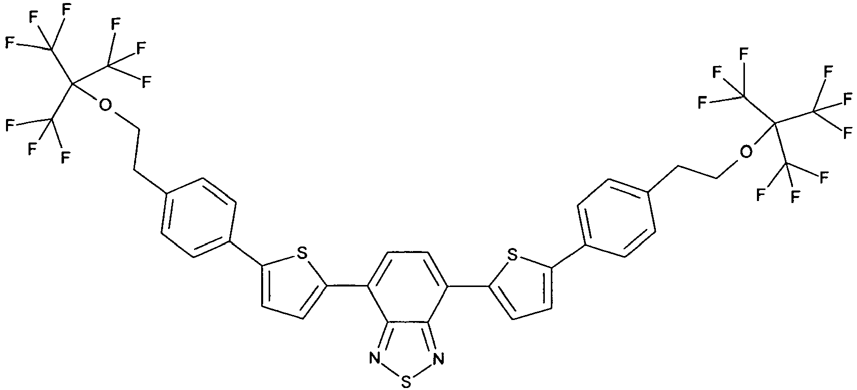 |
| 25 |
| 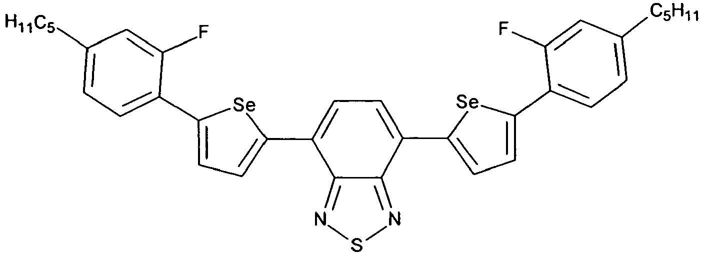 |
| 26 |
| 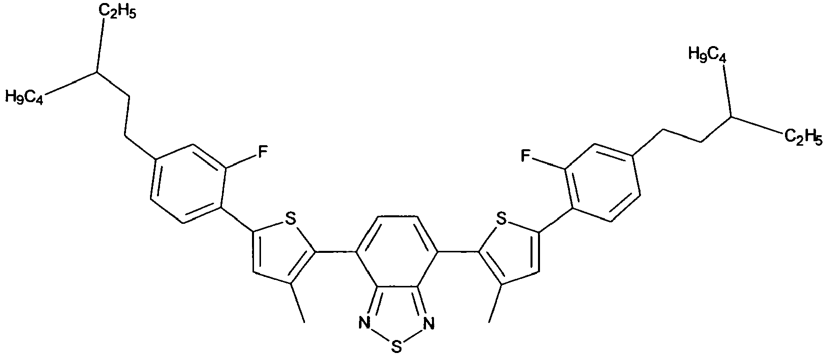 |
| 27 |
| 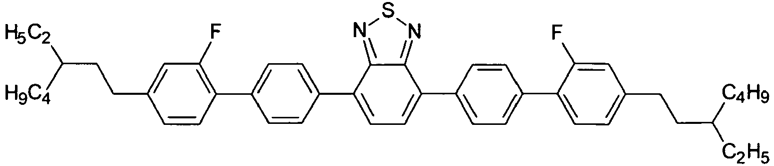 |
| 28 |
| 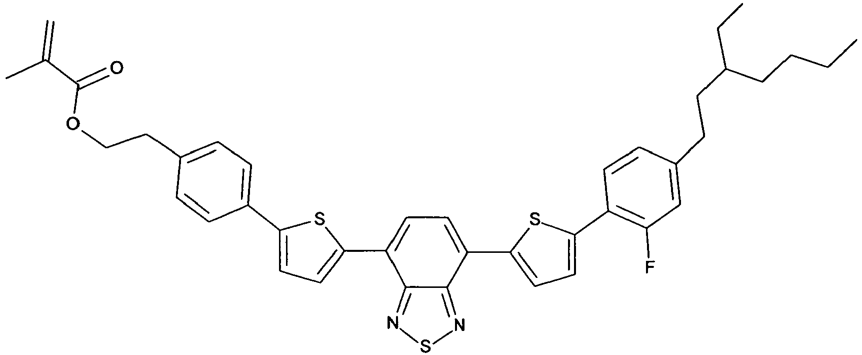 |
| 29 |
| 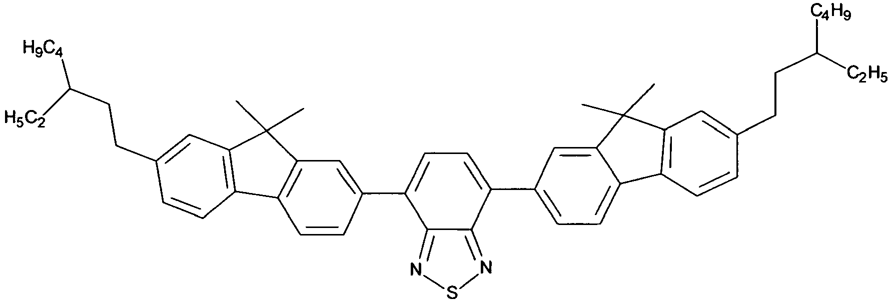 |
| 30 |
| 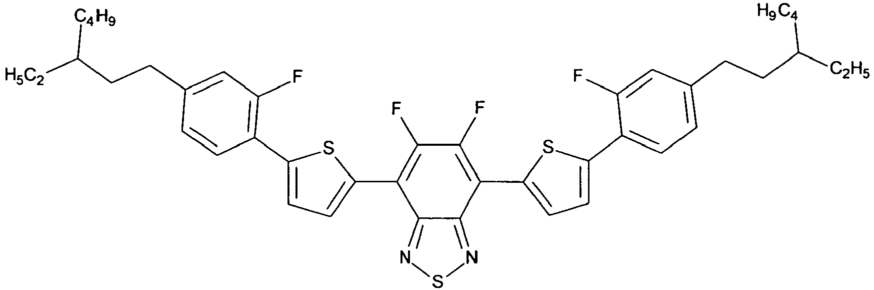 |
| 31 |
| 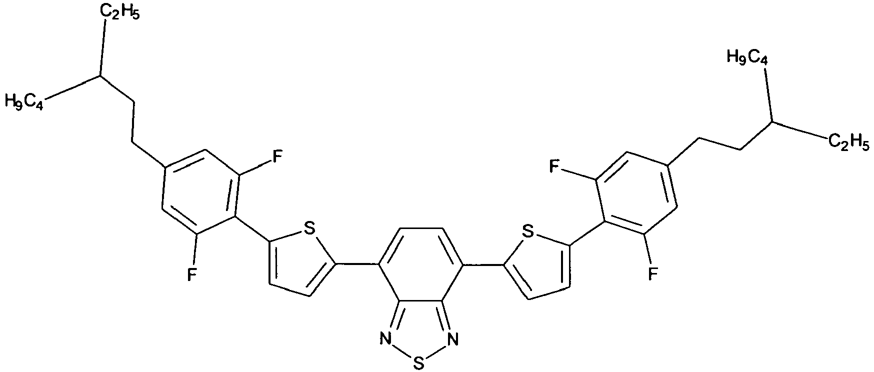 |
| 32 |
| 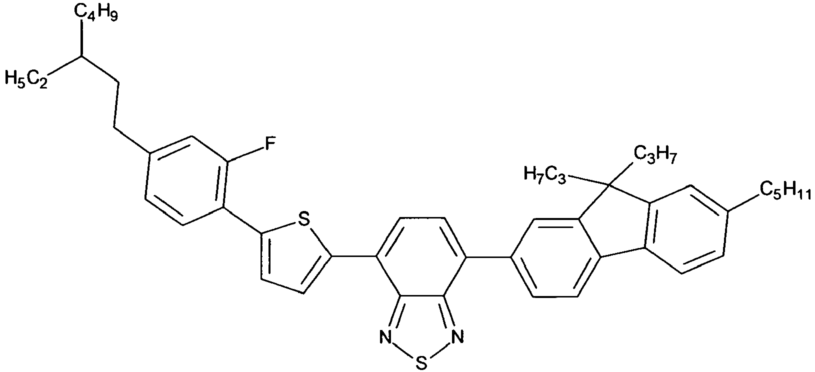 |
| 33 |
| 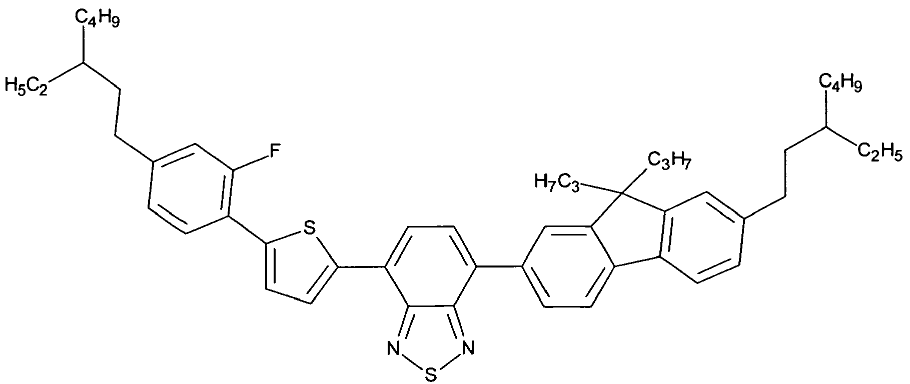 |
| 34 |
| 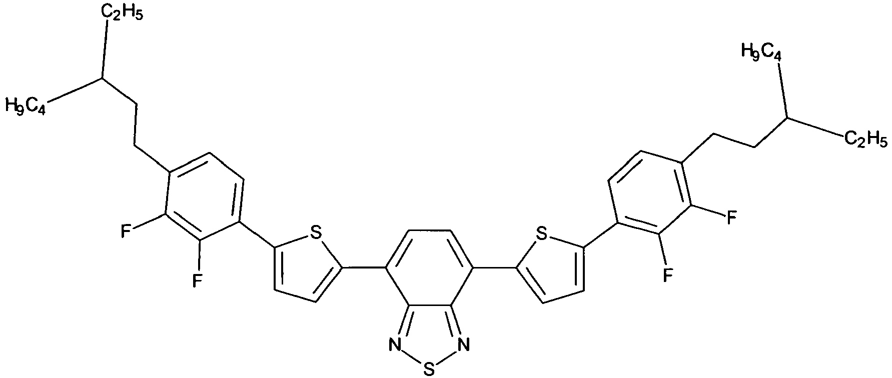 |
| 35 |
| 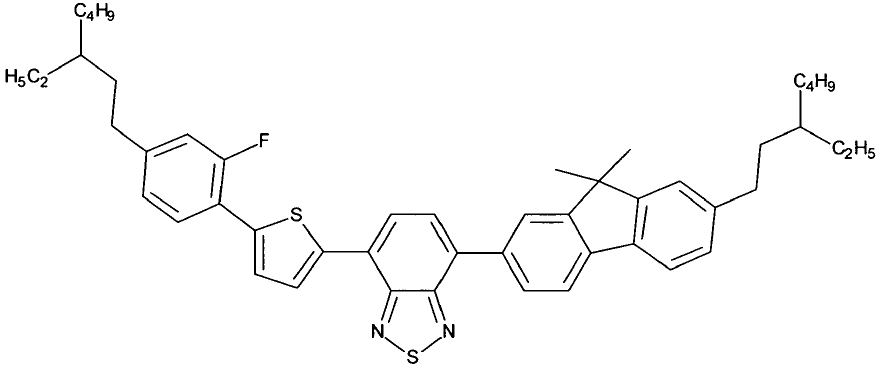 |
| 36 |
| 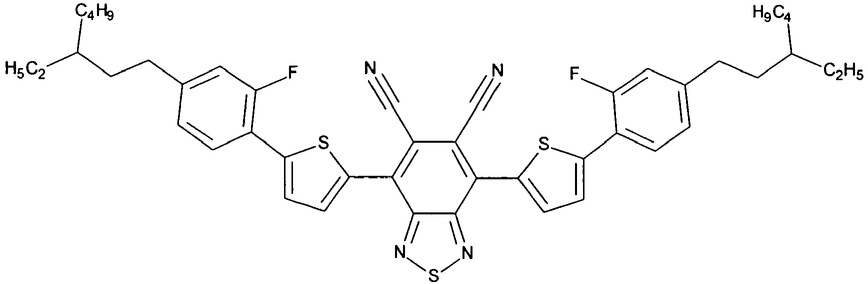 |
| 37 |
| 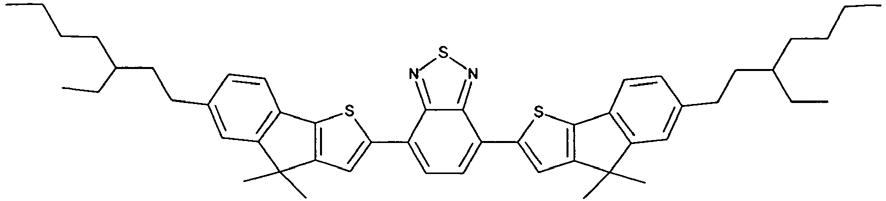 |
| 38 |
| 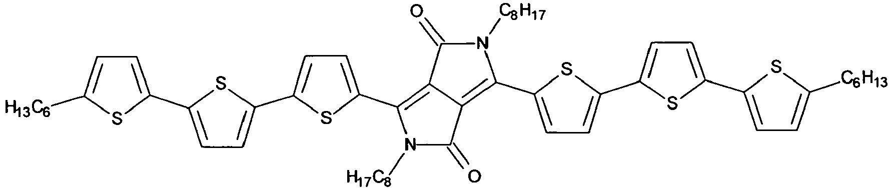 |
| 39 |
| 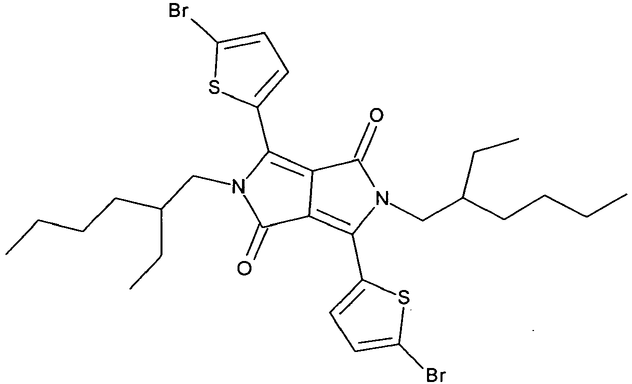 |
| 40 |
| 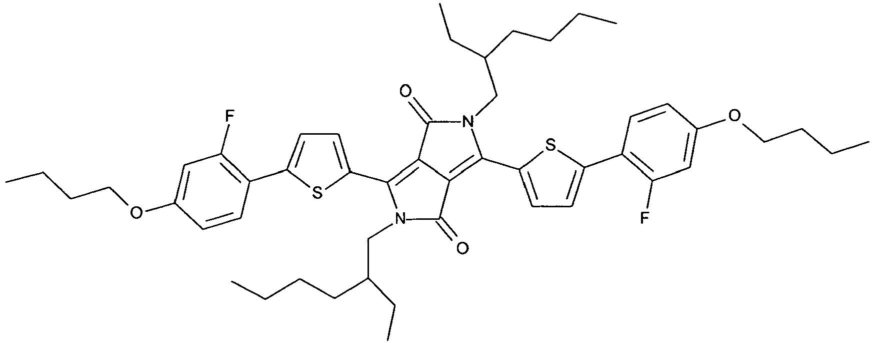 |
| 41 |
| 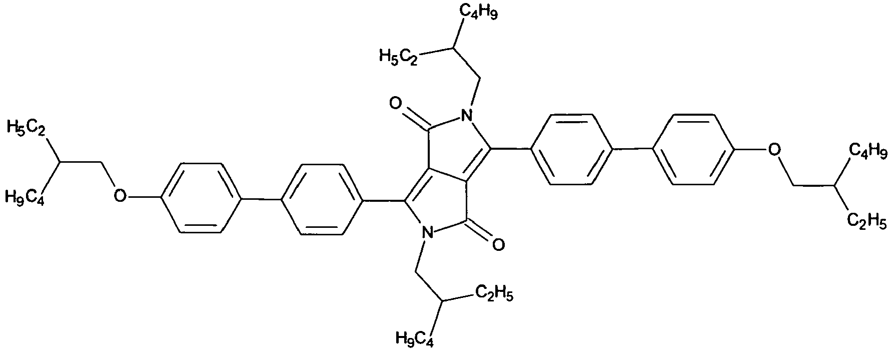 |
| 42 |
| 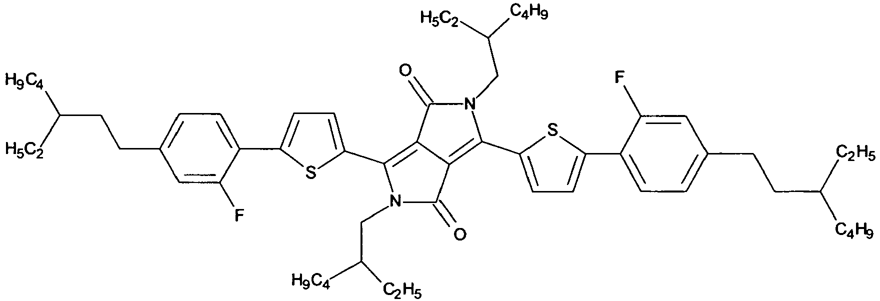 |
| 43 |
| 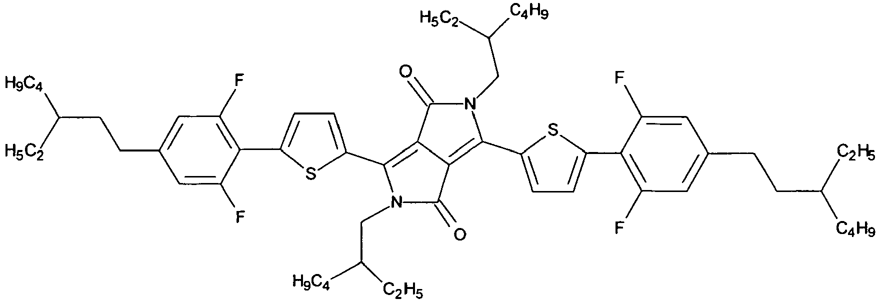 |
| 44 |
| 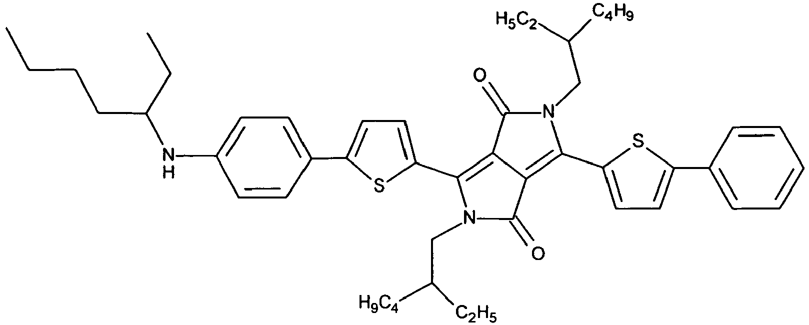 |
| 45 |
| 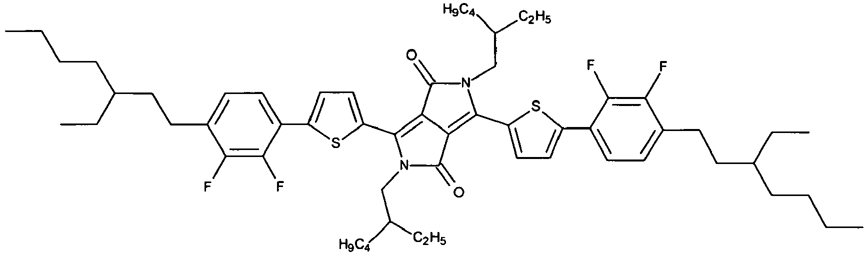 |
| 46 |
| 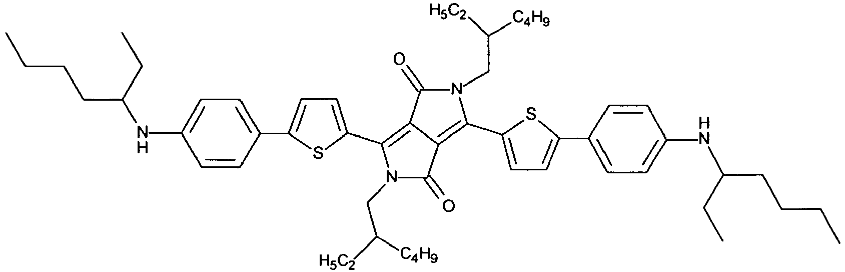 |
| 47 |
| 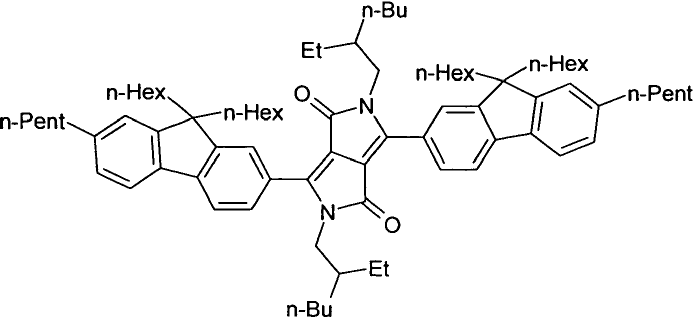 |
| 48 |
| 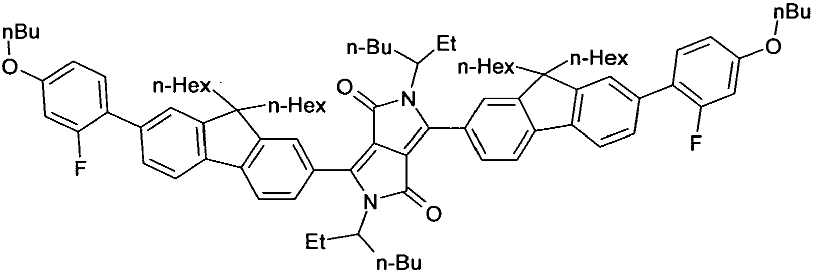 |
| 49 |
| 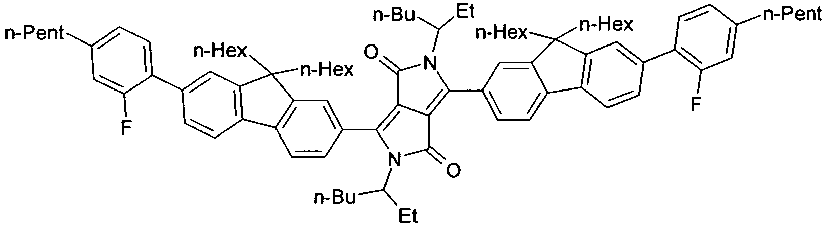 |
| 50 |
| 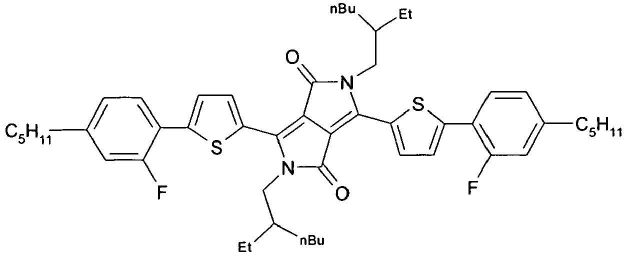 |
| 51 |
| 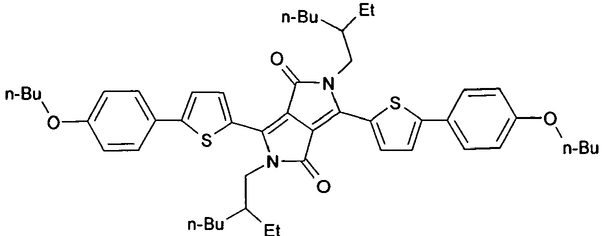 |
| 52 |
| 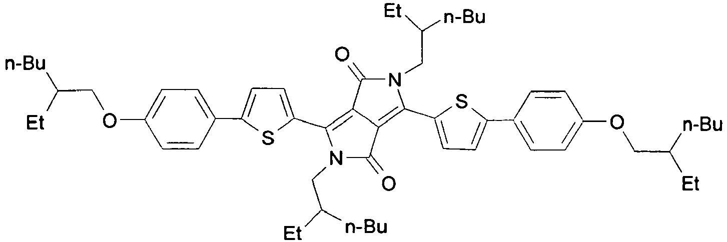 |
| 53 |
| 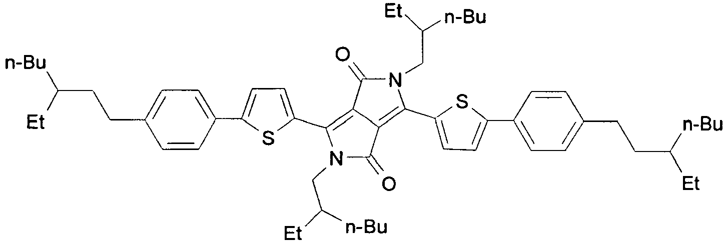 |
| 54 |
| 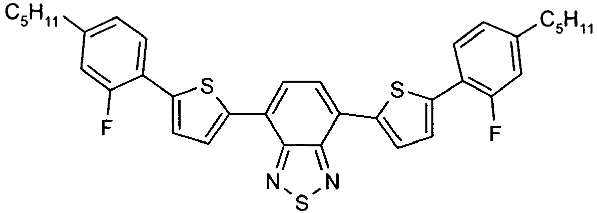 |
| 55 |
| 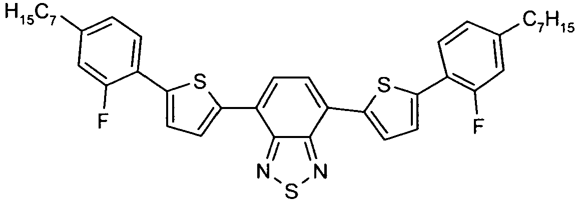 |
| 56 |
| 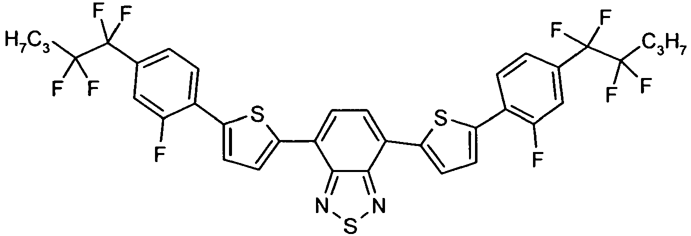 |
| 57 |
| 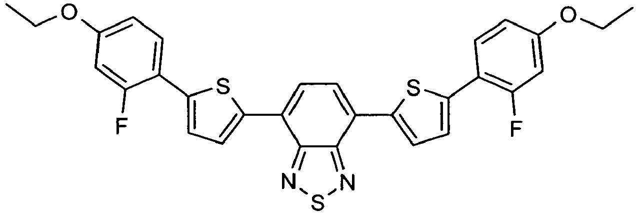 |
| 58 |
| 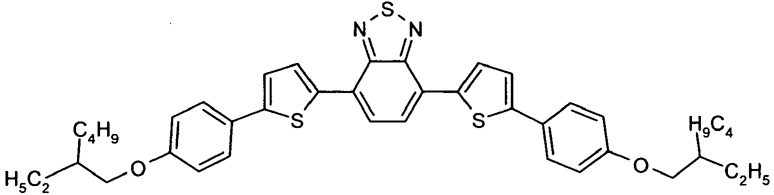 |
| 59 |
| 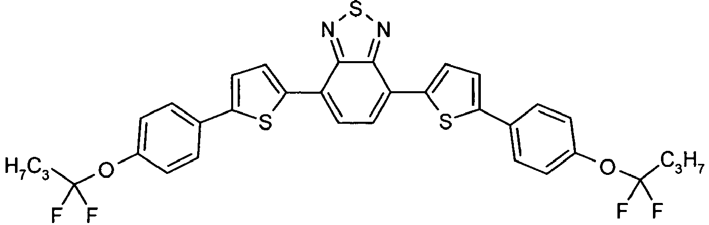 |
| 60 |
| 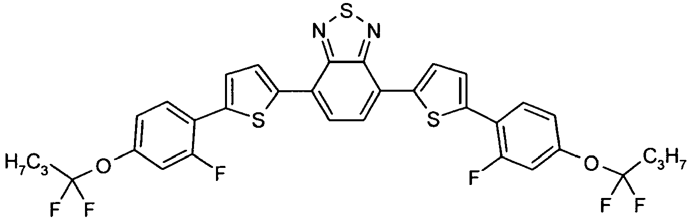 |
| 61 |
| 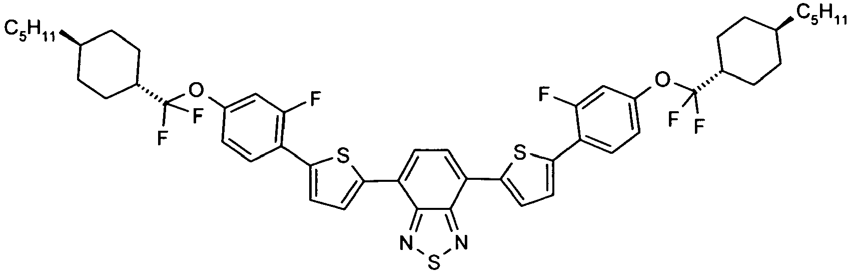 |
| 62 |
| 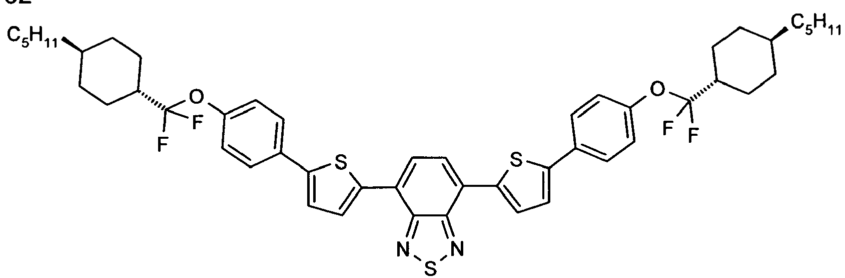 |
| 63 |
| 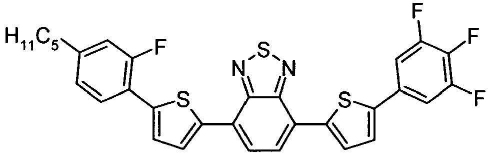 |
| 64 |
| 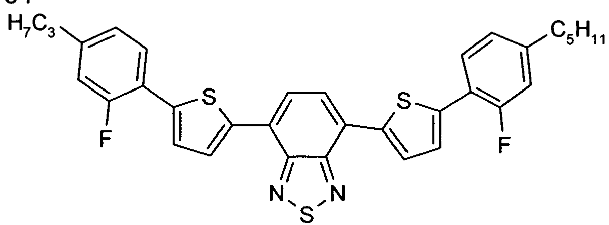 |
| 65 |
| 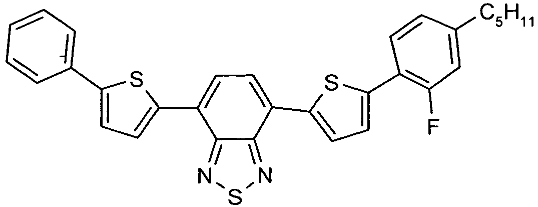 |
| 66 |
| 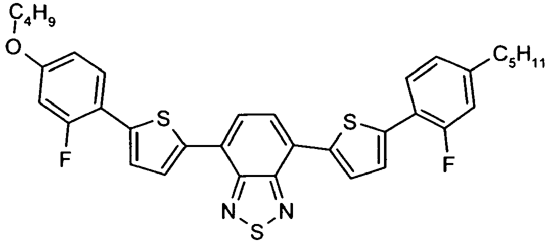 |
| 67 |
| 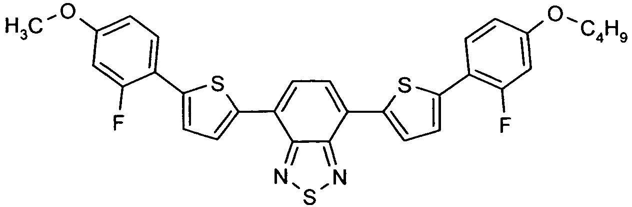 |
| 68 |
| 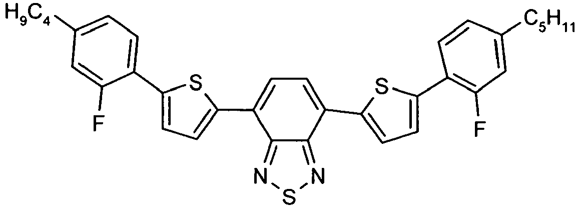 |
| 69 |
| 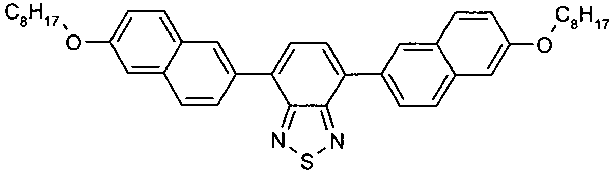 |
| 70 |
| 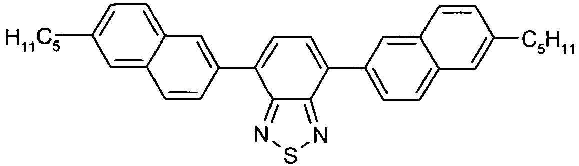 |
| 71 |
| 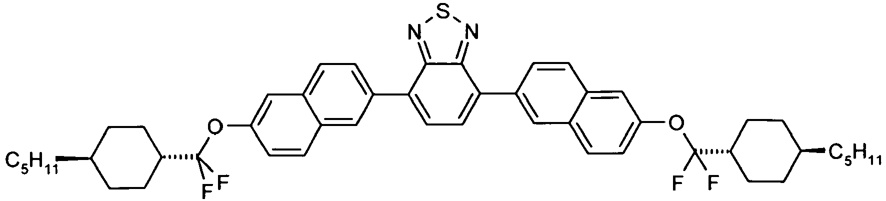 |
| 72 |
| 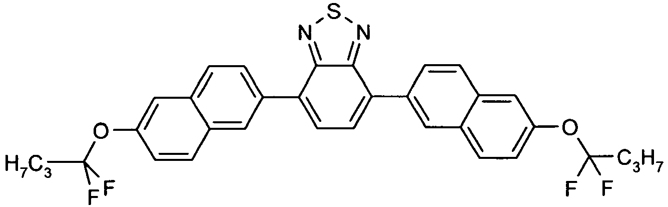 |
| 73 |
| 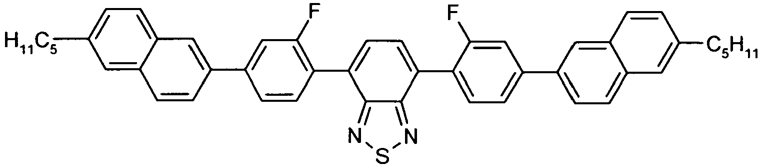 |
| 74 |
| 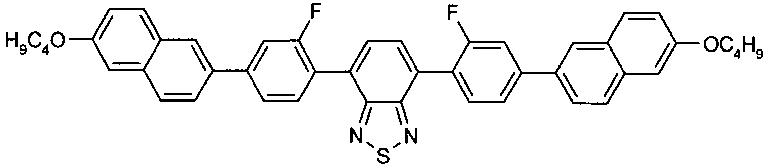 |
| 75 |
| 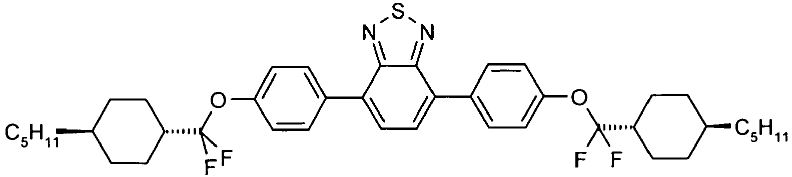 |
| 76 |
| 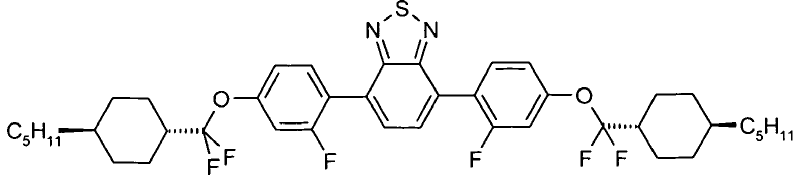 |
| 77 |
| 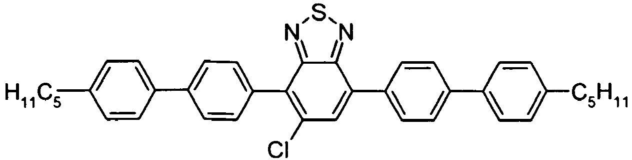 |
| 78 |
| 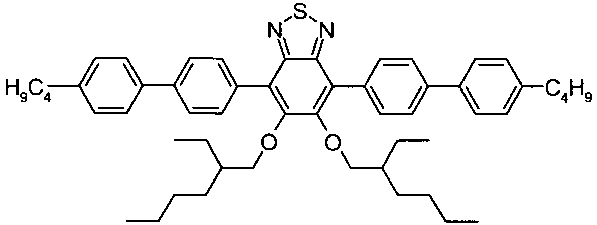 |
| 79 |
| 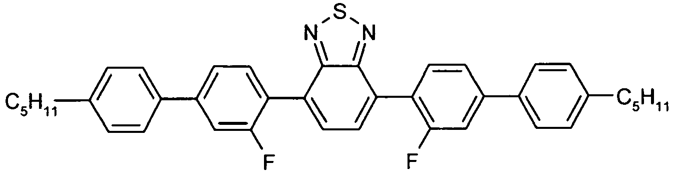 |
| 80 |
| 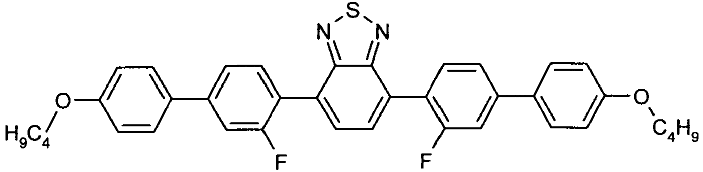 |
| 81 |
| 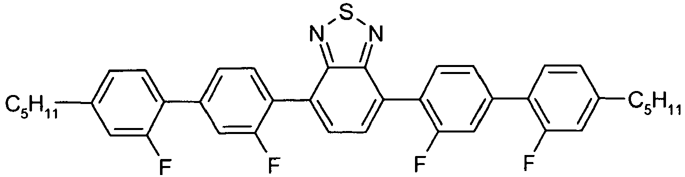 |
| 82 |
| 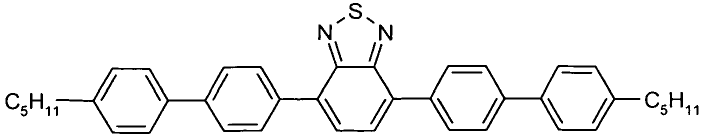 |
| 83 |
| 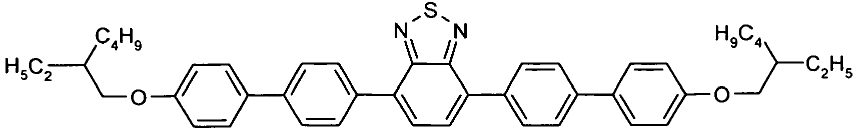 |
| 84 |
| 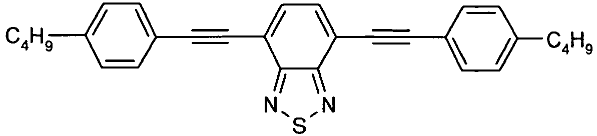 |
| 85 |
| 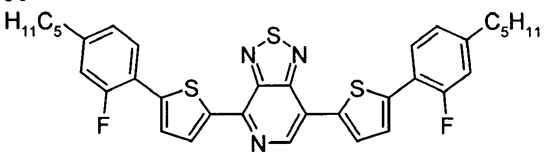 |
| 86 |
| 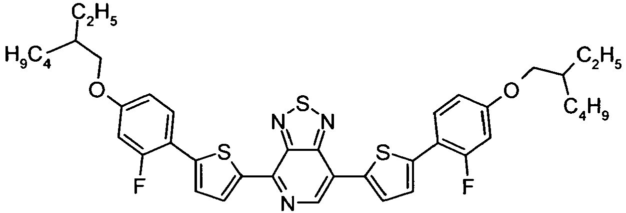 |
| 87 |
| 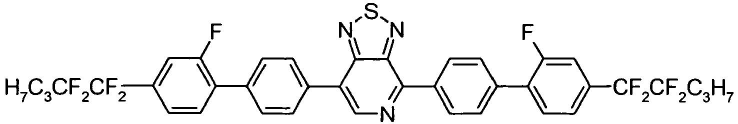 |
| 88 |
| 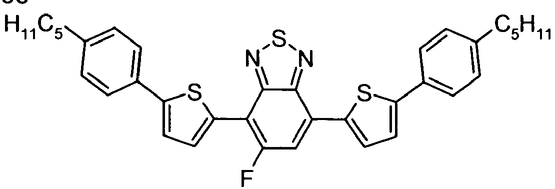 |
| 89 |
| 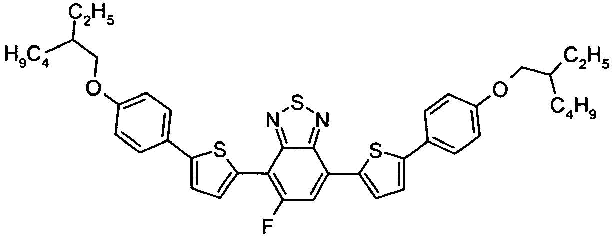 |
| 90 |
| 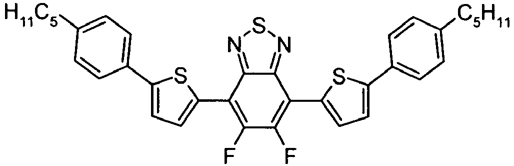 |
| 91 |
| 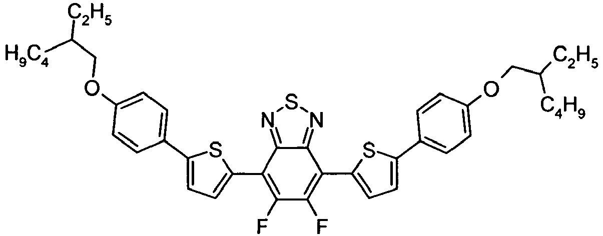 |
| 92 |
| 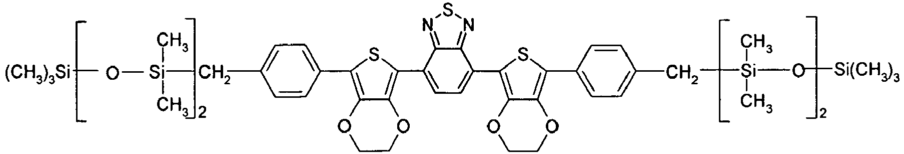 |
| 93 |
| 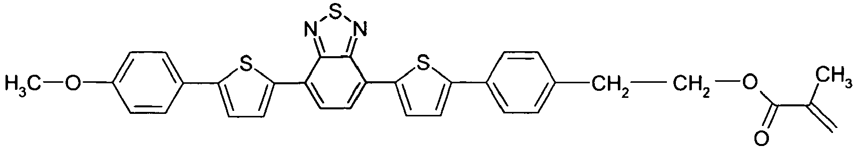 |
| 94 |
| 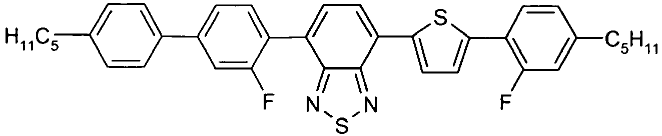 |
| 95 |
| 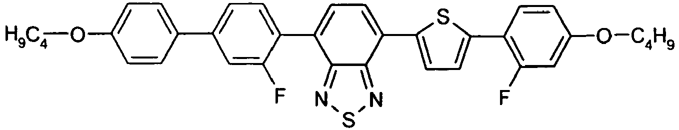 |
| 96 |
| 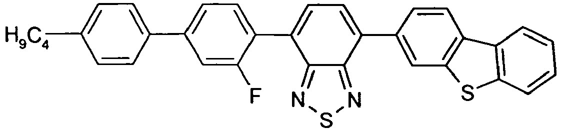 |
| 97 |
| 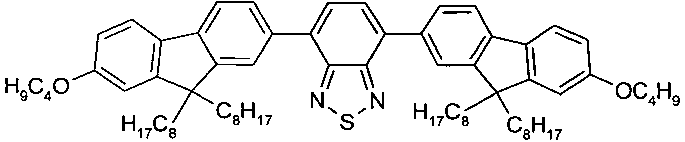 |
| 98 |
| 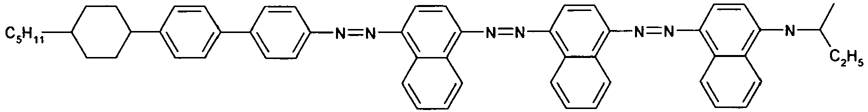 |
| 99 |
| 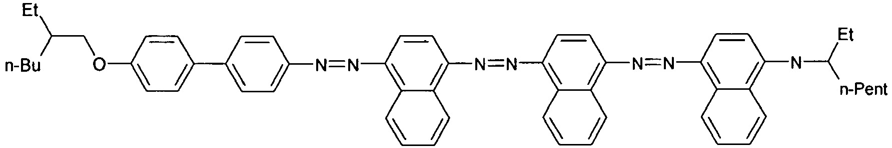 |
| 100 |
| 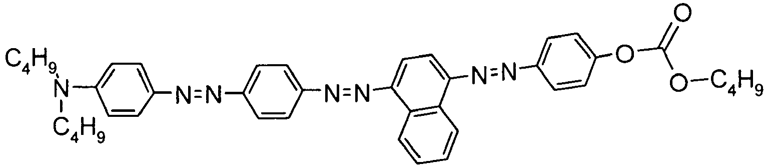 |
| 101 |
| 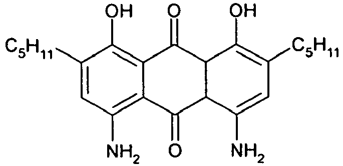 |
| 102 |
| 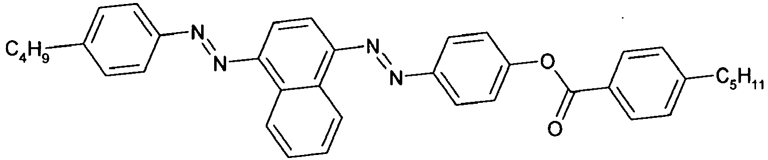 |
| 103 |
| 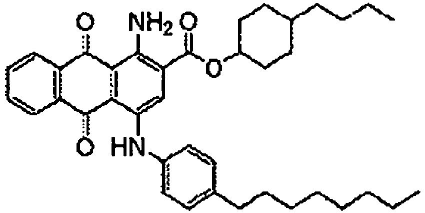 |
| 104 |
| 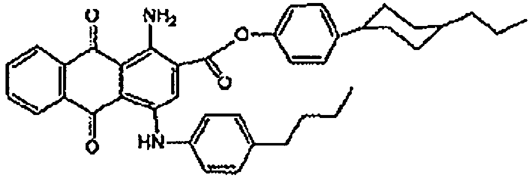 |
| 105 |
| 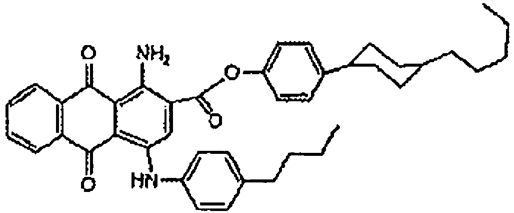 |
| 106 |

Die Mischung enthält bevorzugt einen oder mehrere chirale Dotierstoffe. Bevorzugt liegen in diesem Fall die Moleküle der Mischung im flüssigkristallinen Zustand in der Schicht einer Vorrichtung, die die Mischung enthält, gegeneinander verdrillt vor, besonders bevorzugt wie aus dem TN-Modus oder STN-Modus (twisted nematic mode oder supertwisted nematic mode) von Anzeigevorrichtungen bekannt.

Chirale Dotierstoffe werden in der Mischung bevorzugt in einer Gesamtkonzentration von 0.01 Gew.-% bis 3 Gew.-%, besonders bevorzugt von 0.05 Gew.-% bis 1 Gew.-% eingesetzt. Um hohe Werte für die Verdrillung zu erhalten, kann die Gesamtkonzentration der chiralen Dotierstoffe auch höher als 3 Gew.-% gewählt werden, bevorzugt bis maximal 10 Gew.-%.

Bevorzugte Dotierstoffe sind die in der folgenden Tabelle abgebildeten Verbindungen:

| |
|---|
| 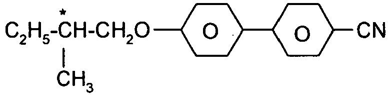 |
| DP-1 |
| 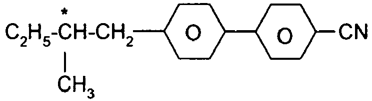 |
| DP-2 |
| 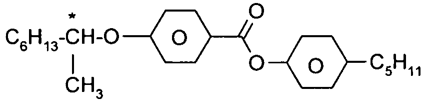 |
| DP-3 |
| 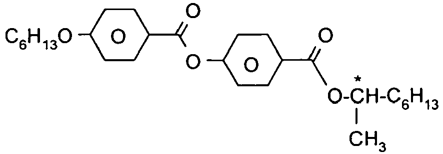 |
| DP-4 |
| 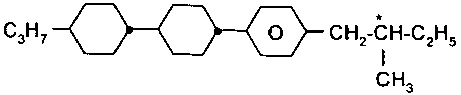 |
| DP-5 |
| 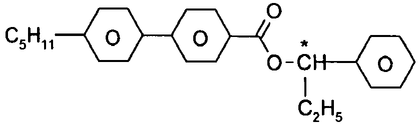 |
| DP-6 |
| 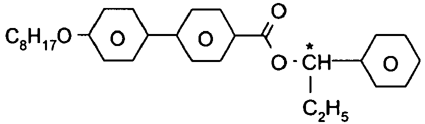 |
| DP-7 |
| 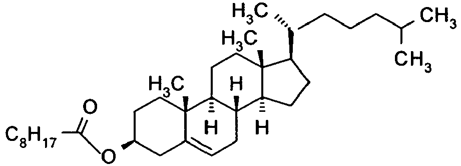 |
| DP-8 |
| 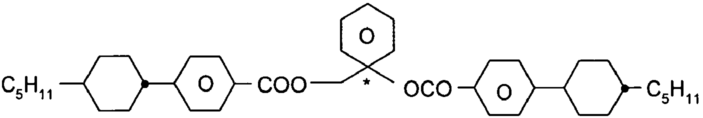 |
| DP-9 |
| 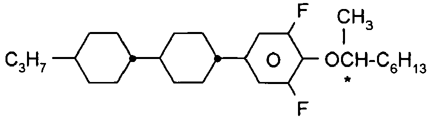 |
| DP-10 |
| 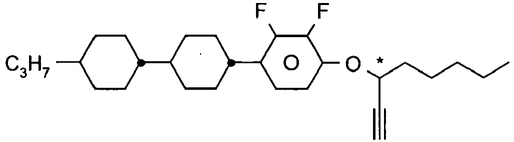 |
| DP-11 |
| 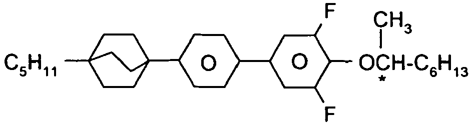 |
| DP-12 |
| 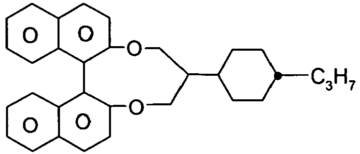 |
| DP-13 |

Die Mischung enthält weiterhin bevorzugt einen oder mehrere Stabilisatoren. Die Gesamtkonzentration der Stabilisatoren liegt bevorzugt zwischen 0.00001 Gew.-% und 10 Gew.-%, besonders bevorzugt zwischen 0.0001 Gew.-% und 1 Gew.-% der Gesamtmischung.

Bevorzugte Stabilisatoren sind in der folgenden Tabelle gezeigt:

| | |
|---|---|
| 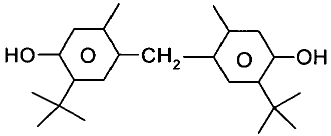 | 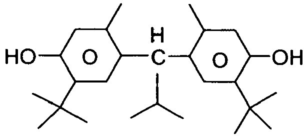 |
| ST-1 | ST-2 |
| 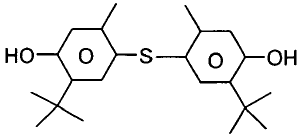 | 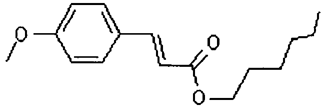 |
| ST-3 | ST-4 |
| 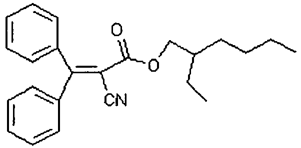 | 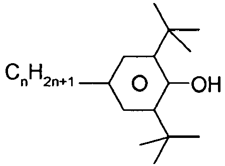 |
| ST-5 | ST-6 |
| 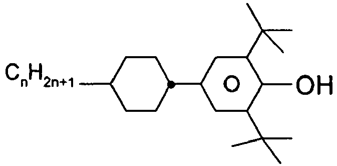 | 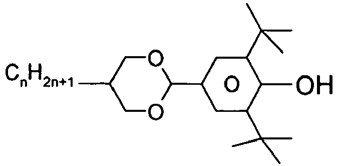 |
| ST-7 | ST-8 |
| 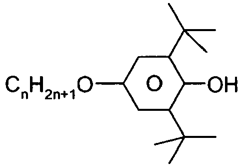 | 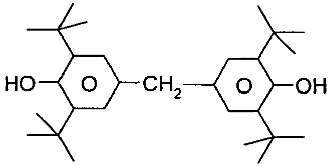 |
| ST-9 | ST-10 |
| 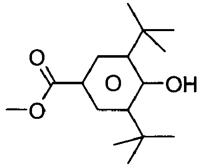 | 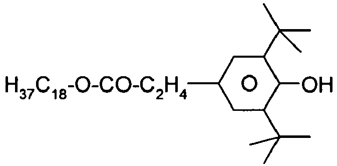 |
| ST-11 | ST-12 |
| 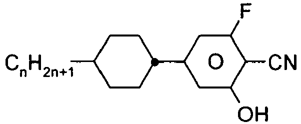 | 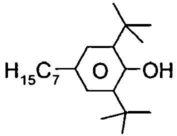 |
| ST-13 | ST-14 |
| 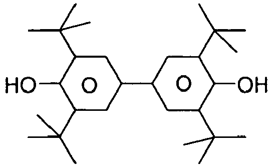 | 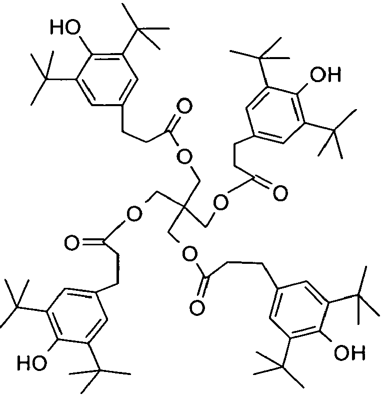 |
| ST-15 | ST-16 |
| 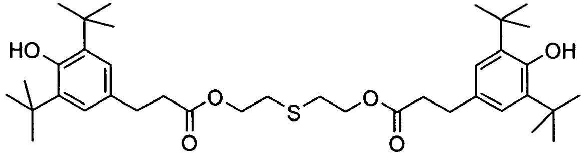 | |
| ST-17 | |
| 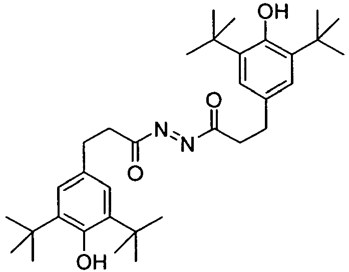 | 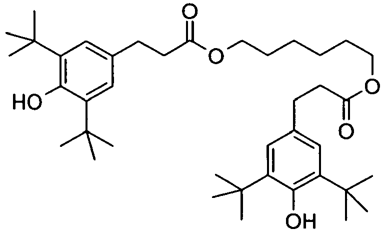 |
| ST-18 | ST-19 |
| 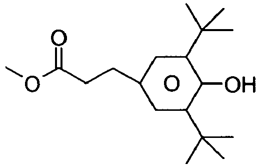 | 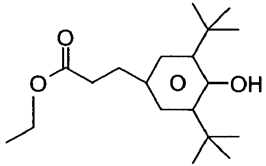 |
| ST-20 | ST-21 |
| 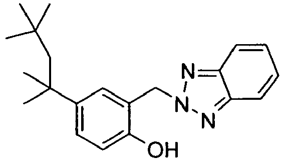 | 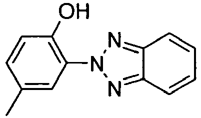 |
| ST-22 | ST-23 |
| 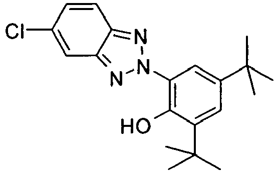 | 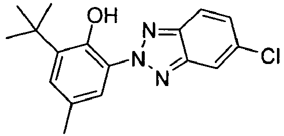 |
| ST-24 | ST-25 |
| 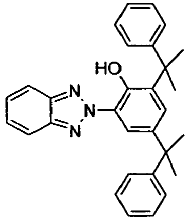 | 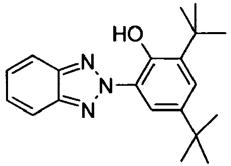 |
| ST-26 | ST-27 |
| 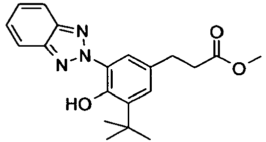 | 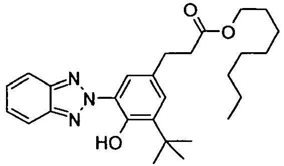 |
| ST-28 | ST-29 |
| 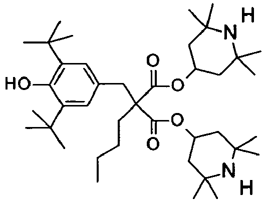 | 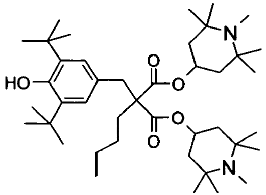 |
| ST-30 | ST-31 |
| 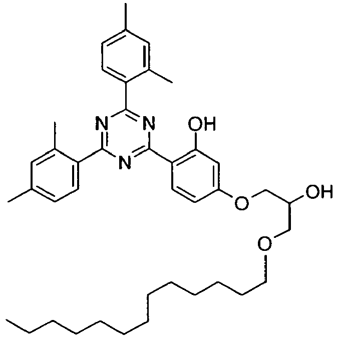 | 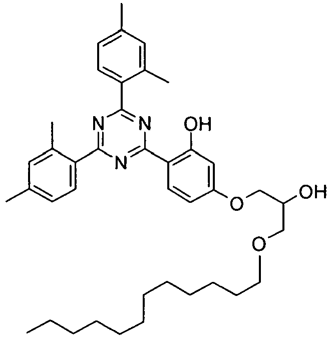 |
| ST-32 | ST-33 |
| 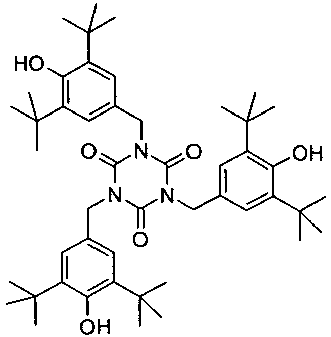 | 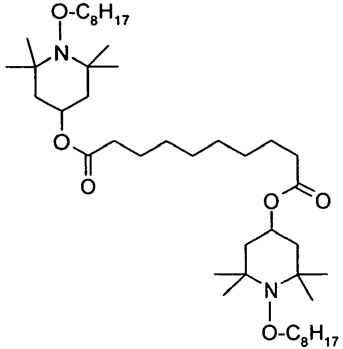 |
| ST-34 | ST-35 |
| 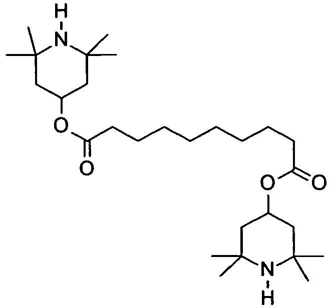 | 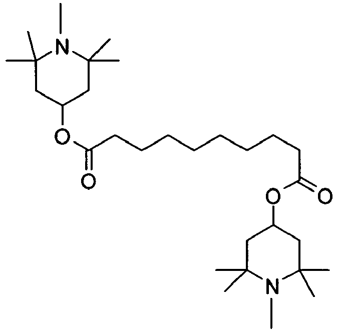 |
| ST-36 | ST-37 |
| 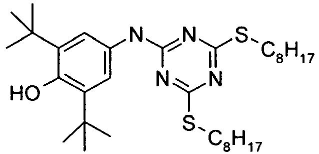 | 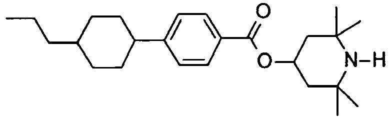 |
| ST-38 | ST-39 |
| 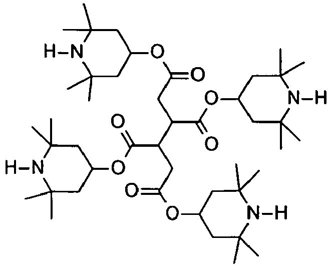 | 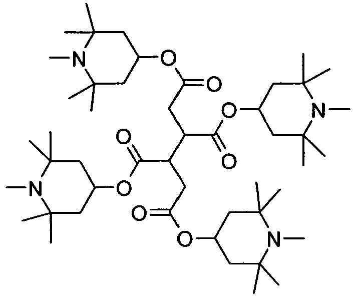 |
| ST-40 | ST-41 |
| 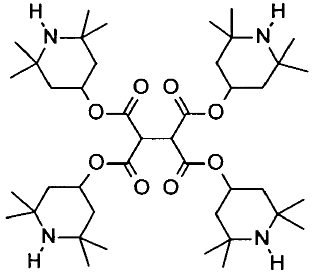 | 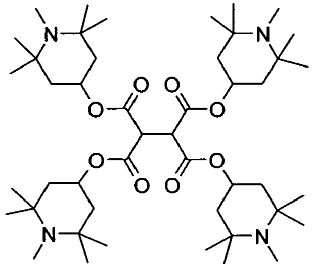 |
| ST-42 | ST-43 |

Bevorzugt ist die dielektrische Anisotropie Δε der Mischung zwischen -1 und -7, besonders bevorzugt zwischen -2 und -6.

Die Mischung, wie oben definiert, kann grundsätzlich in einer beliebigen optischen Schaltvorrichtung verwendet werden. Die optische Schaltvorrichtung kann in Anzeigevorrichtungen oder in schaltbaren Fenstern verwendet werden. Bevorzugt ist die Verwendung in schaltbaren Fenstern, inbesondere in schaltbaren Fenstern, welche ein flüssigkristallines Material mit einem oder mehreren dichroitischen Farbstoffen enthalten.

Bevorzugt ist die Verwendung der erfindungsgemäßen Mischung in einer Vorrichtung zur homogenen Regulierung des Lichtdurchtritts durch ein Flächenelement, insbesondere zur Regulierung des Durchtritts von Sonnenlicht. Die genannte Vorrichtung wird bevorzugt in einem schaltbaren Fenster eingesetzt. Unter homogener Regulierung wird dabei verstanden, dass die Transmission an allen Stellen innerhalb des Flächenelements weitgehend gleich hoch ist.

Gegenstand der Erfindung ist somit eine Vorrichtung zur homogenen Regulierung des Lichtdurchtritts durch ein Flächenelement, wobei die Vorrichtung die erfindungsgemäße Mischung enthält. Das Flächenelement hat dabei bevorzugt eine Ausdehnung von mindestens 0.05 m², besonders bevorzugt mindestens 0.1 m², besonders bevorzugt mindestens 0.5 m² und ganz besonders bevorzugt mindestens 0.8 m².

Die Mischung liegt in der Vorrichtung zur Regulierung des Lichtdurchtritts durch ein Flächenelement bevorzugt in einer Schicht vor. Diese Schicht ist bevorzugt schaltbar, stellt also eine Schaltschicht dar. Die Schicht weist bevorzugt eine Dicke von 12 bis 40 µm, besonders bevorzugt von 14 bis 30 µm und ganz besonders bevorzugt von 15 bis 25 µm auf.

Die erfindungsgemäße Vorrichtung ist bevorzugt zur Regulierung des Lichtdurchtritts in Form von Sonnenlicht von der Umgebung in einen Raum hinein geeignet. Der Raum kann dabei ein beliebiger weitgehend von der Umgebung abgeschlossener Raum sein, beispielsweise ein Gebäude, ein Fahrzeug, oder ein Container. Die Vorrichtung kann allgemein für beliebige Räume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders bevorzugt ist die Verwendung der Vorrichtung für Räume, welche starker Sonneneinstrahlung durch lichtdurchlässige Flächen, beispielsweise durch Fensterflächen, ausgesetzt sind. Beispiele hierfür sind Räume mit großen Fensterflächen nach außen und die Innenräume von Fahrzeugen, insbesondere von Autos.

Die erfindungsgemäße Vorrichtung ist bevorzugt in einer Öffnung einer größeren flächigen Struktur angeordnet, wobei die flächige Struktur selbst nicht oder nur geringfügig Lichtdurchtritt zulässt, und wobei die Öffnung relativ gesehen lichtdurchlässiger ist. Bevorzugt ist die flächige Struktur eine Wand oder eine sonstige Begrenzung eines Raums nach außen.

Die erfindungsgemäße Vorrichtung ist schaltbar. Unter Schaltung wird dabei eine Änderung des Lichtdurchtritts durch die Vorrichtung verstanden.

Die erfindungsgemäße Vorrichtung ist bevorzugt elektrisch schaltbar. In diesem Fall umfasst sie bevorzugt zwei oder mehr Elektroden, die zu beiden Seiten der Schicht enthaltend die erfindungsgemäße Mischung angebracht sind. Die Elektroden bestehen bevorzugt aus ITO oder aus einer dünnen, bevorzugt transparenten Metall- und/oder Metalloxidschicht, beispielsweise aus Silber oder FTO (Fluor-dotiertes Zinnoxid) oder einem alternativen, dem Fachmann für diese Verwendung bekannten Material. Die ITO-Elektroden können mit einer Passivierungsschicht, beispielsweise aus SiO₂, ausgestattet sein. Die Elektroden sind bevorzugt mit elektrischen Anschlüssen versehen. Die Spannung wird bevorzugt durch eine Batterie, einen Akkumulator, oder durch externe Stromversorgung bereitgestellt.

Der Schaltvorgang erfolgt im Fall von elektrischer Schaltung durch eine Ausrichtung der Moleküle der Mischung im flüssigkristallinen Zustand durch das Anlegen von Spannung.

In einer bevorzugten Ausführungsform wird dabei die Vorrichtung durch Anlegen einer Spannung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist die Mischung in der Schicht in der Vorrichtung in beiden Zuständen nematisch flüssigkristallin. Der spannungslose Zustand ist bevorzugt dadurch gekennzeichnet, dass die Moleküle der Mischung im flüssigkristallinen Zustand, und damit die Moleküle des Farbstoffs, parallel zur Ebene der Schaltschicht ausgerichtet vorliegen. Dies wird bevorzugt durch eine entsprechend gewählte Orientierungsschicht erreicht. Besonders bevorzugt liegen sie in einem verdrillt nematischen Zustand parallel zur Ebene der Schaltschicht vor. Der Verdrillungswinkel beträgt bevorzugt weniger als eine vollständige Umdrehung, besonders bevorzugt zwischen 30 und 270°, ganz besonders bevorzugt zwischen 100° und 260°, noch stärker bevorzugt zwischen 160 und 255° und am stärksten bevorzugt zwischen 230 und 250°. Der Zustand unter Spannung ist bevorzugt dadurch gekennzeichnet, dass die Moleküle der Mischung im flüssigkristallinen Zustand, und damit die Moleküle des Farbstoffs, senkrecht zur Ebene der Schaltschicht vorliegen.

Gemäß einer bevorzugten Ausführungsform der Erfindung kann die Vorrichtung ohne externe Stromversorgung betrieben werden, indem die nötige Energie durch eine Solarzelle oder eine sonstige Vorrichtung zur Umwandlung von Licht und/oder Wärmeenergie in elektrische Energie bereitgestellt wird, die mit der Vorrichtung verbunden ist. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innerer Bestandteil der Vorrichtung, wie beispielsweise in WO 2009/141295 offenbart.

Die erfindungsgemäße Vorrichtung weist bevorzugt die folgende Schichtenabfolge auf, wobei zusätzlich weitere Schichten vorhanden sein können. Bevorzugt grenzen die im Folgenden angegebenen Schichten in der Vorrichtung direkt aneinander.
- Substratschicht, bevorzugt aus Glas oder Polymer
- elektrisch leitfähige transparente Schicht, bevorzugt aus ITO
- Orientierungsschicht
- Schaltschicht, enthaltend die erfindungsgemäße Mischung
- Orientierungsschicht
- elektrisch leitfähige transparente Schicht, bevorzugt aus ITO
- Substratschicht, bevorzugt aus Glas oder Polymer.

Die bevorzugten Ausführungsformen der einzelnen Schichten werden im Folgenden dargestellt.

Bevorzugt umfasst die erfindungsgemäße Vorrichtung eine oder mehrere, besonders bevorzugt zwei Orientierungsschichten. Die Orientierungsschichten liegen bevorzugt direkt angrenzend an die beiden Seiten der Schicht enthaltend die erfindungsgemäße Mischung vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle der Mischung im flüssigkristallinen Zustand in Reiberichtung, wenn die Moleküle parallel zur Orientierungsschicht vorliegen (planare Ausrichtung). Dabei ist es bevorzugt, dass die Moleküle der Mischung im flüssigkristallinen Zustand nicht völlig planar auf der Orientierungsschicht vorliegen, sondern einen leichten Aufstellwinkel aufweisen (pretilt). Zum Erreichen von vertikaler Ausrichtung der Moleküle zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Moleküle gemäß einer Orientierungsachse verwendet werden (photoalignment).

Es ist bevorzugt, dass in der erfindungsgemäßen Vorrichtung die Reiberichtungen der beiden Orientierungsschichten, die die Schaltschicht enthaltend die erfindungsgemäße Mischung umgeben, einen Winkel von 30° bis 270° einschließen.

Weiterhin bevorzugt ist in der erfindungsgemäßen Vorrichtung die Schicht enthaltend die erfindungsgemäße Mischung zwischen zwei Substratschichten angeordnet bzw. von diesen eingeschlossen. Die Substratschichten können beispielsweise aus Glas oder einem Polymer, bevorzugt einem lichtdurchlässigen Polymer, bestehen.

Bevorzugt ist die Vorrichtung dadurch gekennzeichnet, dass sie keinen Polarisator auf Polymerbasis, besonders bevorzugt keinen in fester Materiephase vorliegenden Polarisator und ganz besonders bevorzugt überhaupt keinen Polarisator umfasst.

Die Vorrichtung kann jedoch gemäß einer alternativen Ausführungsform auch einen oder mehrere Polarisatoren aufweisen. Bevorzugt sind die Polarisatoren in diesem Fall Linearpolarisatoren.

Weiterhin bevorzugt enthält erfindungsgemäße Vorrichtung ein Lichtleitsystem, das Licht zu einer Solarzelle oder einer sonstigen Vorrichtung zur Umwandlung von Licht und/oder Wärmeenergie in elektrische Energie leitet, bevorzugt wie in WO 2009/141295 beschrieben.

In einer bevorzugten Ausführungsform ist die erfindungsgemäße Vorrichtung Bestandteil eines in seiner Lichtdurchlässigkeit schaltbaren Fensters, besonders bevorzugt eines Fensters enthaltend mindestens eine Glasfläche, ganz besonders bevorzugt eines Fensters, welches Mehrscheiben-Isolierglas enthält.

Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas).

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

### Ausführungsbeispiele

Im Folgenden werden Strukturen von flüssigkristallinen Verbindungen durch Abkürzungen wiedergegeben (Akronyme). Diese Abkürzungen werden in WO 2012/052100 explizit vorgestellt und erklärt (S. 63 - 89), so dass zur Erläuterung der Abkürzungen in der vorliegenden Erfindung auf die genannte offengelegte Anmeldung verwiesen wird.
Darüber hinaus werden folgende Akronyme verwendet:

| | |
|---|---|
| 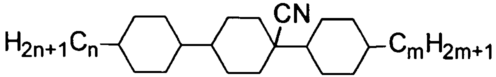 | BCN-nm |
| 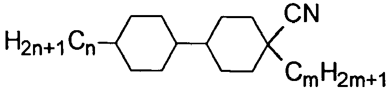 | CCN-nm |

Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C.

### A) Verwendete flüssigkristalline Mischungen

Die folgenden erfindungsgemäßen Mischungen werden hergestellt:

| **M-1** | | |
|---|---|---|
| CIp | 115.5 | |
| Δ n (20°C, 589.3nm) | 0.0475 | |
| nₑ (20°C, 589.3nm) | 1.5252 | |
| nₒ (20°C, 589.3nm) | 1.4777 | |
| Δε (20°C, 1kHz) | -5.6 | |
| ε_parallel (20°C, 1kHz) | 3.4 | |
| ε_senkrecht (20°C, 1kHz) | 9.0 | |

| Zusammensetzung | Verbindung | % |
|---|---|---|
| | CCN-47 | 14 |
| | CCN-55 | 14 |
| | CCN-33 | 2 |
| | CCZC-3-3 | 3 |
| | CCZC-3-5 | 3 |
| | CC-3-O1 | 11 |
| | CC-5-O1 | 5 |
| | CC-5-O2 | 4 |
| | CCY-3-O2 | 3 |
| | CCY-5-O2 | 3 |
| | BCN-35 | 12 |
| | BCN-55 | 14 |
| | BCN-53 | 12 |

| **M-2** | | |
|---|---|---|
| CIp | 114.6 | |
| Δ n (20°C, 589.3nm) | 0.0454 | |
| nₑ (20°C, 589.3nm) | 1.5230 | |
| nₒ (20°C, 589.3nm) | 1.4776 | |
| Δε (20°C, 1kHz) | -5.2 | |
| ε_parallel (20°C, 1kHz) | 3.33 | |
| ε_senkrecht (20°C, 1kHz) | 8.49 | |

| Zusammensetzung | Verbindung | % |
|---|---|---|
| | CCN-47 | 14 |
| | CCN-55 | 14 |
| | CCN-33 | 6 |
| | CCZC-3-3 | 3 |
| | CCZC-3-5 | 3 |
| | CCZC-4-3 | 3 |
| | CCZC-4-5 | 3 |
| | CC-3-O1 | 11 |
| | CC-5-O1 | 4 |
| | CC-5-O2 | 4 |
| | BCN-35 | 10 |
| | BCN-55 | 12 |
| | BCN-53 | 10 |
| | CCZPC-3-3 | 3 |

| **M-3** | | |
|---|---|---|
| CIp | 113.0 | |
| Δ n (20°C, 589.3nm) | 0.0499 | |
| nₑ (20°C, 589.3nm) | 1.5299 | |
| nₒ (20°C, 589.3nm) | 1.4800 | |
| Δε (20°C, 1kHz) | -5.1 | |
| ε_parallel (20°C, 1kHz) | 3.26 | |
| ε_senkrecht (20°C, 1kHz) | 8.37 | |

| Zusammensetzung | Verbindung | % |
|---|---|---|
| | CCN-47 | 14 |
| | CCN-55 | 14 |
| | CCN-33 | 5 |
| | CCZC-3-3 | 2 |
| | CCZC-3-5 | 3 |
| | CC-2-3 | 6 |
| | CC-3-4 | 5 |
| | CP-3-O2 | 11 |
| | BCN-35 | 11 |
| | BCN-55 | 14 |
| | BCN-53 | 11 |
| | CCZCC-2-3 | 2 |
| | CCZCC-3-2 | 2 |

| **M-4** | | |
|---|---|---|
| CIp | 114.0 | |
| Δ n (20°C, 589.3nm) | 0.0518 | |
| nₑ (20°C, 589.3nm) | 1.5317 | |
| nₒ (20°C, 589.3nm) | 1.4799 | |
| Δε (20°C, 1kHz) | -4.9 | |
| ε_parallel (20°C, 1kHz) | 3.32 | |
| ε_senkrecht (20°C, 1kHz) | 8.17 | |

| Zusammensetzung | Verbindung | % |
|---|---|---|
| | CCN-47 | 14 |
| | CCN-55 | 14 |
| | CCN-33 | 5 |
| | CCZC-3-3 | 2 |
| | CCZC-3-5 | 3 |
| | CCZC-4-3 | 2 |
| | CC-3-O1 | 6 |
| | CC-5-O1 | 5 |
| | CP-3-O2 | 11 |
| | BCN-35 | 9 |
| | BCN-55 | 12 |
| | BCN-53 | 9 |
| | CCZCC-2-3 | 2 |
| | CCZCC-3-2 | 2 |
| | CCZPC-3-3 | 2 |
| | CCZPC-3-4 | 2 |

| **M-5** | | |
|---|---|---|
| CIp | 111.0 | |
| Δ n (20°C, 589.3nm) | 0.0450 | |
| nₑ (20°C, 589.3nm) | 1.5224 | |
| nₒ (20°C, 589.3nm) | 1.4774 | |
| Δε (20°C, 1kHz) | -4.9 | |
| ε_parallel (20°C, 1kHz) | 3.24 | |
| ε_senkrecht (20°C, 1kHz) | 8.10 | |

| Zusammensetzung | Verbindung | % |
|---|---|---|
| | CCN-47 | 14 |
| | CCN-55 | 14 |
| | CCN-33 | 5 |
| | CCZC-3-3 | 3 |
| | CCZC-3-5 | 3 |
| | CCZC-4-3 | 3 |
| | CCZC-4-5 | 3 |
| | CC-2-3 | 6 |
| | CC-3-4 | 5 |
| | CC-3-O1 | 11 |
| | BCN-35 | 10 |
| | BCN-55 | 12 |
| | BCN-53 | 10 |
| | CCZPC-3-3 | 2 |

| **M-6** | | |
|---|---|---|
| CIp | 116.0 | |
| Δ n (20°C, 589.3nm) | 0.0448 | |
| nₑ (20°C, 589.3nm) | 1.5240 | |
| nₒ (20°C, 589.3nm) | 1.4792 | |
| Δε (20°C, 1kHz) | -5.4 | |
| ε_parallel (20°C, 1kHz) | 3.42 | |
| ε_senkrecht (20°C, 1kHz) | 8.80 | |

| Zusammensetzung | Verbindung | % |
|---|---|---|
| | CCN-47 | 15 |
| | CCN-55 | 15 |
| | CCN-33 | 11 |
| | CC-3-O1 | 11 |
| | CC-5-O1 | 5 |
| | CC-5-O2 | 2 |
| | CCZCC-2-3 | 2 |
| | CCZCC-3-2 | 2 |
| | CCZCC-4-2 | 2 |
| | BCN-35 | 10 |
| | BCN-55 | 10 |
| | BCN-53 | 8 |
| | CCZPC-3-3 | 3 |
| | CCZPC-3-4 | 2 |
| | CCZPC-3-5 | 2 |

| **M-7** | | |
|---|---|---|
| CIp | 113.0 | |
| Δ n (20°C, 589.3nm) | 0.0443 | |
| nₑ (20°C, 589.3nm) | 1.5227 | |
| nₒ (20°C, 589.3nm) | 1.4784 | |
| Δε (20°C, 1kHz) | -5.4 | |
| ε_parallel (20°C, 1kHz) | 3.41 | |
| ε_{⊥}(20°C, 1kHz) | 8.82 | |

| Zusammensetzung | Verbindung | % |
|---|---|---|
| | CCN-47 | 15 |
| | CCN-55 | 15 |
| | CCN-33 | 11 |
| | CCZC-3-3 | 3 |
| | CCZC-3-5 | 3 |
| | CCZC-4-3 | 3 |
| | CCZC-4-5 | 3 |
| | CC-3-O1 | 11 |
| | CC-5-O1 | 2 |
| | BCN-35 | 14 |
| | BCN-55 | 14 |
| | CCOCC-3-2 | 2 |
| | CCOCC-2-3 | 2 |
| | CCOCC-4-2 | 2 |

| **M-8** | | |
|---|---|---|
| CIp | 117,5 | |
| nₑ (20°C, 589.3nm) | 1,5222 | |
| nₒ (20°C, 589.3nm) | 1,4779 | |
| Δ n (20°C, 589.3nm) | 0,0443 | |
| ε_parallel (20°C, 1kHz) | 3,39 | |
| ε_senkrecht (20°C, 1kHz) | 8,94 | |
| Δε (20°C, 1kHz) | -5,5 | |

| Zusammensetzung | Verbindung | % |
|---|---|---|
| | CCN-47 | 15 |
| | CCN-55 | 15 |
| | CCN-33 | 8 |
| | CC-3-O1 | 11 |
| | CC-5-O1 | 5 |
| | CCZC-3-3 | 3 |
| | CCZC-3-5 | 3 |
| | CCZCC-2-3 | 2 |
| | CCZCC-3-2 | 2 |
| | CCZCC-4-2 | 2 |
| | CCZCC-4-3 | 2 |
| | BCN-35 | 16 |
| | BCN-55 | 16 |

| **M-9 (Referenz)** | | |
|---|---|---|
| Clp (°C) | 111 | |
| Δ n (20°C, 589.3nm) | 0.068 | |
| Δε (20°C, 1kHz) | -5.1 | |

| Zusammensetzung | Verbindung | % |
|---|---|---|
| | CCN-47 | 15 |
| | CCN-55 | 15 |
| | CY-3-O4 | 11 |
| | CCY-3-O2 | 8 |
| | CCY-3-O3 | 9 |
| | CCY-5-O2 | 10 |
| | CCY-3-1 | 4 |
| | CCZC-3-3 | 3 |
| | CCZC-3-5 | 3 |
| | CCZC-4-3 | 3 |
| | CC-3-O1 | 11 |
| | CCZCC-2-3 | 2 |
| | CCZCC-3-2 | 2 |
| | CCZCC-4-2 | 2 |
| | CCZCC-4-3 | 2 |

| **M-10** | | |
|---|---|---|
| Clp | 127 | |
| Δ n (20°C, 589.3nm) | 0.060 | |
| Δε (20°C, 1kHz) | -4.6 | |

| Zusammensetzung | Verbindung | % |
|---|---|---|
| | CY-3-O4 | 12 |
| | CCY-3-O2 | 8 |
| | CCY-5-O2 | 9 |
| | CCZC-3-3 | 3 |
| | CCZC-3-5 | 2 |
| | CC-3-O1 | 11 |
| | CC-5-O1 | 10 |
| | CC-5-O2 | 5 |
| | BCN-35 | 16 |
| | BCN-55 | 16 |
| | CCZPC-3-3 | 2 |
| | CCZCC-2-3 | 2 |
| | CCZCC-3-2 | 2 |
| | CCZCC-4-2 | 2 |

| **M-11** | | |
|---|---|---|
| Clp (°C) | 115 | |
| Δ n (20°C, 589.3nm) | 0.053 | |
| Δε (20°C, 1kHz) | -3.9 | |

| Zusammensetzung | Verbindung | % |
|---|---|---|
| | CY-3-O4 | 12 |
| | CCY-3-O2 | 8 |
| | CCZC-3-3 | 3 |
| | CCZC-3-5 | 2 |
| | CCZC-4-3 | 2 |
| | CCZC-4-5 | 2 |
| | CC-3-O1 | 9 |
| | CC-3-O3 | 9 |
| | CC-5-O1 | 10 |
| | CC-5-O2 | 5 |
| | BCN-35 | 16 |
| | BCN-55 | 16 |
| | CCZPC-3-3 | 2 |
| | CCZCC-2-3 | 2 |
| | CCZCC-3-2 | 2 |

| **M-12** | | |
|---|---|---|
| Clp (°C) | 117.5 | |
| Δ n (20°C, 589.3nm) | 0.0443 | |
| Δε (20°C, 1kHz) | -5.5 | |

| Zusammensetzung | Verbindung | % |
|---|---|---|
| | CCN-47 | 15 |
| | CCN-55 | 15 |
| | CCN-33 | 8 |
| | CCZC-3-3 | 3 |
| | CCZC-3-5 | 3 |
| | CC-3-O1 | 11 |
| | CC-5-O1 | 5 |
| | CCZCC-2-3 | 2 |
| | CCZCC-3-2 | 2 |
| | CCZCC-4-2 | 2 |
| | CCZCC-4-3 | 2 |
| | BCN-35 | 16 |
| | BCN-55 | 16 |

| **M-13** | | |
|---|---|---|
| Clp (°C) | 108 | |
| Δ n (20°C, 589.3nm) | 0.061 | |
| Δε (20°C, 1kHz) | -5.6 | |

| Zusammensetzung | Verbindung | % |
|---|---|---|
| | CCN-47 | 15 |
| | CCN-55 | 15 |
| | CCY-3-O3 | 3 |
| | CCY-3-O2 | 8 |
| | CCY-5-O2 | 10 |
| | CY-3-O4 | 9 |
| | CCZC-3-3 | 3 |
| | CCZC-3-5 | 3 |
| | CC-3-O1 | 11 |
| | CC-5-O1 | 4 |
| | BCN-55 | 15 |
| | CCZPC-3-3 | 2 |
| | CCZPC-3-4 | 2 |

| **M-14** | | |
|---|---|---|
| Clp (°C) | 108 | |
| Δ n (20°C, 589.3nm) | 0.060 | |
| Δε (20°C, 1kHz) | -5.4 | |

| Zusammensetzung | Verbindung | % |
|---|---|---|
| | CCN-47 | 15 |
| | CCN-55 | 15 |
| | CCY-3-O2 | 8 |
| | CY-3-O2 | 12 |
| | CCZC-3-3 | 3 |
| | CC-3-O1 | 11 |
| | BCN-35 | 16 |
| | BCN-55 | 16 |
| | CCZPC-3-3 | 2 |
| | CCZPC-3-4 | 2 |

| **M-15** | | |
|---|---|---|
| Clp (°C) | 107 | |
| Δ n (20°C, 589.3nm) | 0.054 | |
| Δε (20°C, 1kHz) | -6.5 | |

| Zusammensetzung | Verbindung | % |
|---|---|---|
| | CCN-47 | 15 |
| | CCN-55 | 15 |
| | CCY-3-O2 | 8 |
| | CCY-5-O2 | 10 |
| | CY-3-O2 | 12 |
| | CCZC-3-3 | 3 |
| | CC-3-O1 | 11 |
| | BCN-35 | 11 |
| | BCN-55 | 11 |
| | CCZPC-3-3 | 2 |
| | CCZPC-3-4 | 2 |

| **M-16** | | |
|---|---|---|
| Clp (°C) | 112 | |
| Δ n (20°C, 589.3nm) | 0.051 | |
| Δε (20°C, 1kHz) | -5.4 | |

| Zusammensetzung | Verbindung | % |
|---|---|---|
| | CCN-47 | 15 |
| | CCN-55 | 15 |
| | CCY-3-O2 | 8 |
| | CCZC-3-3 | 3 |
| | CC-3-O1 | 11 |
| | CC-5-O1 | 9 |
| | CC-5-O2 | 3 |
| | BCN-35 | 16 |
| | BCN-55 | 16 |
| | CCZPC-3-3 | 2 |
| | CCZPC-3-4 | 2 |

### B) Verwendete Farbstoffe

| |
|---|
| 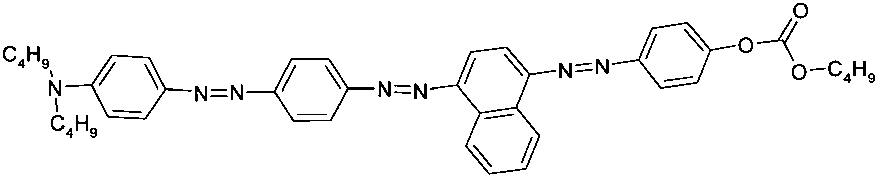 |
| D1 |
| 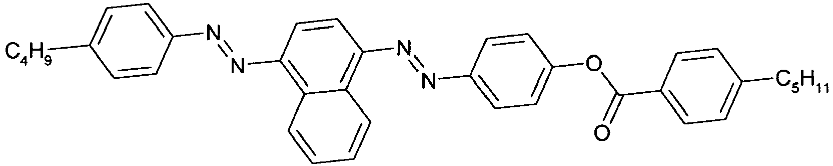 |
| D2 |
| 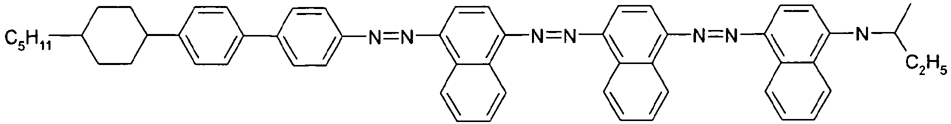 |
| D3 |

### C) Messung der Lagerstabilität der Mischungen

Die hergestellten Mischungen weisen eine hohe Lagerstabilität bei tiefen Temperaturen auf. Die Lagerstabilität wird bestimmt, indem die Proben bei der betreffenden Temperatur gelagert werden, und die Zeitdauer bestimmt wird, während der keine sichtbare Kristallisation oder Zersetzung auftritt. Es werden die folgenden Daten für die Lagerstabilität gemessen:

| M-2 | |
|---|---|
| Lagerstabilität (Bulk, -20°C) | > 214 Tage |
| Lagerstabilität (Bulk, -30°C) | > 214 Tage |
| Lagerstabilität (Bulk, -40°C) | 53 Tage |
| | |

| M-3 | |
|---|---|
| Lagerstabilität (Bulk, -20°C) | > 214 Tage |
| Lagerstabilität (Bulk, -30°C) | > 214 Tage |
| Lagerstabilität (Bulk, -40°C) | 96 Tage |
| | |

| M-4 | |
|---|---|
| Lagerstabilität (Bulk, -20°C) | > 214 Tage |
| Lagerstabilität (Bulk, -30°C) | > 214 Tage |
| Lagerstabilität (Bulk, -40°C) | 120 Tage |
| | |

| M-5 | |
|---|---|
| Laqerstabilität (Bulk, -20°C) | > 209 Tage |
| Lagerstabilität (Bulk, -30°C) | > 209 Tage |
| Lagerstabilität (Bulk, -40°C) | 59 Tage |
| | |

| M-6 | |
|---|---|
| Lagerstabilität (Bulk, -20°C) | > 209 Tage |
| Lagerstabilität (Bulk, -30°C) | > 209 Tage |
| Lagerstabilität (Bulk, -40°C) | > 209 Tage |
| | |

| M-8 | |
|---|---|
| Lagerstabilität (Bulk, -20°C) | > 204 Tage |
| Lagerstabilität (Bulk, -30°C) | > 204 Tage |
| Lagerstabilität (Bulk, -40°C) | > 204 Tage |

### D) Verwendungsbeispiele

Es werden Schaltvorrichtungen enthaltend die erfindungsgemäßen Mischungen hergestellt. Diese weisen die folgende Schichtabfolge auf:
a) Glasschicht aus poliertem 1.1 mm Soda-Lime-Glas von Corning
b) ITO-Schicht, 200 Angström
c) Orientierungsschicht O1 aus Polyimid JALS-2096-R1 von JSR, gerieben
d) Schaltbare Schicht mit flüssigkristallinem Medium (Zusammensetzung und Dicke unten bei den entsprechenden Beispielen angegeben)
e) Orientierungsschicht O2, wie c) aufgebaut; in unten angegebenem Winkel zur Reiberichtung der Schicht c) gerieben
f) wie b)
g) wie a)

Die ITO-Schichten werden entsprechend kontaktiert, um elektrisch schaltbar zu sein.

### Beispiel 1:

98.57% von Mischung M-12 werden mit 0,33% D1, 0.50% D2 und 0.60% D3 versetzt. Von dieser Mischung werden 99,476 % mit 0,524 % chiralem Dotierstoff S-811 versetzt. Der Pitch beträgt 23.1 µm.

Die Mischung wird in die oben beschriebene Vorrichtung mit einer Schichtdicke von 15.4 µm gefüllt. Der Tiltwinkel der Zelle beträgt: 88.5° relativ zur Substratebene. Die Verdrillung (Winkel zwischen den Reiberichtungen von O1 und O2) beträgt 240°.

Für die Vorrichtung werden die folgenden Werte für den Lichttransmissionsgrad bei einer Betriebstemperatur von 20°C erhalten:

| **τ_{V} Dunkelzustand [%]** | **τ_{V} Hellzustand [%]** | **Δτ_{V} [%]** |
|---|---|---|
| 22.9 | 72.7 | 49.8 |

Der Lichttransmissionsgrad τ_{V} wird nach der Europäischen Norm EN410, Gleichung (1) (Bestimmung der lichttechnischen und strahlungsphysikalischen Kenngrößen von Verglasungen) ermittelt aus den gemessenen spektralen Transmissionsgraden unter Berücksichtigung der relativen spektralen Verteilung der Normlichtart und des spektralen Hellempfindlichkeitsgrads des Normalbeobachters.

Das Beispiel zeigt einen hohen Hub des Lichttransmissionsgrads (Δτ_{V}) von 49,8%. Es sind nur wenige sichtbare Streifen aus der Glaswelligkeit und nur wenige Partikeldefekte zu erkennen.

### Beispiel 2:

97,35% von Mischung M-2 werden mit 0.6% D1, 0.85% D2 und 1.2% D3 versetzt. Von dieser Mischung werden 99,478 % mit 0,522 % chiralem Dotierstoff S-811 versetzt. Der Pitch beträgt 22.4 µm.

Die Mischung wird in die oben beschriebene Vorrichtung mit einer Schichtdicke von 15 µm gefüllt. Der Tiltwinkel der Zelle beträgt: 88° relativ zur Substratebene. Die Verdrillung (Winkel zwischen den Reiberichtungen von O1 und O2) beträgt 240°.

Für die Vorrichtung werden die folgenden Werte für den Lichttransmissionsgrad bei Betriebstemperaturen zwischen 20°C und 100°C erhalten:

| **Temperatur** | **τ_{V} Hellzustand [%]** | **τ_{V} Dunkelzustand [%]** | **Δτ_{V} [%]** |
|---|---|---|---|
| 20°C | 48.0 | 10.0 | 38.0 |
| 40°C | 45.2 | 9.6 | 35.6 |
| 60°C | 41.7 | 10.7 | 31.0 |
| 80°C | 37.2 | 11.0 | 26.2 |
| 100°C | 30.5 | 9.7 | 20.8 |

Dieses Beispiel zeigt, dass mit den erfindungsgemäßen Mischungen innerhalb eines breiten Temperaturbereichs, insbesondere bei Temperaturen von 100°C, die Funktionsfähigkeit der Vorrichtungen erhalten bleibt, insbesondere weitgehend konstante Werte für die Lichttransmission im Hell- und Dunkelzustand erhalten bleiben.

## Patentansprüche

1. Mischung, enthaltend eine oder mehrere Verbindungen, die einer Formel (1) oder einer Formel (2) entsprechen 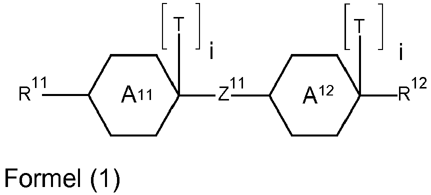 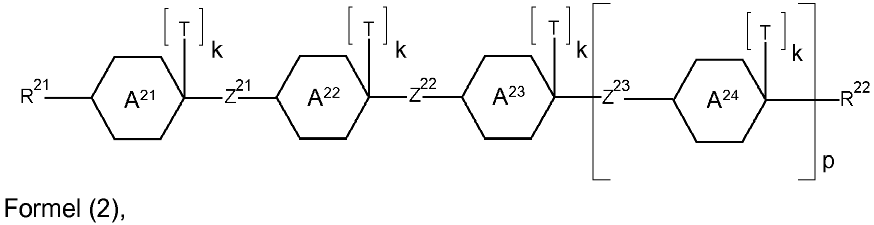 wobei für die auftretenden Variablen gilt:
A¹¹, A¹², A²¹, A²², A²³, A²⁴ sind gewählt aus 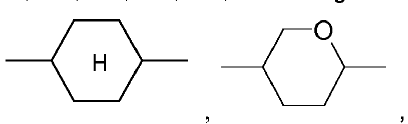 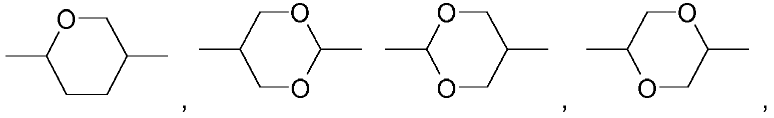 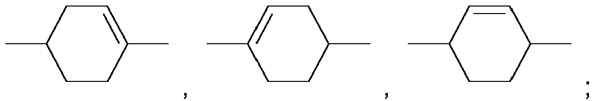
Z¹¹, Z²¹, Z²², Z²³ sind gewählt aus Einfachbindung, -(C=O)-O-, -O-(C=O)-, -CF₂-O-, -O-CF₂-, -O-CH₂-, -CH₂-O-, und -CH₂-CH₂-;
R¹¹, R¹², R²¹, R²² sind bei jedem Auftreten gleich oder verschieden gewählt aus H, F, Cl, CN, NCS, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, und Alkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können;
T ist gewählt aus -CN, F, -N₃, -NCS, NO₂, -C≡C-R³, Alkylgruppen mit 1 bis 10 C-Atomen, und Alkoxygruppen mit 1 bis 10 C-Atomen, wobei in den Alkyl- und Alkoxygruppen eine oder mehrere H-Atome durch F, Cl oder CN ersetzt sein können;
R³ ist gewählt aus H, CN, Alkylgruppen mit 1 bis 10 C-Atomen, wobei in den Alkylgruppen eine oder mehrere C-Atome durch F, Cl oder CN ersetzt sein können, und -C≡C-R⁴;
R⁴ ist gewählt aus H, CN, und Alkylgruppen mit 1 bis 10 C-Atomen, wobei in den Alkylgruppen eine oder mehrere C-Atome durch F, Cl oder CN ersetzt sein können;
i ist bei jedem Auftreten gleich oder verschieden 0 oder 1, wobei die Summe der Indices i in einer Formel mindestens gleich 1 ist;
k ist bei jedem Auftreten gleich oder verschieden 0 oder 1, wobei die Summe der Indices k in einer Formel mindestens gleich 1 ist;
p ist gleich 0 oder 1;
und eine oder mehrere Verbindungen gemäß Formel (3) 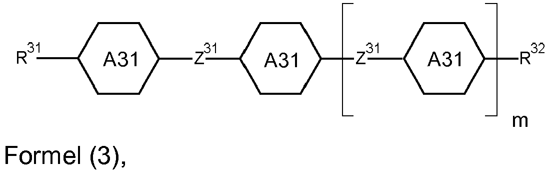
wobei für die auftretenden Variablen gilt:
A31 ist bei jedem Auftreten gleich oder verschieden gewählt aus 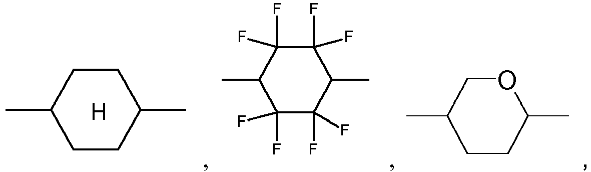 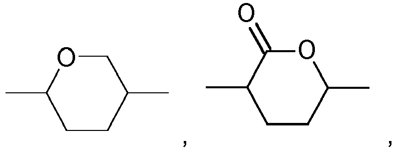 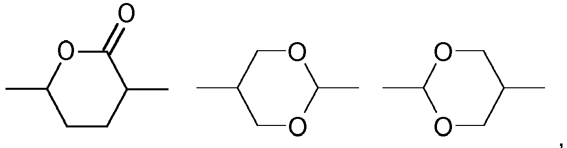 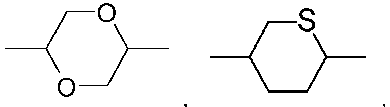 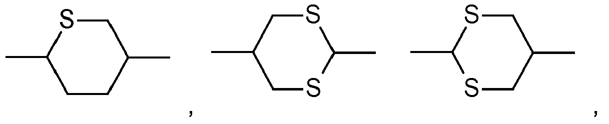 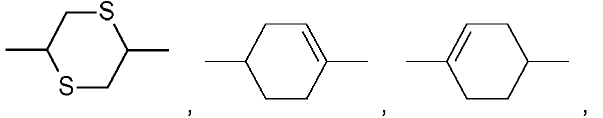 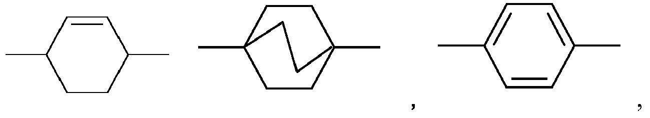 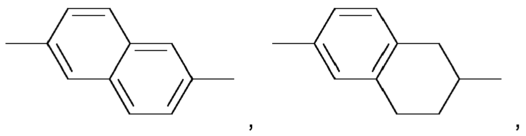 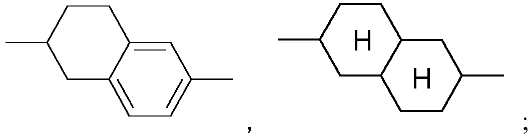
R³¹ und R³² sind bei jedem Auftreten gleich oder verschieden gewählt aus H, F, Cl, CN, NCS, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, und Alkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können;
Z³¹ ist bei jedem Auftreten gleich oder verschieden gewählt aus einer Einfachbindung, -(C=O)-O-, -O-(C=O)-, -CF₂-O-, -O-CF₂-, -O-CH₂-, -CH₂-O-, und -CH₂-CH₂-;
m ist gleich 0, 1, 2 oder 3;
wobei die Summe der Anteile der Verbindungen gemäß Formel (1), der Verbindungen gemäß Formel (2) und der Verbindungen gemäß Formel (3) in der Mischung mindestens 58% beträgt,
wobei der Wert für die Anisotropie des Brechungsindex Δn der Mischung unter 0,065 liegt,
wobei die Mischung einen Klärpunkt von mindestens 105°C hat,
und wobei eine oder beide der folgenden Bedingungen a) und b) erfüllt sind:
a) die Mischung enthält eine oder mehrere Verbindungen V, die vier oder mehr Ringe enthalten,
b) die Mischung enthält einen Anteil von mindestens 25 % an Verbindungen gemäß Formel (2).

2. Mischung nach Anspruch 1, **dadurch gekennzeichnet, dass** die Verbindung der Formel (1) der Formel (1-1) entspricht 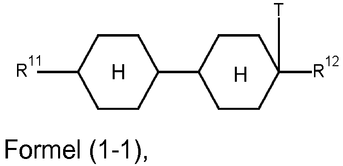 wobei T, R¹¹ und R¹² definiert sind wie in Anspruch 1.

3. Mischung nach Anspruch 1 oder 2, **dadurch gekennzeichnet, dass** die Verbindung der Formel (2) der Formel (2-1), (2-2), (2-3) oder (2-4) entspricht 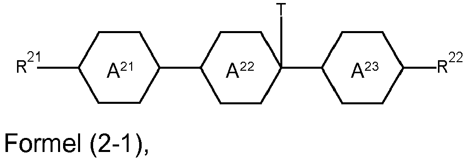 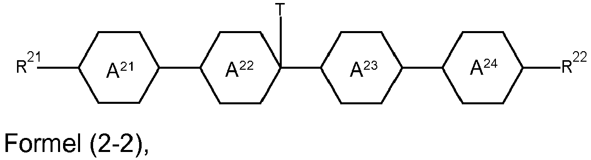 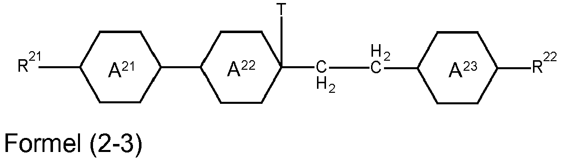 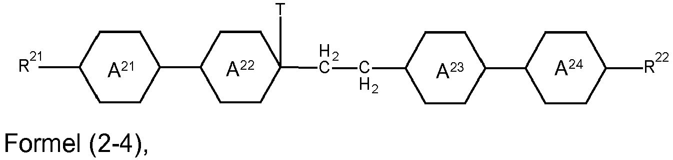 wobei R²¹, R²², A²¹, A²², A²³, A²⁴ und T definiert sind wie in Anspruch 1.

4. Mischung nach einem oder mehreren der Ansprüche 1 bis 3, **dadurch gekennzeichnet, dass** die Verbindung der Formel (2) einer Formel (2-1-1) entspricht 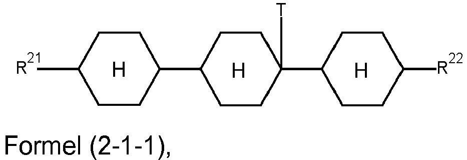 wobei R²¹, R²² und T definiert sind wie in Anspruch 1.

5. Mischung nach Anspruch 4, **dadurch gekennzeichnet, dass** sie einen Anteil von mindestens 25% an Verbindungen gemäß Formel (2-1-1) aufweist.

6. Mischung nach einem oder mehreren der Ansprüche 1 bis 5, **dadurch gekennzeichnet, dass** die Verbindung V einer Formel (V-1) entspricht 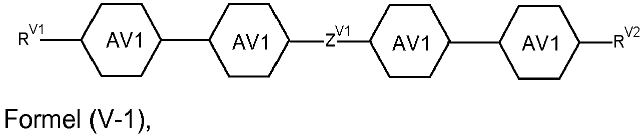 wobei
Z^{V1} gewählt ist aus -(C=O)-O- und -CH₂-O-, und wobei
AV1 bei jedem Auftreten gleich oder verschieden gewählt ist aus 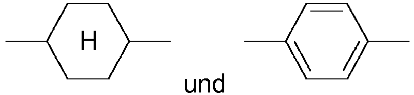 , und wobei
R^{V1} und R^{V2} bei jedem Auftreten gleich oder verschieden gewählt sind aus H, F, Cl, CN, NCS, Alkylgruppen mit 1 bis 10 C-Atomen, Alkoxygruppen mit 1 bis 10 C-Atomen, Thioalkoxygruppen mit 1 bis 10 C-Atomen, Alkenylgruppen mit 2 bis 10 C-Atomen, und Alkenyloxygruppen mit 2 bis 10 C-Atomen, wobei ein oder mehrere H-Atome in den Alkyl-, Alkoxy-, Thioalkoxy-, Alkenyl- und Alkenyloxygruppen durch F, Cl oder CN ersetzt sein können.

7. Mischung nach einem oder mehreren der Ansprüche 1 bis 6, **dadurch gekennzeichnet, dass** die Verbindung der Formel (3) einer der Formeln (3-A), (3-B) und (3-C) entspricht 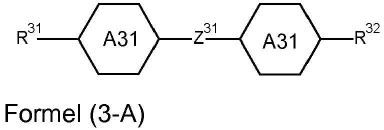 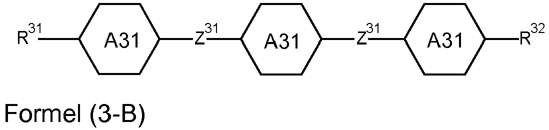 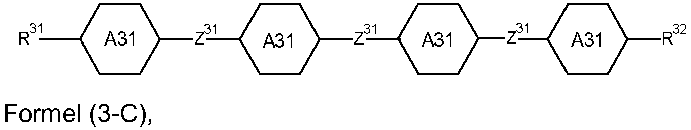 wobei R³¹, R³², Z³¹ und A³¹ definiert sind wie in Anspruch 1.

8. Mischung nach einem oder mehreren der Ansprüche 1 bis 7, **dadurch gekennzeichnet, dass** in Formel (3) bzw. (3-A), (3-B) und (3-C) A³¹ bei jedem Auftreten gleich oder verschieden gewählt ist aus

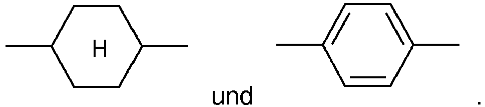

9. Mischung nach einem oder mehreren der Ansprüche 1 bis 8, **dadurch gekennzeichnet, dass** sie eine oder mehrere Verbindungen der Formel (3-1) enthält 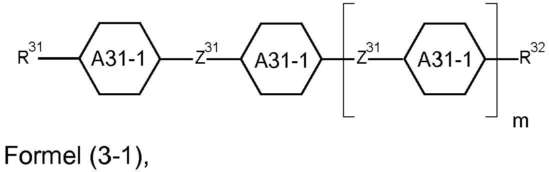 wobei R³¹, R³², Z³¹ und m definiert sind wie in Anspruch 1, und wobei
A³¹⁻¹ bei jedem Auftreten gleich oder verschieden gewählt ist aus

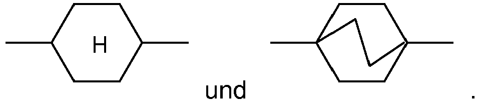

10. Mischung nach einem oder mehreren der Ansprüche 1 bis 9, **dadurch gekennzeichnet, dass** sie sowohl eine oder mehrere Verbindungen der Formel (1) als auch eine oder mehrere Verbindungen der Formel (2) enthält.

11. Mischung nach einem oder mehreren der Ansprüche 1 bis 10, **dadurch gekennzeichnet, dass** Verbindungen der Formel (1) in der Mischung in einem Anteil von mindestens 25% enthalten sind.

12. Mischung nach einem oder mehreren der Ansprüche 1 bis 11, **dadurch gekennzeichnet, dass** Verbindungen der Formel (2) in der Mischung in einem Anteil von mindestens 25% enthalten sind.

13. Mischung nach einem oder mehreren der Ansprüche 1 bis 12, **dadurch gekennzeichnet, dass** die Summe gebildet aus den Anteilen der Verbindungen der Formel (1), der Formel (2) und der Formel (3) mehr als 95% beträgt.

14. Mischung nach einem oder mehreren der Ansprüche 1 bis 13, **dadurch gekennzeichnet, dass** sie einen Anteil von weniger als 60% an Verbindungen enthält, welche einen oder mehrere Benzolringe enthalten.

15. Mischung nach einem oder mehreren der Ansprüche 1 bis 14, **dadurch gekennzeichnet, dass** sie einen oder mehrere Farbstoffe enthält.

16. Mischung nach einem oder mehreren der Ansprüche 1 bis 15, **dadurch gekennzeichnet, dass** sie einen oder mehrere Farbstoffe enthält, die gewählt sind aus Azoverbindungen, Anthrachinonen, Benzothiadiazolen, Diketopyrrolopyrrolen und Rylenen.

17. Optische Schaltvorrichtung, enthaltend eine Schicht, welche eine Mischung nach einem oder mehreren der Ansprüche 1 bis 16 enthält.

18. Schaltbares Fenster, enthaltend eine Schicht, welche eine Mischung nach einem oder mehreren der Ansprüche 1 bis 16 enthält.

## Claims

1. Mixture comprising one or more compounds which conform to a formula (1) or a formula (2), 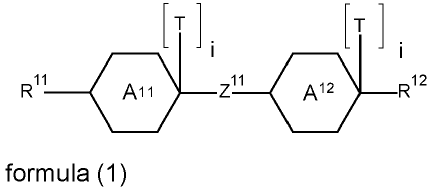 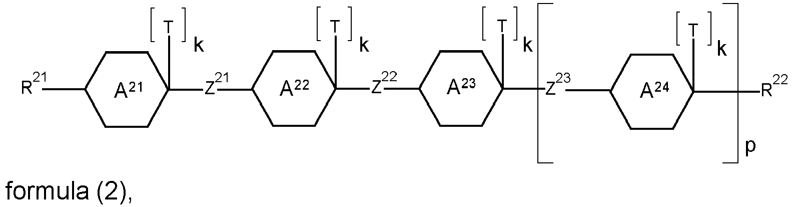 where the following applies to the variables occurring:
A11, A12, A21, A22, A23, A24 are selected from 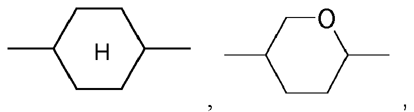 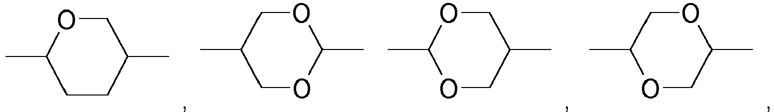 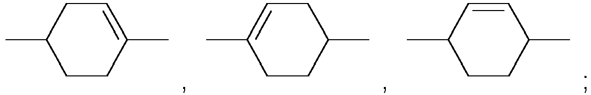
Z¹¹, Z²¹, Z²², Z²³ are selected from a single bond, -(C=O)-O-, -O-(C=O)-, -CF₂-O-, -O-CF₂-, -O-CH₂-, -CH₂-O- and -CH₂-CH₂-;
R¹¹, R¹², R²¹, R²² are selected on each occurrence, identically or differently, from H, F, Cl, CN, NCS, alkyl groups having 1 to 10 C atoms, alkoxy groups having 1 to 10 C atoms, thioalkoxy groups having 1 to 10 C atoms, alkenyl groups having 2 to 10 C atoms and alkenyloxy groups having 2 to 10 C atoms, where one or more H atoms in the alkyl, alkoxy, thioalkoxy, alkenyl and alkenyloxy groups may be replaced by F, Cl or CN;
T is selected from -CN, F, -N₃, -NCS, NO₂, -C≡C-R³, alkyl groups having 1 to 10 C atoms and alkoxy groups having 1 to 10 C atoms, where one or more H atoms in the alkyl and alkoxy groups may be replaced by F, Cl or CN;
R³ is selected from H, CN, alkyl groups having 1 to 10 C atoms, where one or more C atoms in the alkyl groups may be replaced by F, Cl or CN, and -C≡C-R⁴;
R⁴ is selected from H, CN, and alkyl groups having 1 to 10 C atoms, where one or more C atoms in the alkyl groups may be replaced by F, Cl or CN;
i is on each occurrence, identically or differently, 0 or 1, where the sum of the indices i in a formula is at least equal to 1;
k is on each occurrence, identically or differently, 0 or 1, where the sum of the indices k in a formula is at least equal to 1;
p is equal to 0 or 1;
and one or more compounds of the formula (3) 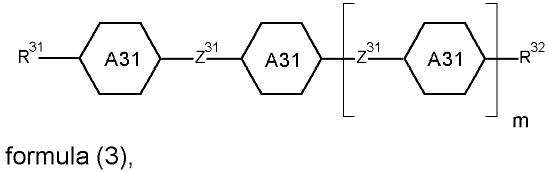
where the following applies to the variables occurring:
A31 is selected on each occurrence, identically or differently, from 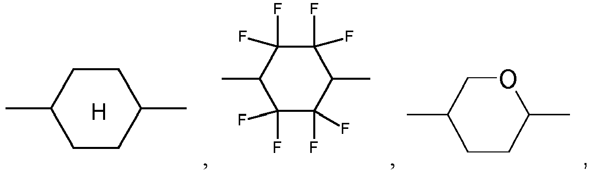 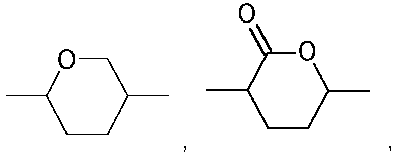 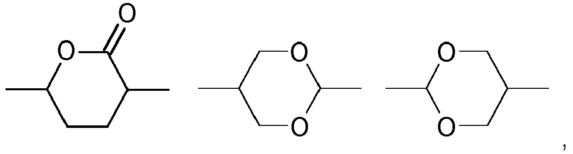 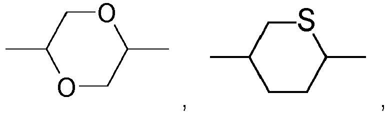 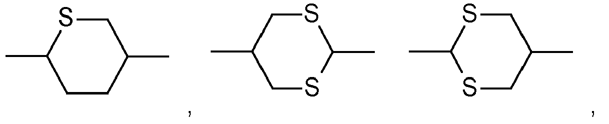 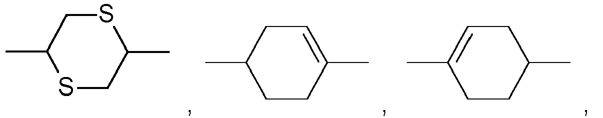 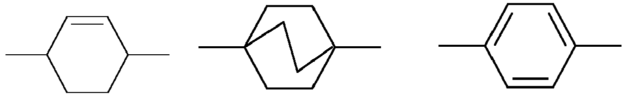 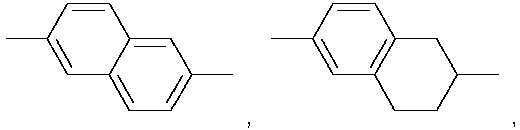 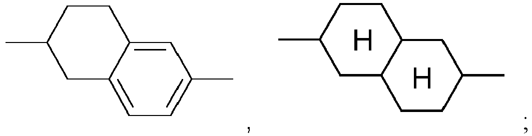
R³¹ and R³² are selected on each occurrence, identically or differently, from H, F, Cl, CN, NCS, alkyl groups having 1 to 10 C atoms, alkoxy groups having 1 to 10 C atoms, thioalkoxy groups having 1 to 10 C atoms, alkenyl groups having 2 to 10 C atoms and alkenyloxy groups having 2 to 10 C atoms, where one or more H atoms in the alkyl, alkoxy, thioalkoxy, alkenyl and alkenyloxy groups may be replaced by F, Cl or CN;
Z³¹ is selected on each occurrence, identically or differently, from a single bond, -(C=O)-O-, -O-(C=O)-, -CF₂-O-, -O-CF₂-, -O-CH₂-, -CH₂-O- and -CH₂-CH₂-;
m is equal to 0, 1, 2 or 3;
where the sum of the proportions of the compounds of the formula (1), the compounds of the formula (2) and the compounds of the formula (3) in the mixture is at least 58%,
where the value for the anisotropy of the refractive index Δn of the mixture is less than 0.065,
where the mixture has a clearing point of at least 105°C,
and where one or both of the following conditions a) and b) are satisfied:
a) the mixture comprises one or more compounds V which contain four or more rings,
b) the mixture comprises a proportion of at least 25% of compounds of the formula (2).

2. Mixture according to Claim 1, **characterised in that** the compound of the formula (1) conforms to the formula (1-1) 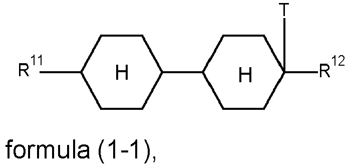 where T, R¹¹ and R¹² are defined as in Claim 1.

3. Mixture according to Claim 1 or 2, **characterised in that** the compound of the formula (2) conforms to the formula (2-1), (2-2), (2-3) or (2-4) 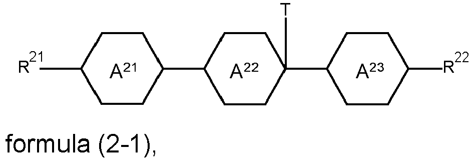 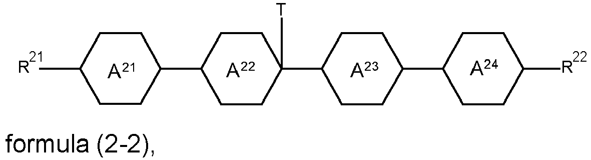 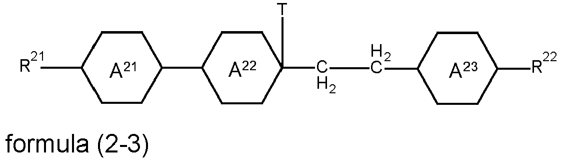 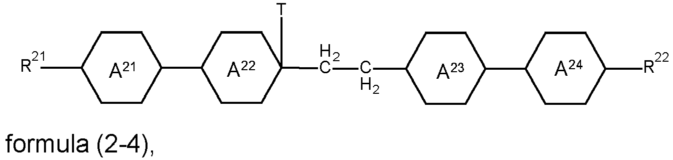 where R²¹ , R²², A²¹ , A²², A²³, A²⁴ and T are defined as in Claim 1.

4. Mixture according to one or more of Claims 1 to 3, **characterised in that** the compound of the formula (2) conforms to a formula (2-1-1) 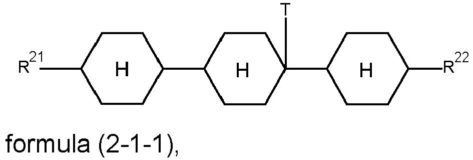 where R²¹, R²² and T are defined as in Claim 1.

5. Mixture according to Claim 4, **characterised in that** it has a proportion of at least 25% of compounds of the formula (2-1-1).

6. Mixture according to one or more of Claims 1 to 5, **characterised in that** the compound V conforms to a formula (V-1) 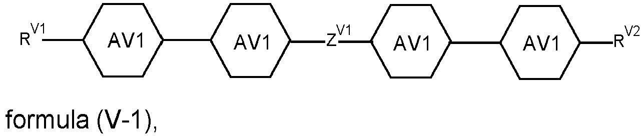 where
Z^{V1} is selected from -(C=O)-O- and -CH₂-O-, and where
AV1 is selected on each occurrence, identically or differently, from 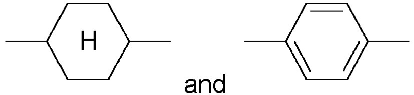 , and where
R^{V1} and R^{V2} are selected on each occurrence, identically or differently, from H, F, Cl, CN, NCS, alkyl groups having 1 to 10 C atoms, alkoxy groups having 1 to 10 C atoms, thioalkoxy groups having 1 to 10 C atoms, alkenyl groups having 2 to 10 C atoms and alkenyloxy groups having 2 to 10 C atoms, where one or more H atoms in the alkyl, alkoxy, thioalkoxy, alkenyl and alkenyloxy groups may be replaced by F, Cl or CN.

7. Mixture according to one or more of Claims 1 to 6, **characterised in that** the compound of the formula (3) conforms to one of the formulae (3-A), (3-B) and (3-C) 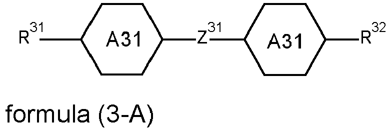 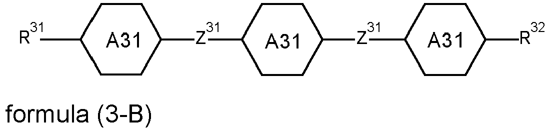 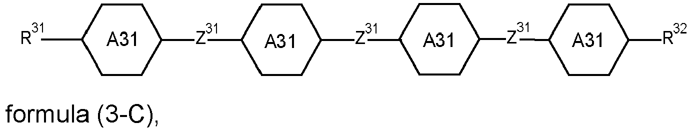 where R³¹, R³², Z³¹ and A31 are defined as in Claim 1.

8. Mixture according to one or more of Claims 1 to 7, **characterised in that** A31 in formulae (3) and (3-A), (3-B) and (3-C) is selected on each occurrence, identically or differently, from 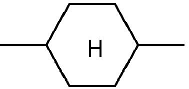 and

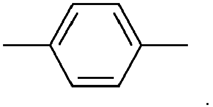

9. Mixture according to one or more of Claims 1 to 8, **characterised in that** it comprises one or more compounds of the formula (3-1) 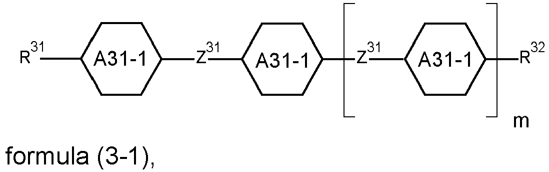 where R³¹, R³², Z³¹ and m are defined as in Claim 1, and where
A31-1 is selected on each occurrence, identically or differently, from

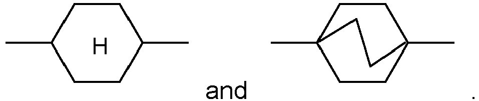

10. Mixture according to one or more of Claims 1 to 9, **characterised in that** it comprises both one or more compounds of the formula (1) and also one or more compounds of the formula (2).

11. Mixture according to one or more of Claims 1 to 10, **characterised in that** compounds of the formula (1) are present in the mixture in a proportion of at least 25%.

12. Mixture according to one or more of Claims 1 to 11, **characterised in that** compounds of the formula (2) are present in the mixture in a proportion of at least 25%.

13. Mixture according to one or more of Claims 1 to 12, **characterised in that** the sum formed from the proportions of the compounds of the formula (1), formula (2) and formula (3) is greater than 95%.

14. Mixture according to one or more of Claims 1 to 13, **characterised in that** it comprises a proportion of less than 60% of compounds which contain one or more benzene rings.

15. Mixture according to one or more of Claims 1 to 14, **characterised in that** it comprises one or more dyes.

16. Mixture according to one or more of Claims 1 to 15, **characterised in that** it comprises one or more dyes which are selected from azo compounds, anthraquinones, benzothiadiazoles, diketopyrrolopyrroles and rylenes.

17. Optical switching device comprising a layer which comprises a mixture according to one or more of Claims 1 to 16.

18. Switchable window comprising a layer which comprises a mixture according to one or more of Claims 1 to 16.

## Revendications

1. Mélange comprenant un ou plusieurs composé(s) qui est/sont conforme(s) à une formule (1) ou à une formule (2), 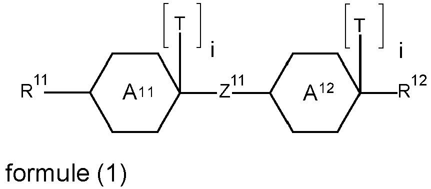 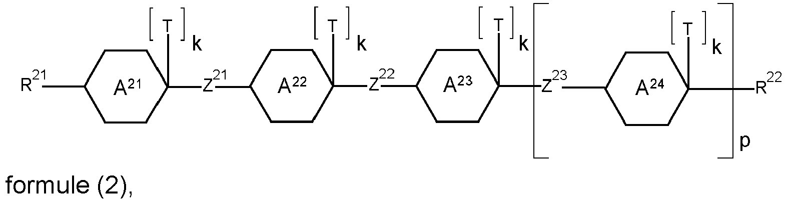 dans lesquelles ce qui suit s'applique aux variables rencontrées :
A¹¹, A¹², A²¹, A²², A²³, A²⁴ sont sélectionnés parmi 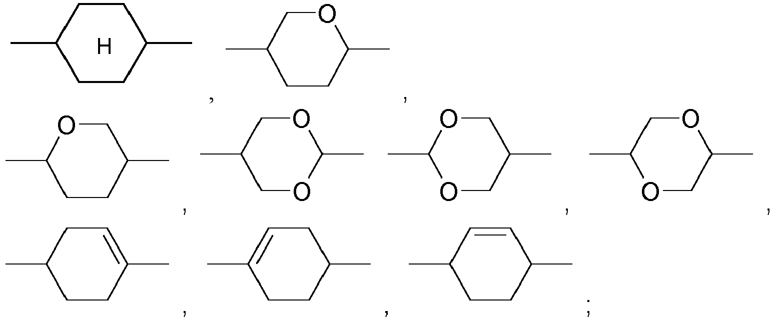
Z¹¹, Z²¹, Z²², Z²³ sont sélectionnés parmi une liaison simple, -(C=O)-O-, -O-(C=O)-, -CF₂-O-, -O-CF₂-, -O-CH₂-, -CH₂-O- et -CH₂-CH₂-;
R¹¹, R¹², R²¹, R²² sont sélectionnés pour chaque occurrence, de manière identique ou différente, parmi H, F, Cl, CN, NCS, les groupes alkyle qui comportent de 1 à 10 atome(s) de C, les groupes alcoxy qui comportent de 1 à 10 atome(s) de C, les groupes thioalcoxy qui comportent de 1 à 10 atome(s) de C, les groupes alkényle qui comportent de 2 à 10 atomes de C et les groupes alkényloxy qui comportent de 2 à 10 atomes de C, où les atomes de H dans les groupes alkyle, alcoxy, thioalcoxy, alkényle et alkényloxy peuvent être remplacés par F, Cl ou CN ;
T est sélectionné parmi -CN, F, -N₃, -NCS, NO₂, -C≡C-R³, les groupes alkyle qui comportent de 1 à 10 atome(s) de C et les groupes alcoxy qui comportent de 1 à 10 atome(s) de C, où un ou plusieurs atome(s) de H dans les groupes alkyle et alcoxy peut/peuvent être remplacé(s) par F, Cl ou CN ;
R³ est sélectionné parmi H, CN, les groupes alkyle qui comportent de 1 à 10 atome(s) de C, où un ou plusieurs atome(s) de C dans les groupes alkyle peut/peuvent être remplacé(s) par F, Cl ou CN, et -C≡C-R⁴;
R⁴ est sélectionné parmi H, CN, et les groupes alkyle qui comportent de 1 à 10 atome(s) de C, où un ou plusieurs atome(s) de C dans les groupes alkyle peut/peuvent être remplacé(s) par F, Cl ou CN ;
i est pour chaque occurrence, de manière identique ou différente, 0 ou 1, où la somme des indices i dans une formule est au moins égale à 1 ;
k est pour chaque occurrence, de manière identique ou différente, 0 ou 1, où la somme des indices k dans une formule est au moins égale à 1 ;
p est égal à 0 ou 1 ;
et un ou plusieurs composé(s) de la formule (3) 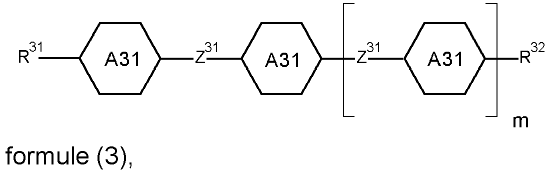
dans laquelle ce qui suit s'applique aux variables rencontrées :
A31 est sélectionné pour chaque occurrence, de manière identique ou différente, parmi 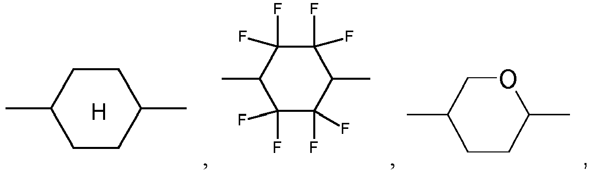 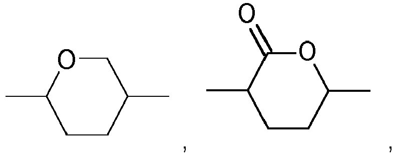 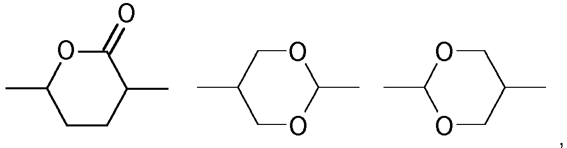 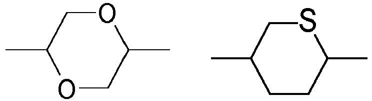 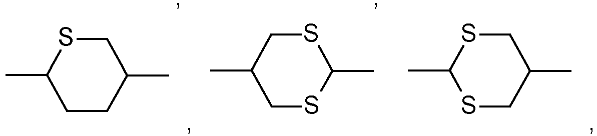 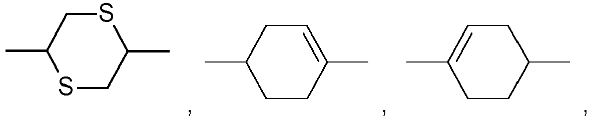 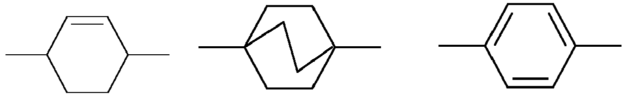 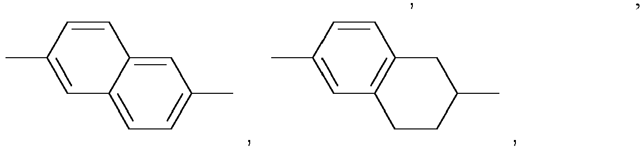 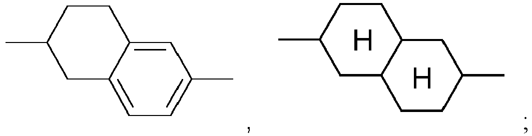
R³¹ et R³² sont sélectionnés pour chaque occurrence, de manière identique ou différente, parmi H, F, Cl, CN, NCS, les groupes alkyle qui comportent de 1 à 10 atome(s) de C, les groupes alcoxy qui comportent de 1 à 10 atome(s) de C, les groupes thioalcoxy qui comportent de 1 à 10 atome(s) de C, les groupes alkényle qui comportent de 2 à 10 atomes de C et les groupes alkényloxy qui comportent de 2 à 10 atomes de C, où un ou plusieurs atome(s) de H dans les groupes alkyle, alcoxy, thioalcoxy, alkényle et alkényloxy peut/peuvent être remplacé(s) par F, Cl ou CN ;
Z³¹ est sélectionné pour chaque occurrence, de manière identique ou différente, parmi une liaison simple, -(C=O)-O-, -O-(C=O)-, -CF₂-O-, -O-CF₂-, -O-CH₂-, -CH₂-O- et -CH₂-CH₂-;
m est égal à 0, 1, 2 ou 3 ;
où la somme des proportions des composés de la formule (1), des composés de la formule (2) et des composés de la formule (3) dans le mélange est d'au moins 58 %,
où la valeur pour l'anisotropie de l'indice de réfraction Δn du mélange est inférieure à 0,065,
où le mélange présente un point de clarification d'au moins 105°C,
et où l'une des conditions qui suivent a) et b) ou les deux est/sont satisfaite(s) :
a) le mélange comprend un ou plusieurs composé(s) V qui contient/ contiennent quatre cycles ou plus,
b) le mélange comprend une proportion d'au moins 25 % de composés de la formule (2).

2. Mélange selon la revendication 1, **caractérisé en ce que** le composé de la formule (1) est conforme à la formule (1-1) 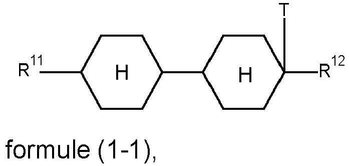 où T, R¹¹ et R¹² sont définis tel que selon la revendication 1.

3. Mélange selon la revendication 1 ou 2, **caractérisé en ce que** le composé de la formule (2) est conforme à la formule (2-1), (2-2), (2-3) ou (2-4) 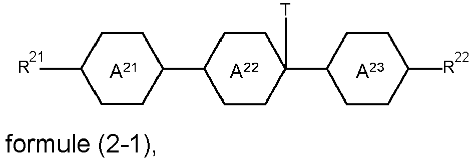 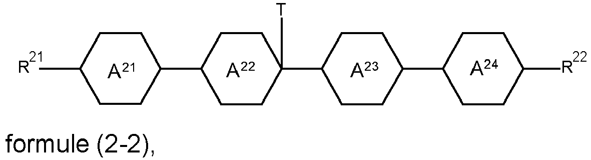 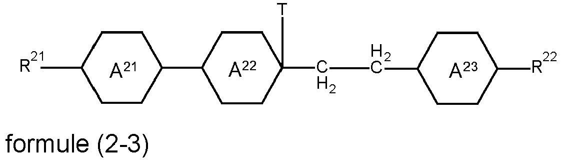 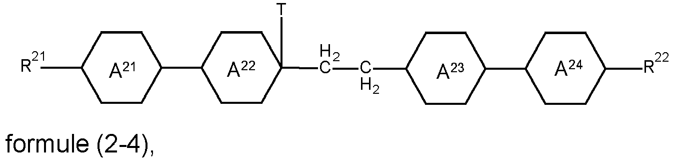 dans lesquelles R²¹, R²², A²¹, A²², A²³, A²⁴ et T sont définis tel que selon la revendication 1.

4. Mélange selon une ou plusieurs des revendications 1 à 3, **caractérisé en ce que** le composé de la formule (2) est conforme à une formule (2-1-1) 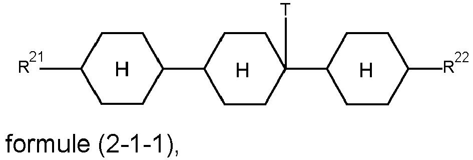 dans laquelle R²¹, R²² et T sont définis tel que selon la revendication 1.

5. Mélange selon la revendication 4, **caractérisé en ce qu'**il comporte une proportion d'au moins 25 % de composés de la formule (2-1-1).

6. Mélange selon une ou plusieurs des revendications 1 à 5, **caractérisé en ce que** le composé V est conforme à une formule (V-1) 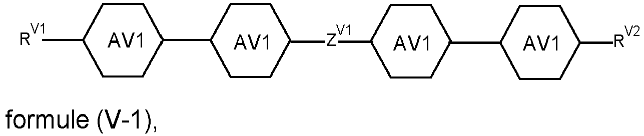 dans laquelle
Z^{V1} est sélectionné parmi -(C=O)-O- et -CH₂-O-, et où
AV1 est sélectionné pour chaque occurrence, de manière identique ou différente, parmi 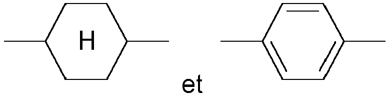 , et dans laquelle
R^{V1} et R^{V2} sont sélectionnés pour chaque occurrence, de manière identique ou différente, parmi H, F, Cl, CN, NCS, les groupes alkyle qui comportent de 1 à 10 atome(s) de C, les groupes alcoxy qui comportent de 1 à 10 atome(s) de C, les groupes thioalcoxy qui comportent de 1 à 10 atome(s) de C, les groupes alkényle qui comportent de 2 à 10 atomes de C et les groupes alkényloxy qui comportent de 2 à 10 atomes de C, où un ou plusieurs atome(s) de H dans les groupes alkyle, alcoxy, thioalcoxy, alkényle et alkényloxy peut/peuvent être remplacé(s) par F, Cl ou CN.

7. Mélange selon une ou plusieurs des revendications 1 à 6, **caractérisé en ce que** le composé de la formule (3) est conforme à l'une des formules (3-A), (3-B) et (3-C) 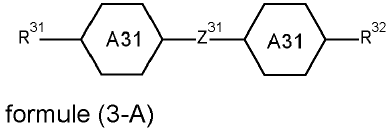 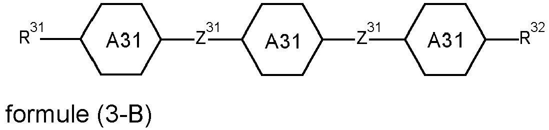 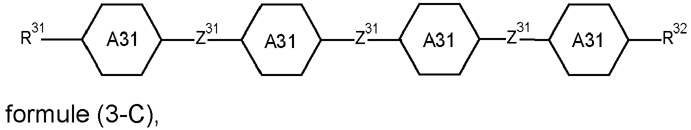 dans lesquelles R³¹, R³², Z³¹ et A31 sont définis tel que selon la revendication 1.

8. Mélange selon une ou plusieurs des revendications 1 à 7, **caractérisé en ce que** A31 dans les formules (3) et (3-A), (3-B) et (3-C) est sélectionné pour chaque occurrence, de manière identique ou différente, parmi

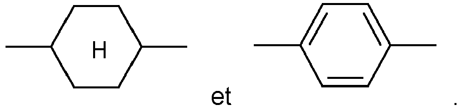

9. Mélange selon une ou plusieurs des revendications 1 à 8, **caractérisé en ce qu'**il comprend un ou plusieurs composé(s) de la formule (3-1) 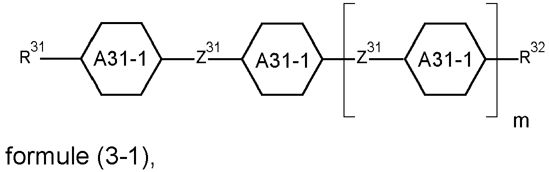 dans laquelle R³¹, R³², Z³¹ et m sont définis tel que selon la revendication 1, et dans laquelle
A31-1 est sélectionné pour chaque occurrence, de manière identique ou différente, parmi

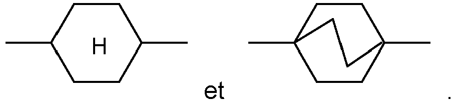

10. Mélange selon une ou plusieurs des revendications 1 à 9, **caractérisé en ce qu'**il comprend à la fois un ou plusieurs composé(s) de la formule (1) et également un ou plusieurs composé(s) de la formule (2).

11. Mélange selon une ou plusieurs des revendications 1 à 10, **caractérisé en ce que** les composés de la formule (1) sont présents dans le mélange selon une proportion d'au moins 25 %.

12. Mélange selon une ou plusieurs des revendications 1 à 11, **caractérisé en ce que** les composés de la formule (2) sont présents dans le mélange selon une proportion d'au moins 25 %.

13. Mélange selon une ou plusieurs des revendications 1 à 12, **caractérisé en ce que** la somme qui est formée à partir des proportions des composés de la formule (1), de la formule (2) et de la formule (3) est supérieure à 95 %.

14. Mélange selon une ou plusieurs des revendications 1 à 13, **caractérisé en ce qu'**il comprend une proportion inférieure à 60 % de composés qui contiennent un ou plusieurs cycle(s) benzène.

15. Mélange selon une ou plusieurs des revendications 1 à 14, **caractérisé en ce qu'**il comprend un ou plusieurs colorant(s).

16. Mélange selon une ou plusieurs des revendications 1 à 15, **caractérisé en ce qu'**il comprend un ou plusieurs colorant(s) qui est/sont sélectionné(s) parmi les composés azo, les anthraquinones, les benzothiadiazoles, les dicétopyrrolopyrroles et les rylènes.

17. Dispositif de commutation optique comprenant une couche qui comprend un mélange selon une ou plusieurs des revendications 1 à 16.

18. Vitre commutable qui comprend une couche qui comprend un mélange selon une ou plusieurs des revendications 1 à 16.
